(19) Europäisches Patentamt
European Patent Office
Office européen des brevets

(11) EP 4 083 077 A1

(12) **EUROPEAN PATENT APPLICATION**
published in accordance with Art. 153(4) EPC

(43) Date of publication:
**02.11.2022 Bulletin 2022/44**

(21) Application number: **21741165.1**

(22) Date of filing: **15.01.2021**

(51) International Patent Classification (IPC):
***C08F 8/50*** $^{(2006.01)}$ ***C08F 114/26*** $^{(2006.01)}$

(52) Cooperative Patent Classification (CPC):
**C08F 8/50; C08F 114/26**

(86) International application number:
**PCT/JP2021/001317**

(87) International publication number:
**WO 2021/145441 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2020 JP 2020004383**

(71) Applicants:
- **Daikin Industries, Ltd.**
**Osaka-shi, Osaka 530-8323 (JP)**
- **OSAKA UNIVERSITY**
**Suita-shi**
**Osaka 565-0871 (JP)**

(72) Inventors:
- **TANAKA, Takayuki**
**Osaka-Shi, Osaka 530-8323 (JP)**
- **SATOH, Kazuyuki**
**Osaka-Shi, Osaka 530-8323 (JP)**
- **OSHIMA, Akihiro**
**Suita-shi, Osaka 565-0871 (JP)**

(74) Representative: **Hoffmann Eitle**
**Patent- und Rechtsanwälte PartmbB**
**Arabellastraße 30**
**81925 München (DE)**

(54) **METHOD FOR PRODUCING LOW MOLECULAR WEIGHT POLYTETRAFLUOROETHYLENE, COMPOSITION, AND LOW MOLECULAR WEIGHT POLYTETRAFLUOROETHYLENE**

(57) Provided is a method for producing low molecular weight polytetrafluoroethylene that is less likely to generate perfluorooctanoic acid and salts thereof. The disclosure relates to a method for producing low molecular weight polytetrafluoroethylene having a melt viscosity at 380°C of $1.0 \times 10^2$ to $7.0 \times 10^5$ Pa.s. The method includes:
(1) irradiating high molecular weight polytetrafluoroethylene with radiation in the presence of a substance capable of generating a free hydrogen atom and decomposing the high molecular weight polytetrafluoroethylene into a low molecular weight component; and (2) deactivating at least part of main-chain radicals and end radicals generated by the irradiation and providing the low molecular weight polytetrafluoroethylene.

EP 4 083 077 A1

**Description**

TECHNICAL FIELD

The disclosure relates to methods for producing low molecular weight polytetrafluoroethylene, compositions, and low molecular weight polytetrafluoroethylene.

BACKGROUND ART

Low molecular weight polytetrafluoroethylene having a molecular weight of several thousands to several hundreds of thousands (also referred to as "polytetrafluoroethylene wax" or "polytetrafluoroethylene micropowder") has excellent chemical stability and a very low surface energy, as well as low fibrillatability. Thus, low molecular weight polytetrafluoroethylene is used as an additive for improving the lubricity and the texture of coating surfaces in production of plastics, inks, cosmetics, coating materials, greases, and other articles (for example, see Patent Literature 1).

Examples of known methods for producing low molecular weight polytetrafluoroethylene include polymerization, radiolysis, and pyrolysis. Conventional radiolysis is commonly such that radiation is applied to high molecular weight polytetrafluoroethylene in the air to provide low molecular weight polytetrafluoroethylene.

Also examined are methods of reducing perfluorocarboxylic acids and salts thereof that may be generated as by-products of radiolysis (for example, see Patent Literature documents 2 and 3).

CITATION LIST

- Patent Literature

Patent Literature 1: JP H10-147617 A
Patent Literature 2: WO 2018/026012
Patent Literature 3: WO 2018/026017

SUMMARY OF INVENTION

- Technical Problem

The disclosure aims to provide a method for producing low molecular weight polytetrafluoroethylene that is less likely to generate perfluorooctanoic acid and salts thereof.

The disclosure also aims to provide a novel low molecular weight PTFE composition and low molecular weight PTFE each containing a small amount of perfluorooctanoic acid and salts thereof.

- Solution to problem

The disclosure relates to a method for producing low molecular weight polytetrafluoroethylene having a melt viscosity at 380°C of $1.0 \times 10^2$ to $7.0 \times 10^5$ Pa·s, the method including: (1) irradiating high molecular weight polytetrafluoroethylene with radiation in the presence of a substance capable of generating a free hydrogen atom and decomposing the high molecular weight polytetrafluoroethylene into a low molecular weight component; and (2) deactivating at least part of main-chain radicals and end radicals generated by the irradiation and providing the low molecular weight polytetrafluoroethylene.

The disclosure relates to a method for producing low molecular weight polytetrafluoroethylene having a melt viscosity at 380°C of $1.0 \times 10^2$ to $7.0 \times 10^5$ Pa·s, the method including: (1) irradiating high molecular weight polytetrafluoroethylene with radiation in the presence of a substance capable of generating a free hydrogen atom and decomposing the high molecular weight polytetrafluoroethylene into a low molecular weight component; and (2a) warming or heating the low molecular weight component obtained in the step (1) at a temperature not lower than a room temperature transition temperature (19°C corresponding to a $\beta_1$ dispersion temperature) of polytetrafluoroethylene and providing the low molecular weight polytetrafluoroethylene.

The warming or heating in the step (2a) is preferably performed at a temperature of 70°C or higher.

The disclosure relates to a method for producing low molecular weight polytetrafluoroethylene having a melt viscosity at 380°C of $1.0 \times 10^2$ to $7.0 \times 10^5$ Pa·s, the method including: (1) irradiating high molecular weight polytetrafluoroethylene with radiation in the presence of a substance capable of generating a free hydrogen atom and

decomposing the high molecular weight polytetrafluoroethylene into a low molecular weight component; and (2b) maintaining the low molecular weight component obtained in the step (1) for five minutes or longer and providing the low molecular weight polytetrafluoroethylene.

The maintaining in the step (2b) is preferably performed for 10 hours or longer.

The disclosure also relates to a method for producing low molecular weight polytetrafluoroethylene having a melt viscosity at 380°C of $1.0 \times 10^2$ to $7.0 \times 10^5$ Pa·s, the method including: (1) irradiating high molecular weight polytetrafluoroethylene with radiation in the presence of a substance capable of generating a free hydrogen atom and decomposing the high molecular weight polytetrafluoroethylene into a low molecular weight component; and (2) deactivating at least part of main-chain radicals and end radicals generated by the irradiation and providing the low molecular weight polytetrafluoroethylene, the steps (1) and (2) being performed simultaneously.

The substance capable of generating a free hydrogen atom preferably includes at least one selected from the group consisting of a hydrocarbon organic compound, an amine, a silane organic compound, water, and hydrogen.

The substance capable of generating a free hydrogen atom also preferably includes at least one selected from the group consisting of an acyclic hydrocarbon compound, a cyclic hydrocarbon compound, a synthetic polymer, a biodegradable polymer, a carbohydrate, ammonia, and water.

The substance capable of generating a free hydrogen atom is preferably present in an amount of 0.0001 to 1000% by mass relative to the high molecular weight polytetrafluoroethylene.

The radiation in the step (1) preferably has a dose of 10 to 1000 kGy.

The radiation in the step (1) also preferably has a dose of 100 to 750 kGy.

The step (1) is preferably performed in a substantially oxygen-free state.

The step (2) is preferably performed in a substantially oxygen-free state.

The substantially oxygen-free state is preferably maintained during a period from start of the step (1) to completion of the step (2).

The high molecular weight polytetrafluoroethylene preferably has a standard specific gravity of 2.130 to 2.230.

The high molecular weight polytetrafluoroethylene and the low molecular weight polytetrafluoroethylene are preferably each in the form of powder.

The production method preferably further includes, before the step (1), (3) heating the high molecular weight polytetrafluoroethylene up to a temperature that is not lower than a primary melting point thereof and providing a molded article, the molded article having a specific gravity of 1.0 g/cm$^3$ or higher.

The disclosure also relates to a method for producing low molecular weight polytetrafluoroethylene having a melt viscosity at 380°C of $1.0 \times 10^2$ to $7.0 \times 10^5$ Pa·s, the method including: (X) irradiating high molecular weight polytetrafluoroethylene with radiation in the presence of a substance capable of generating a free hydrogen atom under conditions including a sample temperature during the irradiation of not lower than a room temperature transition temperature (19°C corresponding to a $\beta_1$ dispersion temperature) of polytetrafluoroethylene and not higher than 320°C and a dose rate of 0.1 kGy/s or higher and providing the low molecular weight polytetrafluoroethylene.

The disclosure also relates to a method for producing low molecular weight polytetrafluoroethylene having a melt viscosity at 380°C of $1.0 \times 10^2$ to $7.0 \times 10^5$ Pa·s, the method including (Y1) irradiating polytetrafluoroethylene having a melt viscosity at 380°C of $1.0 \times 10^2$ to $7.0 \times 10^5$ Pa·s with radiation in the presence of a substance capable of generating a free hydrogen atom and decomposing the polytetrafluoroethylene into a low molecular weight component; and (Y2) deactivating at least part of main-chain radicals and end radicals generated by the irradiation and providing the low molecular weight polytetrafluoroethylene.

The disclosure also relates to a composition containing: low molecular weight polytetrafluoroethylene having a melt viscosity at 380°C of $1.0 \times 10^2$ to $7.0 \times 10^5$ Pa·s; and a substance capable of generating a free hydrogen atom, wherein an amount of perfluorooctanoic acid and salts thereof is less than 25 ppb by mass.

In the composition, preferably, an amount of the perfluorooctanoic acid and salts thereof is less than 100 ppb by mass, the amount being determined in accordance with the heating and determining conditions A to be described later.

In the composition, also preferably, the amount of the perfluorooctanoic acid and salts thereof is less than 50 ppb by mass, the amount being determined in accordance with the heating and determining conditions A.

In the composition, also preferably, the amount of the perfluorooctanoic acid and salts thereof is less than 25 ppb by mass, the amount being determined in accordance with the heating and determining conditions A.

In the composition, preferably, a total amount of C9-C14 perfluorocarboxylic acids and salts thereof is less than 25 ppb by mass.

In the composition, also preferably, a total amount of C4-C14 perfluorocarboxylic acids and salts thereof is less than 25 ppb by mass.

The disclosure also relates to a low molecular weight polytetrafluoroethylene having a melt viscosity at 380°C of $1.0 \times 10^2$ to $7.0 \times 10^5$ Pa·s, exhibiting peaks that are obtainable by electron spin resonance measurement in a vacuum and that satisfy the following relational expression (I), and having an amount of perfluorooctanoic acid and salts thereof of less than 25 ppb by mass and an amount of the perfluorooctanoic acid and salts thereof determined in

accordance with the heating and determining conditions A to be described later of less than 100 ppb by mass,

the relational expression (I) being:3.0 > Peak M/Peak A > 0.3,
wherein Peak M represents a peak height of a center of triplet that corresponds to end radicals in the low molecular weight polytetrafluoroethylene; and Peak A represents a peak height of double quintet that corresponds to main-chain radicals in the low molecular weight polytetrafluoroethylene.

The disclosure also relates to a low molecular weight polytetrafluoroethylene having a melt viscosity at 380°C of $1.0 \times 10^2$ to $7.0 \times 10^5$ Pa·s, exhibiting peaks that are obtainable by electron spin resonance measurement in an air and that satisfy the following relational expressions (1) and (2), and

having an amount of perfluorooctanoic acid and salts thereof of less than 25 ppb by mass and an amount of the perfluorooctanoic acid and salts thereof determined in accordance with the heating and determining conditions A to be described later of less than 100 ppb by mass,
the relational expression (1) being: Peak M2/Peak A1 $\geq$ 1.0,
wherein Peak M2 represents an absolute value of a negative peak intensity that corresponds to a peroxy radical scavenged on a molecular-chain end of the low molecular weight polytetrafluoroethylene; and Peak A1 represents an absolute value of a negative peak intensity that corresponds to an alkyl peroxy radical scavenged on a main chain of the low molecular weight polytetrafluoroethylene,
the relational expression (2) being: Peak M2/Peak M3 < 1.0,
wherein Peak M2 represents the absolute value of the negative peak intensity that corresponds to a peroxy radical scavenged on a molecular-chain end of the low molecular weight polytetrafluoroethylene; and Peak M3 represents an absolute value of a positive peak intensity that corresponds to a peroxy radical scavenged on a molecular-chain end of the low molecular weight polytetrafluoroethylene.

(Heating and determining conditions A)

A 50-cc stainless steel cylindrical airtight container is charged with 2 to 20 g of a sample in an air, and then capped and heated at 150°C for 18 hours;
the amount of the perfluorooctanoic acid and salts thereof is determined using a liquid chromatography-mass spectrometer (LC-MS ACQUITY UPLC/TQD, available from Waters) as follows:

1 g of the sample heated is mixed with 5 mL of acetonitrile and this mixture is sonicated for 60 minutes, so that perfluorooctanoic acid is extracted;
a liquid phase obtained is analyzed by multiple reaction monitoring (MRM);
acetonitrile (A) and an aqueous ammonium acetate solution (20 mmol/L) (B) are delivered as mobile phases at a concentration gradient (A/B = 40/60 for 2 min and 80/20 for 1 min);
a separation column (ACQUITY UPLC BEH C18 1.7 $\mu$m) is used at a column temperature of 40°C and an injection volume of 5 $\mu$L;
electrospray ionization (ESI) in a negative mode is used for ionization;
a cone voltage is set to 25 V;
a ratio of a molecular weight of precursor ions to a molecular weight of product ions is measured to be 413/369; and the amount of the perfluorooctanoic acid and salts thereof is calculated by an external standard method.

The disclosure also relates to a low molecular weight polytetrafluoroethylene having a melt viscosity at 380°C of $1.0 \times 10^2$ to $7.0 \times 10^5$ Pa·s, having a standard value determined by the following formula (3) of 1.1 to 10.0, and having an amount of perfluorooctanoic acid and salts thereof of less than 25 ppb by mass,
the formula (3) being:
Standard value = (absorbance of functional group derived from hydrogen-attached form of the low molecular weight PTFE)/(absorbance of functional group derived from hydrogen-attached form of low molecular weight PTFE obtained by irradiation in the absence of substance capable of generating free hydrogen atom).
In the low molecular weight polytetrafluoroethylene, preferably, a total amount of C9-C14 perfluorocarboxylic acids and salts thereof is less than 25 ppb by mass.
In the low molecular weight polytetrafluoroethylene, preferably, a total amount of C4-C14 perfluorocarboxylic acids and salts thereof is less than 25 ppb by mass.

- Advantageous Effects of Invention

The disclosure can provide a method for producing low molecular weight polytetrafluoroethylene that is less likely to generate perfluorooctanoic acid and salts thereof.
The disclosure can also provide a novel low molecular weight PTFE composition and low molecular weight PTFE each containing a small amount of perfluorooctanoic acid and salts thereof.

BRIEF DESCRIPTION OF THE DRAWINGS

FIG. 1 is a diagram of exemplary peaks obtained by electron spin resonance (ESR) measurement in a vacuum.
FIG. 2 is a diagram of exemplary peaks obtained by electron spin resonance (ESR) measurement in the air.

DESCRIPTION OF EMBODIMENTS

Irradiation of high molecular weight PTFE under conventional conditions may possibly generate low molecular weight PTFE as well as C4-C14 perfluorocarboxylic acids or salts thereof as by-products. These compounds as by-products include not only C8 perfluorooctanoic acid or salts thereof, but also C4, C5, C6, C7, C9, C10, C11, C12, C13, and C14 perfluorocarboxylic acids or salts thereof.
Also, C4-C14 perfluorocarboxylic acids or salts thereof, particularly perfluorooctanoic acid or salts thereof, may possibly be generated as a result of reactions of main-chain radicals and end radicals generated by irradiation in a substantially oxygen-free state at room temperature with oxygen in the air by heating after the irradiation.
The inventors found that irradiating high molecular weight PTFE with radiation in the presence of a substance capable of generating a free hydrogen atom and deactivating radicals generated by the irradiation can reduce generation of perfluorooctanoic acid and salts thereof, as well as C4-C14 perfluorocarboxylic acids and salts thereof, thereby completing the production methods of the disclosure.
The disclosure will be specifically described hereinbelow.
The disclosure relates to a method for producing low molecular weight polytetrafluoroethylene having a melt viscosity at 380°C of $1.0 \times 10^2$ to $7.0 \times 10^5$ Pa·s, the method including: (1) irradiating high molecular weight polytetrafluoroethylene with radiation in the presence of a substance capable of generating a free hydrogen atom and decomposing the high molecular weight polytetrafluoroethylene into a low molecular weight component; and (2) deactivating at least part of main-chain radicals and end radicals generated by the irradiation and providing the low molecular weight polytetrafluoroethylene.
In the step (1), high molecular weight PTFE is irradiated with radiation in the presence of a substance capable of generating a free hydrogen atom, so that the high molecular weight PTFE is decomposed into a low molecular weight component.
The decomposition into a low molecular weight component is presumably achieved by scission of the main chain of the high molecular weight PTFE by the irradiation.
Examples of the radiation include any ionizing radiation, such as electron beams, gamma rays, X-rays, neutron beams, and high energy ions. Electron beams, gamma rays, or X-rays are preferred for industrial use, with electron beams or gamma rays being more preferred.
The electron beams may be generated from an electron accelerator, for example.
Gamma rays may be generated from a radioisotope, for example.
X-rays may be generated by applying particle beams from a particle accelerator to a target such as metal, for example. Alternatively, quasi-monochromatic X-rays may be generated by inverse compton scattering (laser compton scattering) resulting from collision of laser beams with high energy electron beams. Alternatively, X-rays may be generated by synchrotron radiation or may be generated from an undulator or wiggler provided on the lower stage of a particle accelerator.
The radiation preferably has an absorbed dose of 10 kGy or higher, more preferably 100 kGy or higher, still more preferably 150 kGy or higher, further preferably 200 kGy or higher, particularly preferably 250 kGy or higher, most preferably 300 kGy or higher, for example. The absorbed dose is preferably 1000 kGy or lower, more preferably 750 kGy or lower, still more preferably 500 kGy or lower.
The numerical range may be suitably applied to irradiation at room temperature (25°C), for example.
The irradiation may be performed continually until the absorbed dose reaches a desired value, or may be performed intermittently and repeatedly until the absorbed doses add up to a desired value.
An absorbed dose within the above range enables decomposition of the high molecular weight PTFE into a low molecular weight component even in a substantially oxygen-free state. The absorbed dose is preferably optimized

in accordance with the target molecular weight.

The irradiation may be performed with any absorbed dose rate. For γ-rays emitted from cobalt 60, for example, the absorbed dose rate is preferably 0.1 kGy/h or higher, more preferably 1 kGy/h or higher, still more preferably 2 kGy/h or higher.

For electron beams from an electron accelerator, the absorbed dose rate is preferably 0.1 kGy/s or higher, more preferably 1 kGy/s or higher, still more preferably 10 kGy/s or higher, or alternatively preferably 0.1 kGy/pass or higher, more preferably 1 kGy/pass or higher, still more preferably 10 kGy/pass or higher.

For particle beams from a particle accelerator, particularly for X-rays generated by applying electron beams from an electron accelerator to a target for X-ray generation, the absorbed dose rate is preferably 0.1 kGy/s or higher, more preferably 1 kGy/s or higher, still more preferably 10 kGy/s or higher, or alternatively preferably 0.1 kGy/pass or higher, more preferably 1 kGy/pass or higher, still more preferably 10 kGy/pass or higher.

The irradiation is preferably performed such that the whole PTFE sample uniformly undergoes the reaction and that uniform absorbed dose distribution is obtained. For γ-rays from cobalt 60, for example, the penetrability of γ-rays is attenuated by the distance squared. Thus, irradiating a thick sample with γ-rays forms a distribution between the front surface irradiated with γ-rays and the back surface. For this reason, the PTFE sample is preferably reversed periodically or rotated, for example. It should be noted that particularly a thick sample may have a dose distribution of about 20% to 30% between a peripheral portion and a central portion even when reversed. Thus, in order to form a uniform dose distribution, a sample to be irradiated preferably has an elaborated density distribution or irradiation pattern.

For electron beams from an electron accelerator, the penetration depth thereof changes in accordance with the ratio (accelerating voltage of electrons)/(accelerating energy of electrons on sample surface). Thus, in order to form a uniform absorbed dose distribution, preferably, a sample is made to have a thickness that is not greater than the penetration depth of electrons or a sample is reversed periodically.

For X-rays generated by applying electron beams from an electron accelerator to a target for X-ray generation, the penetrability of X-rays is attenuated by the distance squared. Thus, irradiating a thick sample with X-rays forms a distribution between the front surface irradiated with X-rays and the back surface. For this reason, the PTFE sample is preferably reversed periodically or rotated, for example. It should be noted that particularly a thick sample may have a dose distribution of about 20% to 30% between a peripheral portion and a central portion even when reversed. Thus, in order to form a uniform dose distribution, a sample to be irradiated preferably has an elaborated density distribution or irradiation pattern.

The temperature of a sample during the irradiation may be any temperature that is not lower than the γ dispersion temperature around -80°C and not higher than the melting point of high molecular weight PTFE. The molecular chain of high molecular weight PTFE is known to crosslink around the melting point thereof. Thus, in order to provide low molecular weight PTFE, the temperature is preferably 320°C or lower, more preferably 310°C or lower, still more preferably 300°C or lower. From the economic viewpoint, the irradiation is preferably performed at a temperature within a range from room temperature to about 50°C. In order to improve the decomposition efficiency by radiation, the temperature may be increased before irradiation.

The sample temperature may vary within a range from - 80°C to 320°C during the irradiation.

Examples of combination of the sample temperature and the absorbed dose during the irradiation are shown below, but the combination is not limited thereto.

For irradiation at -80°C, the absorbed dose of the radiation is preferably 100 kGy or higher, more preferably 200 kGy or higher, still more preferably 250 kGy or higher, most preferably 300 kGy or higher, while preferably 1200 kGy or lower, more preferably 1000 kGy or lower, still more preferably 800 kGy or lower.

For irradiation at 50°C, the absorbed dose of the radiation is preferably 60 kGy or higher, more preferably 120 kGy or higher, still more preferably 140 kGy or higher, most preferably 160 kGy or higher, while preferably 700 kGy or lower, more preferably 600 kGy or lower, still more preferably 500 kGy or lower.

For irradiation at 100°C, the absorbed dose of the radiation is preferably 50 kGy or higher, more preferably 100 kGy or higher, still more preferably 120 kGy or higher, most preferably 150 kGy or higher, while preferably 600 kGy or lower, more preferably 500 kGy or lower, still more preferably 400 kGy or lower.

For irradiation at 150°C, the absorbed dose of the radiation is preferably 40 kGy or higher, more preferably 80 kGy or higher, still more preferably 100 kGy or higher, most preferably 120 kGy or higher, while preferably 550 kGy or lower, more preferably 450 kGy or lower, still more preferably 350 kGy or lower.

For irradiation at 200°C, the absorbed dose of the radiation is preferably 30 kGy or higher, more preferably 60 kGy or higher, still more preferably 80 kGy or higher, most preferably 100 kGy or higher, while preferably 500 kGy or lower, more preferably 400 kGy or lower, still more preferably 300 kGy or lower.

The temperature during the irradiation can be easily measured by, for example, a method of measuring the temperature of the atmosphere where the step is performed using a thermocouple or a platinum resistor, a method of measuring the temperature of the surface or inside of a sample using a thermocouple or a platinum resistor in a contact manner, or a method of measuring the infrared radiation from the surface of a sample using an infrared thermometer.

Irradiation in the step (1) is performed in the presence of a substance capable of generating a free hydrogen atom. Free hydrogen atoms generated from the substance during the irradiation react with main chain radicals and end radicals generated by irradiation of high molecular weight PTFE and scavenge these radicals. This can presumably reduce reactions of the main chain radicals and end radicals with oxygen and reduce generation of C4-C14 perfluorocarboxylic acids and salts thereof, particularly of perfluorooctanoic acid and salts thereof.

The substance capable of generating a free hydrogen atom may be any substance capable of generating a free hydrogen atom by irradiation. The substance is preferably a compound capable of generating a free hydrogen atom. The substance may be any of solid, liquid, and gas, and is preferably solid for easy handling and easy vacuum evacuation in a container. This state of the substance is the state at 25°C and 1 atm.

Free hydrogen generated by irradiation can be analyzed by gas chromatography, such as the method disclosed in K. Takashika, et al., Radiat. Phys. Chem. 55, p. 399-408 (1999) or the method disclosed in T. Seguchi, et al., Radiat. Phys. Chem. 85, p. 124-129 (2013).

Examples of the substance capable of generating a free hydrogen atom include a hydrocarbon organic compound, an amine, a silane organic compound, water, and hydrogen.

The hydrocarbon organic compound may include at least one atom selected from the group consisting of an oxygen atom, a nitrogen atom, a sulfur atom, a phosphorus atom, a silicon atom, and halogen atoms such as a chlorine atom and a bromine atom.

Examples of the hydrocarbon organic compound include an acyclic hydrocarbon compound, a cyclic hydrocarbon compound, a synthetic polymer, a biodegradable polymer, and a carbohydrate.

Examples of the acyclic hydrocarbon compound include acetylene and paraffin. The paraffin may have a carbon number of greater than 20.

Examples of the cyclic hydrocarbon compound include aromatic compounds such as benzene, cumene, toluene, xylene, aniline, and naphthalene; and alicyclic hydrocarbon compounds such as cyclopropane and cyclohexane.

Examples of the synthetic polymer include polyolefins such as polyethylene and polypropylene; aromatic hydrocarbon polymers such as polystyrene, polyhydroxystyrene, and polyaniline; and alicyclic hydrocarbon polymers such as a cycloolefin polymer.

Examples of the biodegradable polymer include polylactic acid; polycaprolactone; polyglutamic acid; and proteins such as polypeptide, collagen, and keratin.

Examples of the carbohydrate include monosaccharides such as glucose; and polysaccharides such as cellulose and starch.

These acyclic hydrocarbon compounds, cyclic hydrocarbon compounds, and monosaccharides may have a molecular weight of lower than 2000 or of lower than 1000.

These synthetic polymers, biodegradable polymers, and polysaccharides may have a molecular weight of 2000 or higher.

Herein, the molecular weight of the substance capable of generating a free hydrogen atom can be determined by calculation based on the chemical formula or by gel permeation chromatography (GPC). Alternatively, the molecular weight and the width of molecular weight distribution can be directly determined by MALDI ToF-MS, which is the combination of matrix assisted laser desorption ionization and time of flight mass spectrometry.

In particular, the hydrocarbon organic compound is preferably paraffin, a synthetic polymer, a biodegradable polymer, or a carbohydrate, more preferably paraffin, a polyolefin, an aromatic hydrocarbon polymer, a biodegradable polymer, or a carbohydrate, still more preferably a polyolefin, an aromatic hydrocarbon polymer, a biodegradable polymer, or a polysaccharide, further preferably polyethylene, polylactic acid, or cellulose, and particularly preferably polyethylene.

Examples of the amine include ammonia, a primary amine, a secondary amine, and a tertiary amine, with ammonia being preferred among these.

The amine may have a molecular weight of lower than 1000.

Examples of the silane organic compound include silane, alkoxysilane, tetraethyl orthosilicate, and polysiloxane, as well as derivatives thereof, with polysiloxane being preferred among these.

The polysiloxane and derivatives thereof may have a molecular weight of 1000 or higher, while the silane organic compounds other than the polysiloxane and derivatives thereof may have a molecular weight of lower than 1000.

One or two or more of the substances capable of generating a free hydrogen atom may be used.

In order to more efficiently reduce C4-C14 perfluorocarboxylic acids and salts thereof, the substance capable of generating a free hydrogen atom preferably includes at least one selected from the group consisting of a hydrocarbon organic compound, an amine, a silane organic compound, water, and hydrogen, more preferably at least one selected from the group consisting of a hydrocarbon organic compound, an amine, and water, still more preferably at least one selected from the group consisting of an acyclic hydrocarbon compound, a cyclic hydrocarbon compound, a synthetic polymer, a biodegradable polymer, a carbohydrate, ammonia, and water, further preferably at least one selected from the group consisting of a polyolefin, an aromatic hydrocarbon polymer, a biodegradable polymer, a polysaccharide, ammonia, and water, further more preferably at least one selected from the group consisting of polyethylene, polylactic

acid, and cellulose, and is particularly preferably polyethylene.

The substance capable of generating a free hydrogen atom also preferably includes at least one selected from the group consisting of a polyolefin, an aromatic hydrocarbon polymer, a biodegradable polymer, a polysaccharide, ammonia, water, and hydrogen.

The substance capable of generating a free hydrogen atom is also preferably a hydrocarbon organic compound. Particularly preferred among these are polyolefins such as polyethylene because they can be used in the form of polymer pellets and contain many hydrogen atoms in the main chain so that they have better handleability than other substances in practical use.

The substance capable of generating a free hydrogen atom may be in any form such as a block, pellets, powder, a sheet, or a strand.

The substance capable of generating a free hydrogen atom is preferably present in an amount of 0.0001 to 1000% by mass relative to the high molecular weight PTFE. The amount of the substance relative to the high molecular weight PTFE is more preferably 1% by mass or more, still more preferably 2% by mass or more, particularly preferably 10% by mass or more, while more preferably 150% by mass or less, still more preferably 100% by mass or less, further preferably 50% by mass or less, particularly preferably 25% by mass or less.

The substance in an amount within the above range can more efficiently reduce C4-C14 perfluorocarboxylic acids and salts thereof.

In the case where the substance capable of generating a free hydrogen atom is a high molecular weight compound (molecular weight: 1000 or higher), the amount thereof relative to the high molecular weight PTFE is preferably 0.1 to 1000% by mass, more preferably 1% by mass or more, still more preferably 5% by mass or more, particularly preferably 10% by mass or more, while more preferably 100% by mass or less, still more preferably 50% by mass or less, particularly preferably 25% by mass or less.

In the case where the substance capable of generating a free hydrogen atom is a low molecular weight compound (molecular weight: lower than 1000), the amount thereof relative to the high molecular weight PTFE is preferably 0.0001 to 100% by mass, more preferably 0.001% by mass or more, still more preferably 0.01% by mass or more, particularly preferably 0.1% by mass or more, while more preferably 100% by mass or less, still more preferably 50% by mass or less, particularly preferably 10% by mass or less.

The aforementioned amount of the substance capable of generating a free hydrogen atom refers to the amount thereof present in the space (container) where the step (1) is to be performed.

In the step (1), the high molecular weight PTFE and the substance capable of generating a free hydrogen atom may be in direct contact with each other or may not be in direct contact with each other.

The step (1) may be performed in a substantially oxygen-free state or may be performed in the presence of oxygen as will be described later, and is preferably performed in a substantially oxygen-free state.

The phrase "substantially oxygen-free state" herein means that the oxygen concentration in the atmosphere where the step is to be performed is less than 2.0 vol%. In order to further reduce generation of C4-C14 perfluorocarboxylic acids and salts thereof, the oxygen concentration is preferably 1.0 vol% or less, more preferably less than 1.0 vol%, still more preferably 0.5 vol% or less, further preferably 0.1 vol% or less, particularly preferably 0.01 vol% or less. The lower limit of the oxygen concentration may be lower than the detection limit. The principal gas at this time may be inert gas. Examples of the inert gas include nitrogen gas, argon gas, helium gas, and a gas mixture of any of these. Nitrogen gas is preferred for industrial use.

The oxygen concentration can be easily determined by a method of analyzing the atmosphere where the step is to be performed, such as a gaseous phase inside a container where the high molecular weight PTFE is to be placed by gas chromatography, a method using an oxygen concentration meter, or a method of observing the color tone of an oxygen detection agent placed in the container.

The environment where the step (1) is to be performed may be any of a pressurized environment, an atmospheric environment, and a decompressed environment. From the viewpoint of safety measures for the working environment against generation of decomposed gas in the step (1), a decompressed environment is preferred. The decompressed environment herein means an environment evacuated to have a degree of vacuum of 100 Pa or lower using a vacuum pump such as a diaphragm pump, an oil rotary pump, or a scroll pump. In order to further reduce generation of C4-C14 perfluorocarboxylic acids and salts thereof, the degree of vacuum is preferably 10 Pa or lower, more preferably 1 Pa or lower.

The decompressed environment in the step (1) may be maintained by the use of an airtight container for decompression, may be maintained by continual evacuation of the container using a vacuum pump, or may be maintained by repeated turning on and off of a vacuum pump in an intermittent manner.

An oxygen adsorbent may be used to remove oxygen in the environment and achieve a substantially oxygen-free environment. An oxygen absorbent is also referred to as deoxidant and they are synonymous. Of course an oxygen adsorbent may be used in combination with any of the above methods. Such combination use may be performed by placing an oxygen adsorbent in the airtight container together with the high molecular weight PTFE or by uniformly or

non-uniformly coating the inside of the airtight container with an oxygen adsorbent.

An example of a method of performing the step (1) in a substantially oxygen-free state may be a method of performing the step (1) in a substantially oxygen-free space.

The substantially oxygen-free space as used herein means a space where the oxygen concentration in the space can be locally controlled during the step (1) and the step (2) .

An example thereof is a container that is to be sealed (hereinafter, referred to as an airtight container) so as to control the oxygen concentration of the internal space.

Alternatively, the space where the step (1) and the step (2) are to be performed may be locally converted to a substantially oxygen-free space by differential pumping using inert gas shower or a vacuum pump system.

In the case of using inert gas, the substantially oxygen-free state during the step (1) may be maintained by the use of an airtight container, may be maintained by introduction of inert gas, or may be maintained by intermittent turning on and off of the introduction of inert gas.

The airtight container may be coupled with pipes for intake and exhaust of substances such as inert gas to be described later and for exhausting the gas inside the airtight container, and may be coupled with components such as other pipes, caps, valves, and flanges. The airtight container may have any shape, such as a cylindrical shape, a prismatic shape, or a spherical shape, or may be a capacity-variable bag. The container may be formed from any material, such as metal, glass, a polymer, or a combined material prepared by stacking any of these materials. The material and structure of the airtight container are preferably, but not limited to, radiolucent and non-radiolytic ones. The airtight container is not limited to a pressure-resistant container.

The airtight container, particularly a capacity-variable bag is preferably formed from a material such as a rubbery material that is sealable by a physical stress, including ethylene-propylene rubber, tetrafluoroethylene-propylene rubber, chloroprene rubber, and polyester elastomer, as well as a material that is sealable by thermal adhesion or with adhesive such as epoxy adhesive. Particularly preferred among these are thermoplastic organic materials that are sealable by thermal adhesion. In terms of resistance to the irradiation in the step (1), preferred among the thermoplastic organic materials are polyesters such as polyethylene terephthalate (PET), polyamide (PA), polyethylene (PE), polyamide-imide (PAI), thermoplastic polyimide (TPI), polyphenylene sulfide (PPS), polyetherimide (PEI), cyclic polyolefins (COP), polyvinylidene fluoride, ethylene-tetrafluoroethylene copolymers (ETFE), polychlorotrifluoroethylene (PCTFE), hexafluoropropylene-tetrafluoroethylene copolymers (FEP), and perfluoroalkoxyalkanes (PFA). These materials each may be in the form of a multilayer material including two, three, or more layers, or may be in the form of an organic-inorganic combined multilayer material combined with aluminum foil, for example.

The substantially oxygen-free state in the airtight container may be achieved by making the inside of the airtight container substantially in a vacuum state or by filling the airtight container with inert gas. The phrase substantially in a vacuum state herein means that the pressure inside the container is 100 Pa or lower, preferably 50 Pa or lower, more preferably 10 Pa or lower.

The inert gas is a gas inert to a reaction of decomposing the high molecular weight PTFE into a low molecular weight component by irradiation and to main-chain radicals and end radicals generated by the irradiation. Examples of the inert gas include gases such as nitrogen, helium, and argon. Preferred is nitrogen.

The inert gas preferably has an oxygen content of less than 2.0 vol%, more preferably 1.0 vol% or less, still more preferably lower than 1.0 vol%, further preferably 0.5 vol% or less, further more preferably 0.1 vol% or less, particularly preferably 0.01 vol% or less. The lower limit thereof may be, but is not limited to, a value lower than the detection limit. An inert gas having an oxygen content within the above range can more reduce generation of C4-C14 perfluorocarboxylic acids and salts thereof.

The oxygen content can be checked by gas chromatography analysis, as well as by the use of a galvanic cell oxygen concentration meter, a zirconia oxygen concentration meter, or oxygen detection paper, for example.

The oxygen adsorbent may be any adsorbent having a function of adsorbing oxygen. Examples of usable ones include known oxygen adsorbents having an oxygen-adsorbing effect, including inorganic oxygen adsorbents such as iron-based, zinc-based, or hydrosulfite-based adsorbents, and organic oxygen adsorbents such as ascorbic acid-based, polyhydric alcohol-based, or activated carbon-based adsorbents. The oxygen adsorbent may be of either a water-dependent type that uses water for a reaction with oxygen or self-reactive type that does not use water. Preferred is a self-reactive type. The oxygen adsorbent is preferably an iron-based self-reactive oxygen adsorbent, quicklime, or the like, and is more preferably an iron-based self-reactive oxygen adsorbent.

In the case of performing the step (1) in a substantially oxygen-free state, the production method of the disclosure preferably includes, before the step (1), feeding the high molecular weight PTFE and the substance capable of generating a free hydrogen atom into an airtight container in a substantially oxygen-free state.

Examples of methods of feeding the high molecular weight PTFE into an airtight container in a substantially oxygen-free state include a method in which the high molecular weight PTFE and the substance capable of generating a free hydrogen atom are placed in the airtight container, optionally followed by feeding of an oxygen adsorbent into the airtight container, and the airtight container is then vacuum-evacuated; a method in which the high molecular weight

PTFE, the substance capable of generating a free hydrogen atom, and at least one selected from the group consisting of inert gas and an oxygen adsorbent are fed into the airtight container; and combination of these methods.

Specific examples thereof include a vacuum evacuation method in which the high molecular weight PTFE and the substance capable of generating a free hydrogen atom are placed in the airtight container and the airtight container is then evacuated into a decompressed environment using a vacuum pump, whereby the airtight container is sealed; a gas replacement method in which the high molecular weight PTFE and the substance capable of generating a free hydrogen atom are placed in the airtight container, the airtight container is optionally evacuated, and the airtight container is filled with the inert gas; a method in which the methods such as the vacuum evacuation method and the gas replacement method are repeated to provide a substantially oxygen-free state; and a gas flow replacement method in which the high molecular weight PTFE and the substance capable of generating a free hydrogen atom are placed in the airtight container and the inert gas is continually introduced into the airtight container to gradually reduce the oxygen concentration, thereby achieving a desired substantially oxygen-free environment.

In the case of using an oxygen adsorbent, examples of feeding methods include a method in which the high molecular weight PTFE, the substance capable of generating a free hydrogen atom, and the oxygen adsorbent are placed in the airtight container in the air and the airtight container is then sealed; a method in which the high molecular weight PTFE, the substance capable of generating a free hydrogen atom, and the oxygen adsorbent are placed in the airtight container and the airtight container is then vacuum-evacuated, whereby the airtight container is sealed; and a method in which the high molecular weight PTFE, the substance capable of generating a free hydrogen atom, and the oxygen adsorbent are placed in the airtight container, the airtight container is optionally vacuum-evacuated, and the airtight container is filled with the inert gas.

The step (1) may be performed in the presence of oxygen, for example in the air, as long as it is performed in a closed airtight container. In this case, the oxygen concentration in the airtight container may be 2.0 vol% or higher. It is unclear why generation of C4-C14 perfluorocarboxylic acids and salts thereof can be reduced even in the presence of oxygen. Still, the reason seems to be that part of the substance capable of generating a free hydrogen atom reacts with oxygen and the oxygen is consumed during the irradiation in a closed airtight container, and thereby the main chain radicals or end radicals have less chance to react with oxygen.

In this embodiment, the airtight container used may be the same as the airtight container that can be used in the case of performing the step (1) in a substantially oxygen-free state. The size and capacity of the airtight container are preferably set in consideration of the amount of oxygen consumed by the substance capable of generating a free hydrogen atom.

A halogen-containing material may be added before the step (1). The halogen-containing material in this case may be any of solid, liquid, and gas. The halogen-containing material is preferably a fluorine-based oil.

The step (1) is preferably performed substantially in the absence of C1-C20 saturated hydrocarbons, chlorinated products of C1-C18 saturated hydrocarbons, C1-C12 monohydric saturated alcohols, and C1-C13 saturated monocarboxylic acids.

The step (1) is also preferably performed substantially in the absence of n-hexane, 3-methylpentane, and ethanol.

The phrase "substantially in the absence of" substances means that the amount of the substances (total amount of the substances) is less than 0.1% by mass relative to the high molecular weight PTFE. The amount is preferably less than 0.001% by mass, preferably 0.0005% by mass or less, more preferably 0.0001% by mass or less. The lower limit thereof may be, but is not limited to, a value lower than the detection limit.

In the step (2), at least part of main-chain radicals and end radicals generated by the irradiation is deactivated, whereby the low molecular weight PTFE is provided.

Irradiating the high molecular weight PTFE generates main-chain radicals (alkyl radicals) and end radicals of PTFE. The main-chain radicals herein mean radicals generated at portions other than the ends of the PTFE main chain. The end radicals herein mean radicals generated at ends of the PTFE main chain. The main-chain radicals and end radicals are radicals generated immediately after irradiation in the presence of the substance capable of generating a free hydrogen atom, and are different from peroxy radicals generated by reactions of these radicals with oxygen.

The inventors found that reactions of these radicals, particularly radicals generated at ends of the main chain (end radicals), with oxygen generate C4-C14 perfluorocarboxylic acids or salts thereof.

In the step (2), at least part of the radicals generated and scavenged, particularly end radicals involved in generation of C4-C14 perfluorocarboxylic acids or salts thereof, is deactivated. This can provide the low molecular weight PTFE while hardly generating perfluorocarboxylic acids or salts thereof.

In the step (1), irradiating the high molecular weight PTFE in the presence of the substance capable of generating a free hydrogen atom decomposes the high molecular weight PTFE into a low molecular weight component, whereby the main chain radicals and end radicals are generated and free hydrogen atoms are generated from the substance. The main chain radicals and the end radicals then react with the free hydrogen atoms and are scavenged by the free hydrogen atoms, whereby the main chain radicals and the end radicals are deactivated. Accordingly, in the production

method of the disclosure, performing the step (1) includes performing the step (2). This can eliminate the need for equipment for deactivating the main chain radicals and the end radicals in addition to that for the irradiation and can reduce the production cost related to such equipment.

Still, in order to more promote deactivation of the main chain radicals and end radicals, the step (2) may include at least one of the steps (2a) to (2c), or may include at least one of the steps (2a) and (2b), or may include the step (2a). In the case of performing any of these steps, they may be performed under relatively mild conditions, which can reduce the production cost.

The step (1) and the step (2) may be performed repeatedly multiple times. Still, in the case of performing these steps multiple times, the step (2), which is a step of deactivating particularly end radicals, is necessarily the last step.

The step (2) is preferably performed in a substantially oxygen-free state. The substantially oxygen-free state is preferably maintained during a period from start of the step (1) to completion of the step (2).

The substantially oxygen-free state is as described above. The oxygen concentration in the atmosphere for the step is less than 2.0 vol%, preferably 1.0 vol% or less, more preferably less than 1.0 vol%, still more preferably 0.5 vol% or less, further preferably 0.1 vol% or less, particularly preferably 0.01 vol% or less. The lower limit of the oxygen concentration may be a value lower than the detection limit.

The step (2) is preferably performed with the environment in the step (1) being maintained in terms of industrial process.

The step (2) is preferably performed in a substantially oxygen-free space.

The step (2) may be performed in the same space as for the step (1) or may be performed in a different space.

In order to surely prevent a contact between the low molecular weight component and oxygen and to ensure easiness of the steps, the low molecular weight component is more preferably fed to the step (2) while maintained in the space where the step (1) is performed.

The step (2) may be performed continually after the step (1) as a series of steps.

In the case of performing the step (2) in a space different from that for the step (1), the low molecular weight component obtained in the step (1) may be transferred to a space where the step (2) is to be performed in a substantially oxygen-free state or, as will be described later, may be transferred thereto in the air under predetermined conditions.

In the case of performing the step (1) in the presence of oxygen in an airtight container, the resulting low molecular weight component is preferably fed to the step (2) while maintained in the airtight container for the step (1).

The step (2) preferably includes a step (2a) of warming or heating the low molecular weight component obtained in the step (1) at a temperature not lower than the room temperature transition temperature (19°C corresponding to the $\beta_1$ dispersion temperature) of PTFE and providing the low molecular weight PTFE (hereinafter, also referred to as an accelerated deactivating process). In this embodiment, the radicals can be deactivated in a relatively short time.

The low molecular weight component is a substance generated by scission of the main chain of the high molecular weight PTFE in response to the irradiation in the step (1) and contains main-chain radicals and end radicals generated by the irradiation.

The half time of radical deactivation at room temperature of alkyl radicals and end radicals on the main chain generated and scavenged by PTFE is 1000 hours (Radiat. Phys. Chem., Vol. 50 (1997) pp. 601-606). Heating can accelerate the radical deactivation.

The step (2a) is preferably performed in a substantially oxygen-free state. The substantially oxygen-free state is as described above.

The warming or heating in the step (2a) is performed at a temperature not lower than the room temperature transition temperature ($\beta_1$ dispersion temperature) of PTFE. The room temperature transition temperature ($\beta_1$ dispersion temperature) of PTFE is 19°C.

The warming or heating temperature is preferably not lower than the room temperature transition temperature ($\beta_2$ dispersion temperature) (30°C) of PTFE, more preferably 70°C or higher, still more preferably 100°C or higher, particularly preferably 140°C or higher, while preferably 310°C or lower, more preferably 300°C or lower, still more preferably 260°C or lower.

Alternatively, as described above, relatively mild conditions may also be used. Thus, the warming or heating temperature may be lower than 150°C or may be 100°C or lower.

The temperature during the warming or heating can be easily measured by, for example, a method of measuring the temperature of the atmosphere where the step is performed using a thermocouple or a platinum resistor, a method of measuring the temperature of the surface or inside of a sample using a thermocouple or a platinum resistor in a contact manner, or a method of measuring the infrared radiation from the surface of a sample using an infrared thermometer.

The sample temperature may vary within the range from -80°C to 340°C during the step (2a).

Although it is in accordance with the warming or heating temperature, the warming or heating duration is preferably 1 minute or longer, more preferably 10 minutes or longer, still more preferably 1 hour or longer, particularly preferably 4 hours or longer, while preferably shorter than 100 hours, more preferably 50 hours or shorter, still more

preferably 30 hours or shorter, for example.

The warming or heating duration is a duration from when the whole sample reaches a thermal equilibrium state.

The above range of the duration can particularly suitably be applied to heating at 150°C, for example.

Although not limited thereto, the warming or heating is preferably performed using equipment that is able to apply heat artificially, and may be performed by a method using any of the following heating devices. Examples thereof include a box dryer, a band dryer, a tunnel dryer, a jet flow dryer, a mobile layer dryer, a rotary dryer, a fluidized bed dryer, a jet dryer, a box dryer, a disc dryer, a cylindrical agitation dryer, an inverted conical agitation dryer, a microwave device, a vacuum heating dryer, a box electric furnace, a hot-air circulating device, a flash dryer, a vibration dryer, a belt dryer, an extrusion dryer, a spray dryer, and an infrared heater.

The warming or heating may be performed such that the low molecular weight component maintained in a predetermined space (e.g., the airtight container used in the step (1) or an airtight container to which the low molecular weight component is transferred) is placed in a heating furnace, the temperature inside the heating furnace is increased up to a desired temperature, and the low molecular weight component is left for a desired period of time.

In the case of performing the step (2a), the airtight container used is preferably a container that enables inward/outward heat transfer. The airtight container is preferably a container having heat resistance that allows the container to endure the warming or heating. Still, as described above, the step (2a) may be performed under relatively mild conditions and does not essentially require high-level heat resistance.

The airtight container is preferably formed from a material such as a rubbery material that is sealable by a physical stress, including ethylene-propylene rubber, tetrafluoroethylene-propylene rubber, chloroprene rubber, and polyester elastomer, as well as a material that is sealable by thermal adhesion or with adhesive such as epoxy adhesive. Particularly preferred among these are thermoplastic organic materials that are sealable by thermal adhesion. In terms of resistance to the warming or heating, preferred among these are polyesters such as polyethylene terephthalate (PET), polyamide (PA), polyamide-imide (PAI), thermoplastic polyimide (TPI), polyphenylene sulfide (PPS), polyether imide (PEI), polypropylene (PP), cyclic polyolefins (COP), polyvinylidene fluoride, ethylene-tetrafluoroethylene copolymers (ETFE), polychlorotrifluoroethylene (PCTFE), hexafluoropropylene-tetrafluoroethylene copolymers (FEP), and perfluoroalkoxyalkanes (PFA). These materials each may be in the form of a multilayer material including two, three, or more layers, or may be in the form of an organic-inorganic combined multilayer material combined with aluminum foil, for example.

The step (2a) may be performed in the presence of water. Water is preferably water vapor. Water is preferably in an amount of less than 20% by mass, more preferably less than 15% by mass, still more preferably less than 10% by mass, while preferably 0.00001% by mass or more, more preferably 0.0001% by mass or more, relative to the high molecular weight PTFE.

The step (2) may also include a step (2b) of maintaining the low molecular weight component obtained in the step (1) for five minutes or longer and providing the low molecular weight PTFE (hereinafter, also referred to as a naturally deactivating process). In this embodiment, the radicals (particularly end radicals) are deactivated in response to maintaining the low molecular weight component for a specific period of time. Thus, the radicals can be deactivated without using equipment that is able to apply heat artificially, such as a heating device.

The low molecular weight component is as described above.

The step (2b) may be such that the low molecular weight component is maintained while the temperature is controlled artificially, but is preferably performed without using equipment that is able to apply heat artificially.

The step (2a) may be performed after the step (2b).

The step (2) is preferably performed in a substantially oxygen-free state (by maintaining the low molecular weight component in a substantially oxygen-free environment for a predetermined period of time). The substantially oxygen-free state is as described above.

In the step (2b), the temperature of the environment for maintaining the low molecular weight component is preferably a temperature that can be achieved without using equipment that is able to apply heat artificially. In order to shorten the duration for deactivating radicals, the temperature is preferably not lower than the room temperature transition temperature ($\beta_1$ dispersion temperature) (19°C) of PTFE, preferably not lower than the room temperature transition temperature ($\beta_2$ dispersion temperature) (30°C) of PTFE, more preferably 40°C or higher.

The temperature may be lower than 100°C, or may be lower than 70°C.

The sample temperature may vary within the range from -20°C to 100°C during the step (2b).

In the step (2b), the duration of maintaining the low molecular weight component is five minutes or longer. In the case of performing the step (1) and the step (2b) successively, the duration means the period of time from the timing of completion of the irradiation.

The duration in the step (2b) is preferably 10 minutes or longer, more preferably 1 hour or longer, still more preferably 10 hours or longer, further preferably 1 day or longer, further preferably 50 hours or longer, further preferably 100 hours or longer, particularly preferably 200 hours or longer.

The step (2b) may be performed by a method in which the low molecular weight component obtained in the

step (1) is left to stand for the above duration while it is maintained in the space used in the step (1).

The leaving may be performed in a warehouse or a greenhouse, for example.

The greenhouse herein may be a building such as a sunroom constructed of lighting glass or agricultural greenhouse, including buildings not provided with equipment for active warming or temperature control.

The step (2) may also include a step (2c) of reacting the low molecular weight component obtained in the step (1) with a radical-scavenging substance. In this embodiment, the radicals can be deactivated in a relatively short time even without warming or heating. Warming or heating may be performed in combination.

Still, the free hydrogen atoms generated from the substance capable of generating a free hydrogen atom used in the step (1) have a radical-scavenging ability, and thus the production method of the disclosure also preferably includes no step (2c).

The step (2c) may be followed by the step (2a) or the step (2c) and the step (2a) may be performed simultaneously.

The low molecular weight component is as described above.

The step (2c) is preferably performed in a substantially oxygen-free state. The substantially oxygen-free state is as described above.

The radical-scavenging substance is a substance that may deactivate main-chain radicals and end radicals generated in the step (1). The radical-scavenging substance may be a radical-scavenging gas. The gas is in the form of gas at 25°C and 1 atm.

The radical-scavenging gas preferably includes hydrogen gas and halogen gas.

Examples of the halogen gas include fluorine gas, chlorine gas, bromine gas, and iodine gas.

Examples of the radical-scavenging substance also include alkane gases, alkene gases, alkyne gases, fluoroalkanes, tetrafluoroethylene, carbon monooxide, nitrogen monooxide, nitrogen dioxide, water, amines, alcohols, and ketones.

The radical-scavenging substance may be a substance capable of generating a free hydrogen atom. Specific examples of the substance capable of generating a free hydrogen atom are as described above.

The radical-scavenging substance may be a substance different from the substance capable of generating a free hydrogen atom used in the step (1).

Examples of the alkane gases include methane, ethane, propane, and butane.

Examples of the alkene gases include ethylene, propylene, and butene.

Examples of the alkyne gases include acetylene, monovinylacetylene, and divinylacetylene.

Examples of the fluoroalkanes include difluoromethane, trifluoromethane, 1,1,1-trifluoroethane, and 1,1,1,2-tetrafluoroethane.

Water used as a radical-scavenging gas may be water vapor. The water vapor may be, but is not limited to, water vapor generated by heating or sonicating liquid water.

Examples of the water include deionized water, distilled water, hard water, soft water, and tap water. In order to reduce contamination of low molecular weight polytetrafluoroethylene by impurities, preferred are deionized water and distilled water.

The water may be water generated from an oxygen adsorbent or may be water generated when the moisture adsorbed on silica gel is evaporated by heat.

An example of the amines is ammonia.

Examples of the alcohols include methanol, ethanol, isopropanol, and alcohol derivatives.

Examples of the ketones include acetone and benzophenone. One or two or more of the above radical-scavenging gases may be used.

Any of the above gases may be used in admixture with inert gas such as nitrogen or carbon dioxide.

The radical-scavenging gas also preferably includes at least one selected from the group consisting of hydrogen gas, halogen gas, alkane gases, alkene gases, alkyne gases, fluoroalkanes, tetrafluoroethylene, carbon monooxide, nitrogen monooxide, nitrogen dioxide, water, amines, alcohols, and ketones, also preferably includes at least one selected from the group consisting of hydrogen gas, fluorine gas, chlorine gas, bromine gas, iodine gas, alkane gases, alkene gases, alkyne gases, fluoroalkanes, tetrafluoroethylene, carbon monooxide, nitrogen monooxide, nitrogen dioxide, water, amines, alcohols, and ketones, also preferably includes at least one selected from the group consisting of hydrogen gas and water, is also preferably hydrogen gas, or is also preferably water.

The reaction in the step (2c) may be performed by introducing the radical-scavenging substance into the space where the low molecular weight component is maintained (e.g., the airtight container used in the step (1)) or evacuating this space using a vacuum pump before introducing the radical-scavenging substance thereinto, and then bringing the low molecular weight component and the radical-scavenging substance into contact with each other.

Introduction of the radical-scavenging substance may be stopped by closing a valve, for example, after the concentration reaches equilibrium in the space, or may be continued.

In the case of using an airtight container formed from a hydrogen-atom-containing material as the airtight

container for the step (1), the irradiation causes the airtight container to generate radiolytically decomposed gas that contains hydrogen gas as a principal component. The decomposed gas may be used as a radical-scavenging substance in the step (2c). In the case of using an airtight container formed from a halogen-atom-containing material, halogen gas is also generated as radiolytically decomposed gas in addition to hydrogen gas. The decomposed gas may be used as a radical-scavenging substance in the step (2c).

The hydrogen-atom-containing material is preferably a hydrogen-atom-containing organic material, and examples thereof include hydrogen-atom-containing rubbery materials such as ethylene-propylene rubber and polyester elastomer, and hydrogen-atom-containing thermoplastic organic materials such as polyesters, e.g., polyethylene terephthalate (PET), polyamide (PA), polyethylene (PE), polyamide-imide (PAI), thermoplastic polyimide (TPI), polyphenylene sulfide (PPS), polyether imide (PEI), and cyclic polyolefins (COP).

The halogen-atom-containing material is preferably a halogen-atom-containing organic material, and examples thereof include halogen-atom-containing rubbery materials such as tetrafluoroethylene-propylene rubber and chloroprene rubber, and halogen-atom-containing thermoplastic organic materials such as polyvinylidene fluoride, ethylene-tetrafluoroethylene copolymers (ETFE), polychlorotrifluoroethylene (PCTFE), hexafluoropropylene-tetrafluoroethylene copolymers (FEP), and perfluoroalkoxyalkanes (PFA).

In the case of using hydrogen gas as a radical-scavenging substance, the resulting low molecular weight PTFE contains a hydrogen-atom-containing molecular structure or a double-bond-containing molecular chain, which improves the miscibility of the low molecular weight PTFE and a different type of an organic substance containing a hydrogen atom.

The radical-scavenging substance to be introduced has a concentration of 0.1 vol% or higher, preferably 3 vol% or higher, more preferably 10 vol% or higher. The higher the concentration of the radical-scavenging substance is, the shorter the radical deactivating time.

In the step (1), substantially, the number of radical-scavenging atoms or molecules is 1% or more, preferably 5% or more, more preferably 10% or more, of the total number per gram of main-chain radicals (alkyl radicals) and end radicals generated and scavenged immediately after the irradiation or the total number per gram of peroxy radicals generated after these radicals are exposed to the air and reacted with oxygen.

The reaction temperature is preferably the $\gamma$-dispersion temperature (around -80°C) of PTFE or higher, more preferably the $\beta_1$ dispersion temperature (19°C) or higher, still more preferably 25°C or higher, particularly preferably the $\beta_2$ dispersion temperature (30°C) or higher.

The sample temperature may vary within the range from -80°C to 380°C during the step (2c).

The reaction duration is preferably 30 minutes or longer, more preferably 1 hour or longer, from the timing when the radical-scavenging substance reaches the concentration equilibrium in the reaction space.

The steps (2a), (2b), and (2c) each may be performed alone or may be performed in any combination.

Each of the steps (2a), (2b), and (2c) are preferably performed after the step (1), and preferably performed successively after the step (1).

Deactivation of the end radicals in the step (2) can be checked by observing the presence or absence of a triplet signal in measurement at room temperature using an electron spin resonance (ESR) spectrometer. A failure in clear detection of the triplet signal in the room temperature (25°C) measurement is taken as deactivation of the end radicals. Deactivation of the end radicals in the step (2) is preferably performed to a degree such that a triplet signal cannot be clearly detected in measurement at room temperature (25°C) using ESR.

Similarly, deactivation of the main-chain radicals can be checked by observing a decrease in the intensity of a double quintet signal or the presence or absence of the signal in measurement at room temperature using an electron spin resonance (ESR) spectrometer. A failure in clear detection of the double quintet signal is taken as deactivation of the main-chain radicals. Deactivation of the main chain radicals in the step (2) is preferably performed to a degree such that a double quintet signal cannot be clearly detected in measurement at room temperature (25°C) using ESR.

In the case where residual radicals react with oxygen in the air to form peroxy radicals on the main chain (alkyl peroxy radicals) and peroxy radicals at ends (end peroxy radicals), deactivation can be checked by observing a decrease in the intensity of signals corresponding to these peroxy radicals or the presence or absence of the signals. The symmetricity or asymmetricity of the spectrum determined using the ESR spectrometer enables determination of whether the peroxy radicals are of main chain type (asymmetric) or of end type (symmetric). If they are difficult to distinct in room temperature measurement, the temperature may be decreased and the measurement may be performed at the liquid nitrogen temperature of 77 K. This enables clear distinction.

The alkyl peroxy radicals and the end peroxy radicals seem to be generated as follows. Specifically, after deactivation of the main-chain radicals and end radicals are confirmed based on the triplet and double quintet signals in the aforementioned ESR measurement and the low molecular weight PTFE sample is exposed to the air, the main-chain radicals and end radicals slightly remaining in the sample in amounts below the detection sensitivity of the ESR spectrometer seem to react with oxygen in the air and be converted into the peroxy radicals. As in conventional cases, irradiation in the presence of oxygen also generates the alkyl peroxy radicals and the end peroxy radicals, but most of the radicals observed are end peroxy radicals.

The double quintet or triplet ESR signals have a relatively wider sweep width than peroxy radicals and have a poorer S/N ratio to the base line than peroxy radicals. Thus, even when the double quintet or triplet ESR signals are not clearly observed, such ESR signals may be detected in some cases where the radicals are converted into peroxy radicals by exposure to the air.

In the case where the step (2) includes at least one of the steps (2a) to (2c) (hereinafter, also referred to as the step (2')), the low molecular weight component obtained in the step (1) is preferably substantially free from a reaction with oxygen during the period from completion of the step (1) to start of the step (2'). This can further reduce the amount of C4-C14 perfluorocarboxylic acids or salts thereof generated. The reaction of the low molecular weight component with oxygen as used herein means a reaction of the main-chain radicals and/or end radicals in the low molecular weight component with oxygen, particularly a reaction of the end radicals with oxygen.

The phrase "the low molecular weight component is substantially free from a reaction with oxygen" means, as will be described later, that the amount of oxygen to be in contact with the low molecular weight component is controlled to a very small amount or that the low molecular weight component is brought into contact with oxygen under very limited conditions.

In the production method of the disclosure, the substantially oxygen-free state is preferably maintained during the period from start of the step (1) to completion of the step (2'). In other words, during the period from start of the step (1) to completion of the step (2'), the oxygen concentration in the atmosphere is preferably maintained at less than 2.0 vol%, more preferably 1.0 vol% or less, still more preferably less than 1.0 vol%, further preferably 0.5 vol% or less, further more preferably 0.1 vol% or less, particularly preferably 0.01 vol% or less. The lower limit of the oxygen concentration may be a value lower than the detection limit. This can further reduce reactions of the main-chain radicals and end radicals generated by the irradiation with oxygen and can further reduce the amount of C4-C14 perfluorocarboxylic acids or salts thereof generated.

Examples of methods of maintaining the substantially oxygen-free state during the period from start of the step (1) to completion of the step (2') include a method in which the step (1) and the step (2) are performed in the same airtight container and the airtight container is not opened during the period from start of the step (1) to completion of the step (2'); a method in which the space is evacuated using a vacuum pump at regular intervals; a method in which inert gas is introduced into the space at regular intervals, and a method in which evacuation of the airtight container using a vacuum pump at regular intervals and introduction of inert gas are repeated.

Another example thereof is a method in which the airtight container for the step (1) is opened in a substantially oxygen-free space and, in the same space, the low molecular weight component is transferred to another airtight container to be used in the step (2'). An example of this method is a method in which the airtight container for the step (1) is opened in a container such as a glovebox filled with inert gas and, in the same space, the low molecular weight component is transferred to another airtight container to be used in the step (2'), so that the oxygen-free state is maintained.

In the production method of the disclosure, the step (1) and the step (2') may be performed in different spaces (preferably, in different airtight containers).

In this embodiment, an optimum space (airtight container) can be selected for each of the step (1) and the step (2'). In particular, for the step (2'), a heat-resistant airtight container or a pressure-resistant airtight container can be selected that enables effective performance of processes such as warming, heating, and decompression. This results in more easy reduction in the amount of C4-C14 perfluorocarboxylic acids or salts thereof generated. This embodiment is particularly useful when the step (2') is the step (2a).

The production method of the disclosure may include transferring the low molecular weight component obtained in the step (1) from the space for the step (1) to a space for the step (2') under conditions where the low molecular weight component is substantially free from a reaction with oxygen.

The transferring the low molecular weight component is preferably performed in a substantially oxygen-free state. Still, the transferring may also be performed in the air under conditions where end radicals of the low molecular weight component that are likely to induce C4-C14 perfluorocarboxylic acids and salts thereof are substantially free from reactions with oxygen. In terms of industrial processes, the transferring is advantageously performed in the air.

Examples of the conditions where end radicals in the low molecular weight component are substantially free from reactions with oxygen include conditions where the contact time between the low molecular weight component and the air is 180 minutes of shorter, preferably 60 minutes or shorter. The lower limit of the contact time may be 1 second.

The temperature of the air to be in contact with the low molecular weight component may be 30°C or lower, preferably 19°C or lower. The lower limit of the temperature may be -196°C.

In the case of repeating the step (2') multiple times or performing multiple steps each as the step (2') (e.g., performing the steps (2a) and (2b)) in the production method of the disclosure, the low molecular weight component may be exposed to the air (e.g., transferred to another container in the air) between one step and a next step. Such exposure to the air (air release) between steps is advantageous in terms of industrial processes. After the radicals are deactivated to some degree (in particular, after the radicals are deactivated to some degree by performing the step (2b) after the step (1)), exposure to the air is not directly linked to an increase in C4-C14 perfluorocarboxylic acids and salts

thereof.

In this embodiment, particularly preferably, the step (2b) is followed by exposure to the air, then by the step (2') (preferably the step (2a)).

The production method of the disclosure preferably includes the step (2b), i.e., maintaining the low molecular weight component obtained in the step (1) at a temperature of 19°C or higher for five minutes or longer in a substantially oxygen-free space to deactivate at least part of the end radicals in the sample, and then transferring in the air the low molecular weight component from the space for the steps (1) and (2b) to a substantially oxygen-free space for the step (2').

The production method of the disclosure more preferably includes the step (2b), i.e., maintaining the low molecular weight component obtained in the step (1) at a temperature of 19°C or higher for one hour or longer in a substantially oxygen-free space to deactivate at least part of the end radicals in the sample, and then transferring in the air the low molecular weight component from the space for the steps (1) and (2b) to a substantially oxygen-free space for the step (2').

The production method of the disclosure still more preferably includes the step (2b), i.e., maintaining the low molecular weight component obtained in the step (1) at a temperature of 19°C or higher for one day or longer in a substantially oxygen-free space to deactivate at least part of the end radicals in the sample, and then transferring in the air the low molecular weight component from the space for the steps (1) and (2b) to a substantially oxygen-free space for the step (2').

The longer the duration of maintaining the low molecular weight component at a temperature of 19°C or higher in a substantially oxygen-free space (the duration of the step (2b)) is, the higher the proportion of end radicals deactivated is. This can lead to a longer acceptable air-exposure time of the low molecular weight component.

The duration of the air exposure between the steps in the aforementioned case of repeating the step (2') multiple times or performing multiple steps each as the step (2') may be 10 days or shorter, preferably 7 days or shorter, or preferably 3 days or shorter. The lower limit of the duration may be 1 second or may be 5 minutes.

The temperature of the air to be in contact with the low molecular weight component may be 40°C or lower, preferably 30°C or lower, more preferably 19°C or lower. The lower limit of the temperature may be -196°C.

In the production method of the disclosure, the aforementioned steps (1) and (2) may be performed simultaneously or the steps (1) and (2') may be performed simultaneously.

For example, the step (1) and the step (2a) may be performed simultaneously (combined step (A)). The step (1) and the step (2a) may be simultaneously performed by, for example, a method in which high molecular weight PTFE and the substance capable of generating a free hydrogen atom are fed into an airtight container preferably in a substantially oxygen-free state and the high molecular weight PTFE is irradiated while being warmed or heated.

Specifically, the combined step (A) may be performed by a method in which high molecular weight PTFE and the substance capable of generating a free hydrogen atom are fed into an airtight container preferably in a substantially oxygen-free state and the high molecular weight PTFE is then irradiated with γ-rays. X-rays, or electron beams from the outside of the airtight container while the airtight container is warmed or heated using an external unit having a warming or heating function.

The γ-rays may be γ-rays generated from cobalt 60, for example.

The X-rays used may be X-rays generated by applying electron beams from an electron accelerator to a target. Alternatively, the X-rays used may be quasi-monochromatic X-rays generated by inverse compton scattering (laser compton scattering) resulting from collision of laser beams with high energy electron beams from a linear accelerator. Alternatively, X-rays may be generated by synchrotron radiation or may be generated from an undulator or wiggler provided on the lower stage of a particle accelerator.

Use of γ-rays or X-rays having excellent material penetrability enables arrangement of the external unit at the whole surroundings of the airtight container or at any positions such as surroundings, upper and lower positions, right and left positions, and front and rear positions thereof. In order to allow easy penetration of γ-rays or X-rays, no external unit is preferably provided at a position facing the surface to be irradiated.

The γ-rays or X-rays may be replaced by electron beams having a lower material penetrability than γ-rays or X-rays. In this case, the external unit is preferably provided at a position other than the position facing the surface to be irradiated with electron beams.

The airtight container itself may be integrated with a warming or heating system.

In the combined step (A), the warming or heating temperature is more preferably 70°C or higher, still more preferably 100°C or higher, while preferably 310°C or lower.

The sample may be warmed or heated by any method, such as beam heating in which the energy of radiation is converted into thermal energy. In the case of beam heating, the radiation used preferably includes electron beams from an electron accelerator or X-rays generated by applying electron beams from an electron accelerator to a target. Thermal insulation or other components may be provided at the whole surroundings of the airtight container or any positions such as surroundings, upper and lower positions, right and left positions, or front and rear positions thereof. In order to allow easy penetration of radiation, no components such as thermal insulation are preferably provided at a

position facing the surface to be irradiated.

The step (1) and the step (2c) may be performed simultaneously (combined step (C)).

Still, the free hydrogen atoms generated from the substance capable of generating a free hydrogen atom used in the step (1) have a radical-scavenging ability, and thus the production method of the disclosure also preferably includes no combined step (C).

The step (1) and the step (2c) may be simultaneously performed by, for example, a method in which high molecular weight PTFE and the substance capable of generating a free hydrogen atom are fed into an airtight container preferably in a substantially oxygen-free state and the high molecular weight PTFE is irradiated while the radical-scavenging gas is sealed in the airtight container.

Specifically, the combined step (C) may be performed by a method in which high molecular weight PTFE and the substance capable of generating a free hydrogen atom are fed into an airtight container in a substantially oxygen-free state and the high molecular weight PTFE is then irradiated with $\gamma$-rays. X-rays, or electron beams from the outside of the airtight container while the radical-scavenging gas at a concentration of 3% or higher is sealed in or introduced into the airtight container.

The $\gamma$-rays may be $\gamma$-rays generated from cobalt 60, for example.

The X-rays used may be X-rays generated by applying electron beams from an electron accelerator to a target. Alternatively, the X-rays used may be quasi-monochromatic X-rays generated by inverse compton scattering (laser compton scattering) resulting from collision of laser beams with high energy electron beams from a linear accelerator. Alternatively, X-rays may be generated by synchrotron radiation or may be generated from an undulator or wiggler provided on the lower stage of a particle accelerator.

Use of $\gamma$-rays or X-rays having excellent material penetrability enables arrangement of the external unit at the whole surroundings of the airtight container or at any positions such as surroundings, upper and lower positions, right and left positions, and front and rear positions thereof. In order to allow easy penetration of $\gamma$-rays or X-rays, no external unit is preferably provided at a position facing the surface to be irradiated.

The $\gamma$-rays or X-rays may be replaced by electron beams having a lower material penetrability than $\gamma$-rays or X-rays. In this case, the external unit is preferably provided at a position other than the position facing the surface to be irradiated with electron beams.

The airtight container itself may be integrated with a warming or heating system.

The combined step (C) may include warming or heating. The warming or heating temperature is preferably 19°C or higher, more preferably 30°C or higher, still more preferably 70°C or higher, while preferably 310°C or lower.

The sample may be warmed or heated by any method, such as beam heating in which the energy of radiation is converted into thermal energy. In the case of beam heating, the radiation used preferably includes electron beams from an electron accelerator or X-rays generated by applying electron beams from an electron accelerator to a target. Thermal insulation or other components may be provided at the whole surroundings of the airtight container or any positions such as surroundings, upper and lower positions, right and left positions, or front and rear positions thereof. In order to allow easy penetration of radiation, no components such as thermal insulation are preferably provided at a position facing the surface to be irradiated.

The disclosure also relates to a method for producing low molecular weight polytetrafluoroethylene having a melt viscosity at 380°C of $1.0 \times 10^2$ to $7.0 \times 10^5$ Pa·s, the method including: (X) irradiating high molecular weight polytetrafluoroethylene with radiation in the presence of a substance capable of generating a free hydrogen atom under conditions including a sample temperature during the irradiation of not lower than a room temperature transition temperature ($\beta_1$ dispersion temperature) of polytetrafluoroethylene and not higher than 320°C and a dose rate of 0.1 kGy/s or higher and providing the low molecular weight polytetrafluoroethylene.

The step (X) may be performed in a substantially oxygen-free space, or may be performed in the air atmosphere containing oxygen, or may be performed in a component-adjusted air atmosphere. An example of the component-adjusted air is the air containing oxygen combined with 0.5 vol% or more of radical-scavenging hydrogen gas or halogen gas in the form of single gas or gas mixture.

A document (Radiat. Phys. Chem. Vol. 50, pp. 611-615, 1997) reports that irradiation of PTFE that is heated up to a temperature not higher than the crystal melting point of PTFE can improve the decomposition efficiency.

The inventors found the following. Specifically, in this state, even in the air atmosphere with 21 vol% oxygen, irradiation at an increased temperature using a radiation source having a high dose rate such as electron beams allows progress of scission of the main chain before reactions of generated end radicals with oxygen, promoting the decomposition.

In view of conventional academic, technical common knowledge, irradiation of high molecular weight PTFE in an oxygen-containing atmosphere (particularly in the air) is expected to cause oxidative degradation, generating a large amount of C4-C14 perfluorocarboxylic acids or salts thereof. On the contrary, the inventors surprisingly found that, under the aforementioned conditions where the irradiation temperature is not lower than the $\beta_1$ dispersion temperature and the dose rate is very limited and in the presence of a substance capable of generating a free hydrogen atom, irradiation

in the air atmosphere is less likely to generate C4-C14 perfluorocarboxylic acids or salts thereof.

The sample temperature during the irradiation in the step (X) is not lower than the room temperature transition temperature ($\beta_1$ dispersion temperature) of PTFE (19°C or higher), preferably not lower than the room temperature transition temperature ($\beta_2$ dispersion temperature) of PTFE (30°C or higher), more preferably 50°C or higher, still more preferably 70°C or higher, further preferably 100°C or higher, particularly preferably not lower than the $\alpha$ dispersion temperature (130°C or higher). The sample temperature during the irradiation is also 320°C or lower.

The temperature during the irradiation in the step (X) can be easily measured by, for example, a method of measuring the temperature of the atmosphere where the step is performed using a thermocouple or a platinum resistor, a method of measuring the temperature of the surface or inside of a sample using a thermocouple or a platinum resistor in a contact manner, or a method of measuring the infrared radiation from the surface of a sample using an infrared thermometer.

The sample temperature may vary within the range from 19°C to 320°C during the irradiation in the step (X).

The radiation in the step (X) may be electron beams or X-rays. The electron beams may be electron beams generated from an electron accelerator. The X-rays may be X-rays generated by applying particle beams from a particle accelerator to a target, or may be quasi-monochromatic X-rays generated by inverse compton scattering resulting from collision of laser beams with high energy electron beams from a linear accelerator. Alternatively, X-rays may be generated by synchrotron radiation or may be generated from an undulator or wiggler provided on the lower stage of a particle accelerator.

Examples of the substance capable of generating a free hydrogen atom in the step (X) include the same substances as the substances capable of generating a free hydrogen atom that may be used in the step (1), and the amount thereof is also the same.

Specifically, the step (X) may be performed by a method in which high molecular weight PTFE is fed into a container provided with a warming or heating system and the high molecular weight PTFE is irradiated with electron beams or X-rays from the outside of the container while warmed or heated in the air.

The electron beams used may be electron beams generated from an electron accelerator.

The X-rays used may be X-rays generated by applying electron beams generated from an electron accelerator to a target.

In the case of using X-rays having excellent material penetrability, the heating system may be arranged at the whole surroundings of the container or at any positions such as surroundings, upper and lower positions, right and left positions, and front and rear positions thereof. In order to allow easy penetration of X-rays, no heating system is preferably provided at a position facing the surface to be irradiated.

In the case of using electron beams having a lower material penetrability than X-rays, the heating system is preferably provided at a position other than the position facing the surface to be irradiated with electron beams.

The dose rate in the step (X) is 0.1 kGy/s or higher, preferably 1 kGy/s or higher, more preferably 10 kGy/s or higher, or alternatively preferably 0.1 kGy/pass or higher, more preferably 1 kGy/pass or higher, still more preferably 10 kGy/pass or higher.

The irradiation in the step (X) may be performed continually until the absorbed dose reaches a desired value, or may be performed intermittently and repeatedly until the absorbed doses add up to a desired value. In the case of intermittent and repeated irradiation, residual radicals are oxidized into peroxy radicals and scission of the PTFE main chain occurs due to oxidative decomposition during the interval of intermittent irradiation operations, resulting in generation of C4-C14 perfluorocarboxylic acids or salts thereof. In order to prevent this, the interval of intermittent irradiation operations is preferably five minutes or shorter, more preferably three minutes or shorter, still more preferably one minute or shorter

The step (X) may be performed in the presence of a radical-scavenging substance. The radical-scavenging substance may be a substance that may be used in the step (2c). The amount and introduction method for the substance may also be the amount and method for the step (2c).

Still, the free hydrogen atoms generated from the substance capable of generating a free hydrogen atom used in the step (X) have a radical-scavenging ability, and thus the step (X) also preferably includes no use of a radical-scavenging substance other than the substance capable of generating a free hydrogen atom.

The disclosure also relates to a method for producing low molecular weight polytetrafluoroethylene having a melt viscosity at 380°C of $1.0 \times 10^2$ to $7.0 \times 10^5$ Pa·s, the method including (Y1) irradiating polytetrafluoroethylene having a melt viscosity at 380°C of $1.0 \times 10^2$ to $7.0 \times 10^5$ Pa·s with radiation in the presence of a substance capable of generating a free hydrogen atom and decomposing the polytetrafluoroethylene into a low molecular weight component; and (Y2) deactivating at least part of main-chain radicals and end radicals generated by the irradiation in a substantially oxygen-free state and providing the low molecular weight polytetrafluoroethylene.

Irradiation of PTFE having a low melt viscosity (low molecular weight) can also reduce generation of C4-C14 perfluorocarboxylic acids and salts thereof, particularly perfluorooctanoic acid and salts thereof.

The PTFE to be irradiated in the step (Y1) may be one obtainable by direct polymerization, or may be one

obtainable by pyrolysis of high molecular weight PTFE, or may be one obtainable by irradiating high molecular weight PTFE.

Examples of the substance capable of generating a free hydrogen atom in the step (Y1) include the same substances as the substances capable of generating a free hydrogen atom that may be used in the step (1), and the amount thereof is also the same.

Preferred embodiments and conditions of the step (Y1) may be the same as those of the aforementioned step (1). The irradiation conditions such as the dose of radiation and the irradiation temperature are preferably adjusted in accordance with the target molecular weight (melt viscosity) of low molecular weight PTFE.

Preferred embodiments and conditions of the step (Y2) may be the same as those of the aforementioned step (2).

The production method of the disclosure may further include (3) heating the high molecular weight PTFE up to a temperature that is not lower than the primary melting point thereof and providing a molded article before the step (1), the combined step (A), the combined step (C), or the step (X). In this case, the molded article obtained in the step (3) can be used as the high molecular weight PTFE in the step (1).

The primary melting point is preferably 300°C or higher, more preferably 310°C or higher, still more preferably 320°C or higher.

The primary melting point means the maximum peak temperature on an endothermic curve present on the crystal melting curve when unsintered high molecular weight PTFE is analyzed with a differential scanning calorimeter. The endothermic curve is obtainable by increasing the temperature at a temperature-increasing rate of 10°C/min using a differential scanning calorimeter.

The molded article in the step (3) preferably has a specific gravity of 1.0 $g/cm^3$ or higher, more preferably 1.5 $g/cm^3$ or higher, while preferably 2.5 $g/cm^3$ or lower. The molded article having a specific gravity within the above range can have smaller pores or irregularities on the surface, resulting in production of low molecular weight PTFE having a small specific surface area.

The specific gravity can be determined by water displacement.

The production method of the disclosure may further include pulverizing the molded article and providing powder of the high molecular weight PTFE after the step (3). The molded article may be first coarsely pulverized and then finely pulverized.

The production method of the disclosure may further include pulverizing the low molecular weight PTFE and providing a low molecular weight PTFE powder after the step (2), the combined step (A), the combined step (C), the step (X), or the step (Y2). Pulverizing the low molecular weight PTFE obtainable by the production method of the disclosure does not increase the amount of C4-C14 perfluorocarboxylic acids or salts thereof contained.

The pulverization may be performed by any method, such as pulverization using a pulverizer. Examples of the pulverizer include impact-type pulverizers such as planetary mills, hammer mills, pin mills, and jet mills, and grinding-type pulverizers utilizing shearing force generated by unevenness between a rotary blade and a peripheral stator, such as cutter mills.

The pulverization temperature is preferably not lower than -200°C but lower than 50°C. In the case of freeze pulverization, the pulverization temperature is usually - 200°C to -100°C. Still, the pulverization may be performed around room temperature (10°C to 30°C). Freeze pulverization is usually achieved by the use of liquid nitrogen, but such pulverization requires enormous equipment and high pulverization cost. In order to simplify the step and reduce the pulverization cost, the pulverization temperature is more preferably not lower than 10°C but lower than 50°C, still more preferably 10°C to 40°C, particularly preferably 10°C to 30°C.

The pulverization may be followed by removal of fine particles and fibrous particles by air classification, and further followed by removal of coarse particles by classification.

In the air classification, the pulverized particles are sent to a cylindrical classification chamber by decompressed air and dispersed by swirl flow inside the chamber, and fine particles are classified by centrifugal force. The fine particles are collected from the central portion into a cyclone and a bag filter. Inside the classification chamber is provided a rotary device such as a circular-cone-like cone or rotor configured to achieve homogeneous gyrating movement of the pulverized particles and the air.

In the case of using classification cones, the classification point is adjusted by controlling the volume of the secondary air and the gap between classification cones. In the case of using a rotor, the air volume inside the classification chamber is adjusted by the number of rotations of the rotor.

Examples of the method of removing coarse particles include air classification, vibration sieving, and ultrasonic sieving with meshes. Air classification is preferred.

The production method of the disclosure may further include (4) storing the low molecular weight PTFE obtained in the step (2), the combined step (A), the combined step (C), the step (X), or the step (Y2) in an environment blocking ultraviolet rays, especially the ultraviolet rays of a natural environment or the ultraviolet rays of fluorescent lamps.

When the low molecular weight PTFE obtained in the step (2), the combined step (A), the combined step (C), the step (X), or the step (Y2) is exposed to the air, slightly remaining main-chain radicals and/or end radicals may

generate peroxides. Exposure of these peroxides to ultraviolet rays may regenerate main-chain radicals and/or end radicals. In particular, when end radicals are regenerated, C4-C14 perfluorocarboxylic acids or salts thereof may unfortunately be generated.

Performing the step (4) can reduce generation of C4-C14 perfluorocarboxylic acids or salts thereof for a long time.

The ultraviolet rays blocked in the step (4) may be ultraviolet rays including visible light at a wavelength of 450 nm or shorter. The ultraviolet rays are preferably ultraviolet rays at a wavelength of 400 nm or shorter, more preferably ultraviolet rays at a wavelength of 385 nm or shorter. The lower limit of the wavelength of the ultraviolet rays is preferably 200 nm.

The storage in the step (4) may be performed by maintaining the low molecular weight PTFE in a container having an ability to block the ultraviolet rays or by maintaining a container containing the low molecular weight PTFE in a space (e.g., warehouse) having an ability to block the ultraviolet rays.

The temperature of the storage environment in the step (4) is preferably not higher than the $\alpha$ dispersion temperature of non-crosslinked PTFE, more preferably -273°C to 130°C, still more preferably -196°C to 130°C, further preferably -80°C to 70°C. Storage at a temperature within the above range can further reduce generation of C4-C14 perfluorocarboxylic acids or salts thereof during storage.

In the production method of the disclosure, a product obtained after the step (2), the combined step (A), the combined step (C), the step (X), or the step (Y2) contains low molecular weight PTFE as well as the substance capable of generating a free hydrogen atom. The substance in the product is at least partially decomposed or crosslinked.

The product may be applied to its use as it is, or the residual substance capable of generating a free hydrogen atom may be removed before application to its use. The removal may be performed by any method, such as any known method in accordance with the form of the substance capable of generating a free hydrogen atom, for example.

The substance capable of generating a free hydrogen atom removed may be again used in the step (1).

Next, the following describes high molecular weight PTFE to be irradiated in the step (1), the combined step (A), the combined step (C), or the step (X) of the production method of the disclosure and low molecular weight PTFE obtainable after the step (2), the combined step (A), the combined step (C), or the step (X).

The following also describes PTFE to be irradiated in the step (Y1) and low molecular weight PTFE obtainable after the step (Y2).

The low molecular weight PTFE obtainable after the step (2), the combined step (A), the combined step (C), or the step (X) has a melt viscosity at 380°C of $1.0 \times 10^2$ to $7.0 \times 10^5$ Pa·s. The term "low molecular weight" herein means that the melt viscosity is within the above range.

The melt viscosity is preferably $1.0 \times 10^3$ Pa·s or higher, more preferably $1.5 \times 10^3$ Pa·s or higher, while preferably $3.0 \times 10^5$ Pa·s or lower, more preferably $1.0 \times 10^5$ Pa·s or lower.

The low molecular weight PTFE obtainable after the step (Y2) has a melt viscosity at 380°C of $1.0 \times 10^2$ to $7.0 \times 10^5$ Pa·s. The melt viscosity is preferably $3.0 \times 10^5$ Pa·s or lower, more preferably $1.0 \times 10^5$ Pa·s or lower.

The PTFE to be irradiated in the step (Y1) has a melt viscosity at 380°C of $1.0 \times 10^2$ to $7.0 \times 10^5$ Pa·s. The melt viscosity is preferably $5.0 \times 10^2$ Pa·s or higher, more preferably $1.0 \times 10^3$ Pa·s or higher, still more preferably $1.5 \times 10^3$ Pa·s or higher.

The melt viscosity is a value determined by heating a 2-g sample at 380°C for five minutes in advance and then keeping the sample at this temperature under a load of 0.7 MPa using a flow tester (available from Shimadzu Corp.) and a 2$\varphi$-8L die in conformity with ASTM D1238.

The high molecular weight PTFE to be irradiated preferably has a standard specific gravity (SSG) of 2.130 to 2.230. The standard specific gravity (SSG) is a value determined in conformity with ASTM D4895.

The high molecular weight PTFE has a significantly higher melt viscosity than the low molecular weight PTFE, and thus the melt viscosity thereof is difficult to determine accurately. In contrast, the melt viscosity of the low molecular weight PTFE is able to be determined, but the low molecular weight PTFE has difficulty in providing a molded article usable for determination of standard specific gravity. Thus, the standard specific gravity thereof is difficult to determine accurately. Therefore, in the disclosure, the standard specific gravity is used as an indicator of the molecular weight of the high molecular weight PTFE to be irradiated, while the melt viscosity is used as an indicator of the molecular weight of the low molecular weight PTFE. For both the high molecular weight PTFE and the low molecular weight PTFE, no method for determining the molecular weight directly has been known so far.

In the high molecular weight PTFE, the amount of perfluorooctanoic acid and salts thereof may be less than 25 ppb by mass, or not more than 20 ppb by mass, or not more than 15 ppb by mass, or not more than 10 ppb by mass, or not more than 5 ppb by mass, or less than 5 ppb by mass. The lower limit thereof may be, but is not limited to, a value lower than the detection limit.

The amount of perfluorooctanoic acid and salts thereof can be determined by liquid chromatography.

The low molecular weight PTFE has a melting point of 320°C to 340°C, more preferably 324°C to 336°C.

The melting point is defined as follows using a differential scanning calorimeter (DSC). Specifically, temperature calibration is performed in advance with indium and lead as standard samples. Then, about 3 mg of low molecular weight

PTFE is put into an aluminum pan (crimped container), and the temperature is increased at a rate of 10°C/min within the temperature range of 250°C to 380°C under air flow at 200 ml/min. The minimum point of the heat of fusion within this range is defined as the melting point.

In the production method of the disclosure, the high molecular weight PTFE may be in any form, such as powder (e.g., fine powder, molding powder), a molded article of the high molecular weight PTFE, or shavings generated by cutting a molded article of the high molecular weight PTFE. The high molecular weight PTFE in the form of powder can easily provide powder of the low molecular weight PTFE.

The high molecular weight PTFE may be crosslinked.

The low molecular weight PTFE obtainable by the production method of the disclosure may be in any form, and is preferably in the form of powder.

The low molecular weight PTFE obtainable by the production method of the disclosure, when in the form of powder, preferably has a specific surface area of 0.5 to 20 $m^2/g$.

For the low molecular weight PTFE powder, both of the following two types are demanded, i.e., a small specific surface area type having a specific surface area of not smaller than 0.5 $m^2/g$ but smaller than 7.0 $m^2/g$ and a large specific surface area type having a specific surface area of not smaller than 7.0 $m^2/g$ and not larger than 25 $m^2/g$, preferably not larger than 20 $m^2/g$.

The low molecular weight PTFE powder of a small specific surface area type has an advantage of easy dispersion in a matrix material such as a coating material. In contrast, such powder disperses in a matrix material with a large dispersed particle size, i.e., with poor fine dispersibility.

The specific surface area of the low molecular weight PTFE powder of a small specific surface area type is preferably 1.0 $m^2/g$ or larger, while preferably 5.0 $m^2/g$ or smaller, more preferably 3.0 $m^2/g$ or smaller. Preferred examples of the matrix material used include plastics and inks, as well as coating materials.

The low molecular weight PTFE powder of a large specific surface area type, when dispersed in a matrix material such as a coating material, has advantages of high surface-modifying effects, such as a small dispersed particle size in a matrix material and improved texture of the coating surface, and a large amount of oil absorption. In contrast, such powder may not be easily dispersed in a matrix material, for example, may take a long time for dispersion, and may cause an increased viscosity of a coating material, for example.

The specific surface area of the low molecular weight PTFE powder of a large specific surface area type is preferably 8.0 $m^2/g$ or larger, while preferably 25 $m^2/g$ or smaller, more preferably 20 $m^2/g$ or smaller. Preferred examples of the matrix material used include oils, greases, and coating materials, as well as plastics.

The specific surface area is determined by the BET method using a surface analyzer (trade name: BELSORP-mini II, available from MicrotracBEL Corp.), a gas mixture of 30% nitrogen and 70% helium as carrier gas, and liquid nitrogen for cooling.

The low molecular weight PTFE obtainable by the production method of the disclosure, when in the form of powder, preferably has an average particle size of 0.5 to 200 μm, more preferably 50 μm or smaller, still more preferably 25 μm or smaller, particularly preferably 10 μm or smaller. As described here, powder having a relatively small average particle size can provide a film having much better surface smoothness when used as an additive for a coating material, for example.

The average particle size is equivalent to the particle size corresponding to 50% of the cumulative volume in the particle size distribution determined using a laser diffraction particle size distribution analyzer (HELOS & RODOS) available from JEOL Ltd. at a dispersive pressure of 3.0 bar without cascade impaction.

The production method of the disclosure can provide low molecular weight PTFE substantially free from perfluorooctanoic acid and salts thereof after the step (2), the combined step (A), the combined step (C), the step (X), or the step (Y2). In the low molecular weight PTFE obtainable by the production method of the disclosure, the amount of perfluorooctanoic acid and salts thereof may be less than 25 ppb by mass, preferably not more than 20 ppb by mass, more preferably not more than 15 ppb by mass, still more preferably not more than 10 ppb by mass, further preferably not more than 5 ppb by mass, particularly preferably less than 5 ppb by mass. The lower limit of the amount may be, but is not limited to, a value lower than the detection limit, or may be 0.001 ppb by mass or 1 ppb by mass.

The amount of perfluorooctanoic acid and salts thereof can be determined by liquid chromatography.

The production method of the disclosure can also provide low molecular weight PTFE substantially free from C4-C14 perfluorocarboxylic acids and salts thereof. In the low molecular weight PTFE obtainable by the production method of the disclosure, the total amount of C4-C14 perfluorocarboxylic acids and salts thereof may be not more than 50 ppb by mass, preferably less than 25 ppb by mass, more preferably not more than 20 ppb by mass, still more preferably not more than 15 ppb by mass, further preferably not more than 10 ppb by mass, particularly preferably not more than 5 ppb by mass, most preferably less than 5 ppb by mass. The lower limit thereof may be, but is not limited to, a value lower than the detection limit, or may be 0.001 ppb by mass or 1 ppb by mass.

The total amount of C4-C14 perfluorocarboxylic acids and salts thereof is preferably within the above range after the step (2), the combined step (A), the combined step (C), the step (X), or the step (Y2), and is more preferably

within the above range after additional heating (e.g., heating during processing).

The amount of the perfluorocarboxylic acids and salts thereof can be determined by liquid chromatography.

The production method of the disclosure can also provide low molecular weight PTFE in which the total amount of C9-C14 perfluorocarboxylic acids and salts thereof is within the above range.

The production method of the disclosure can also provide highly reliable low molecular weight PTFE that is less likely to generate perfluorooctanoic acid and salts thereof, and further the perfluorocarboxylic acids and salts thereof even by heating during processing in which the PTFE is added to a matrix resin and heat-molded.

Although it is unclear, the reason of this seems to be as follows. Specifically, during the irradiation, free hydrogen atoms generated from the substance capable of generating a free hydrogen atom may add to main chain radicals and end radicals generated by the irradiation of high molecular weight PTFE, and after the irradiation, hydrogen atoms generated from the substance capable of generating a free hydrogen atom may react with the main chain radicals and end radicals. Thereby, the main chain radicals and end radicals may be sufficiently eliminated. This can presumably prevent reactions of the main chain radicals and end radicals with oxygen and reduce generation of C4-C14 perfluorocarboxylic acids and salts thereof, particularly of perfluorooctanoic acid and salts thereof even by heating in the presence of oxygen when the PTFE is applied to its use.

In the low molecular weight PTFE obtainable by the production method of the disclosure, the amount of perfluorooctanoic acid and salts thereof determined by the following heating and determining conditions A may be less than 100 ppb by mass, less than 50 ppb by mass, or less than 25 ppb by mass, preferably not more than 20 ppb by mass, more preferably not more than 15 ppb by mass, still more preferably not more than 10 ppb by mass, further preferably not more than 5 ppb by mass, particularly preferably less than 5 ppb by mass. The lower limit may be, but is not limited to, a value lower than the detection limit, or may be 0.001 ppb by mass or 1 ppb by mass.

The low molecular weight PTFE containing perfluorooctanoic acid and salts thereof in an amount determined by the heating and determining conditions A within the above range is less likely to generate perfluorooctanoic acid and salts thereof even by heating in the presence of oxygen when the PTFE is applied to a variety of uses, for example during processing.

(Heating and determining conditions A)

A 50-cc stainless steel cylindrical airtight container is charged with 2 to 20 g of a sample in an air, and then capped and heated at 150°C for 18 hours.

The amount of perfluorooctanoic acid and salts thereof is determined using a liquid chromatography-mass spectrometer (LC-MS ACQUITY UPLC/TQD, available from Waters) as follows:

1 g of the sample heated is mixed with 5 mL of acetonitrile and this mixture is sonicated for 60 minutes, so that perfluorooctanoic acid is extracted;
the liquid phase obtained is analyzed by multiple reaction monitoring (MRM);
acetonitrile (A) and an aqueous ammonium acetate solution (20 mmol/L) (B) are delivered as mobile phases at a concentration gradient (A/B = 40/60 for 2 min and 80/20 for 1 min);
a separation column (ACQUITY UPLC BEH C18 1.7 μm) is used at a column temperature of 40°C and an injection volume of 5 μL;
electrospray ionization (ESI) in a negative mode is used for ionization;
the cone voltage is set to 25 V;
the ratio of a molecular weight of precursor ions to a molecular weight of product ions is measured to be 413/369; and
the amount of the perfluorooctanoic acid and salts thereof is calculated by an external standard method.

The detection limit of this measurement is 5 ppb by mass.

In the low molecular weight PTFE obtainable by the production method of the disclosure, the total amount of C9-C14 perfluorocarboxylic acids and salts thereof determined by the following heating and determining conditions B may be less than 100 ppb by mass or less than 50 ppb by mass, preferably less than 25 ppb by mass, more preferably not more than 20 ppb by mass, still more preferably not more than 15 ppb by mass, further preferably not more than 10 ppb by mass, particularly preferably not more than 5 ppb by mass, most preferably less than 5 ppb by mass. The lower limit may be, but is not limited to, a value lower than the detection limit, or may be 0.001 ppb by mass or 1 ppb by mass.

The low molecular weight PTFE containing the perfluorocarboxylic acids and salts thereof in an amount determined by the heating and determining conditions B within the above range is less likely to generate the perfluorocarboxylic acids and salts thereof even by heating in the presence of oxygen when the PTFE is applied to a variety of uses, for example during processing.

(Heating and determining conditions B)

A 50-cc stainless steel cylindrical airtight container is charged with 2 to 20 g of a sample in an air, and then capped and heated at 150°C for 18 hours.

The amount of C4-C14 perfluorocarboxylic acids and salts thereof is determined using a liquid chromatography-mass spectrometer (LC-MS ACQUITY UPLC/TQD, available from Waters) as follows:

using 1 g of the sample heated, perfluorooctanoic acid and salts thereof are extracted as in the heating and determining conditions A, and a liquid phase obtained is analyzed by MRM;

the measurement conditions are based on the measurement conditions for perfluorooctanoic acid, but the concentration gradient is changed (A/B = 10/90 for 1.5 min and 90/10 for 3.5 min);

the ratio of the molecular weight of precursor ions to the molecular weight of product ions is measured to be 463/419 for perfluorononanoic acid (C9), 513/469 for perfluorodecanoic acid (C10), 563/519 for perfluoroundecanoic acid (C11), 613/569 for perfluorododecanoic acid (C12), 663/619 for perfluorotridecanoic acid (C13), and 713/669 for perfluorotetradecanoic acid (C14); and

the total amount of C9-C14 perfluorocarboxylic acids and salts thereof is calculated from the amount (X) of perfluorooctanoic acid obtained in the above measurement by the following formula. The detection limit of this measurement is 5 ppb by mass.

$$(A_{C9}+A_{C10}+A_{C11}+A_{C12}+A_{C13}+A_{C14})/A_{C8} \times X$$

$A_{C8}$: peak area of perfluorooctanoic acid
$A_{C9}$: peak area of perfluorononanoic acid
$A_{C10}$: peak area of perfluorodecanoic acid
$A_{C11}$: peak area of perfluoroundecanoic acid
$A_{C12}$: peak area of perfluorododecanoic acid
$A_{C13}$: peak area of perfluorotridecanoic acid
$A_{C14}$: peak area of perfluorotetradecanoic acid
X: amount of perfluorooctanoic acid calculated from the MRM measurement result by the external standard method

The low molecular weight PTFE obtainable after the step (2), the combined step (A), the combined step (C), the step (X), or the step (Y2) is preferably low molecular weight PTFE containing an oxygen atom in at least part of the side chains on the main chain or low molecular weight PTFE consisting of carbon atoms and fluorine atoms.

The low molecular weight PTFE containing an oxygen atom in at least part of the side chains on the main chain or the low molecular weight PTFE consisting of carbon atoms and fluorine atoms are each a compound containing a carbon-carbon bond and containing no oxygen atom at the molecular-chain ends. The molecular structure exhibits the following structure.

(Deactivating process for main-chain radicals/end radicals)

$R_1(-CF_2-CF_2-)_x-R_2$

$R_1(-CF=CF_2-CF_2)x-R_2$

$R_1(-CF_2-CF(R_3)-CF_2)_y-R_2$

$R_1(-CF=C(R_4)-CF_2)_y-R_2$

(Deactivating process for end radicals alone)

$R_1(-CF_2-CF(R_5)-CF_2)_y-R_2$

$R_1(-CF=C(R_6)-CF_2)_y-R_2$

In the formulas, $R_1$s at respective occurrences are each independently a hydrogen atom, a fluorine atom, a

chlorine atom, a bromine atom, an iodine atom, a $-CF_3$ group, a $-CF=CF_2$ group, a -CF=CHF group, a $-CH_2F$ group, a $-CHF_2$ group, or a $-CH_3$ group.

In the formulas, $R_2$s at respective occurrences are each independently a hydrogen atom, a fluorine atom, a chlorine atom, a bromine atom, an iodine atom, a $-CF_3$ group, a $-CF=CF_2$ group, a -CF=CHF group, a $-CH_2F$ group, a $-CHF_2$ group, or a $-CH_3$ group.

In the formulas, $R_3$s at respective occurrences are each independently a hydrogen atom, a fluorine atom, a chlorine atom, a bromine atom, an iodine atom, a $-CF_3$ group, a $-CF_2-CF_3$ group, a $-CF=CF_2$ group, a $-CF_2CF_2-$ group, or a $-O-R_f$ group (wherein $R_f$ is a perfluoro organic group, preferably a C1-C10 perfluoroalkyl group).

In the formulas, R4s at respective occurrences are each independently a hydrogen atom, a fluorine atom, a chlorine atom, a bromine atom, an iodine atom, a $-CF_3$ group, a $-CF_2-CF_3$ group, a $-CF=CF_2$ group, a $-CF_2CF_2-$ group, or a $-O-R_f$ group (wherein $R_f$ is a perfluoro organic group, preferably a C1-C10 perfluoroalkyl group).

In the formulas, $R_5$s at respective occurrences are each independently a hydrogen atom, a fluorine atom, a chlorine atom, a bromine atom, an iodine atom, a $-CF_3$ group, a $-CF_2-CF_3$ group, a $-CF=CF_2$ group, a $-CF_2CF_2-$ group, a $-O-R_f$ group (wherein $R_f$ is a perfluoro organic group, preferably a C1-C10 perfluoroalkyl group), a -OH group, a - OF group, a -OCl group, a -OBr group, a -OI group, a $-O-CF_3$ group, a $-O-CF_2-CF_3$ group, or a -O-O· (peroxy radical).

In the formulas, $R_6$s at respective occurrences are each independently a hydrogen atom, a fluorine atom, a chlorine atom, a bromine atom, an iodine atom, a $-CF_3$ group, a $-CF_2-CF_3$ group, a $-CF=CF_2$ group, a $-CF_2CF_2-$ group, a $-O-R_f$ group (wherein $R_f$ is a perfluoro organic group, preferably a C1-C10 perfluoroalkyl group), a -OH group, a - OF group, a -OCl group, a -OBr group, a -OI group, a $-O-CF_3$ group, or a $-O-CF_2-CF_3$ group.

In the formulas, x is an integer of 1 to 1000, preferably 2 to 500.

In the formulas, y is an integer of 1 to 1000, preferably 2 to 500.

The molecular structure can be identified by measurement using a $^{19}F$ nuclear magnetic resonance device (NMR), as well as a technique using a Fourier transform infrared spectrometer (FT-IR), Fourier transform Raman spectroscopy (FT-Raman), X-ray photoelectron spectroscopy (XPS), or other techniques.

The low molecular weight PTFE preferably has a ratio (main-chain radicals/end radicals) of the intensity of the signal corresponding to the main-chain radicals to the intensity of the signal corresponding to the end radicals obtainable by electron spin resonance (ESR) measurement of 10/1 or higher, more preferably 15/1 or higher, more preferably 20/1 or higher, still more preferably 30/1 or higher.

When the signal (double quintet) corresponding to the main-chain radicals and the signal (triplet) corresponding to the end radicals are clearly detected in ESR measurement in a vacuum, the ratio is calculated based on the intensities of these signals. When the signals are not clearly detected in a vacuum, the ratio is calculated based on the intensities of the signals corresponding to the peroxy radicals of the main chain type (asymmetric) and to the peroxy radicals of the end type (symmetric) detected in ESR measurement after a sample is exposed to the air. In particular, measurement at the liquid nitrogen temperature is useful for separation of peroxy radicals.

Many end radicals remain in the low molecular weight PTFE obtained by a conventional method of irradiating high molecular weight PTFE in the air atmosphere (without radical deactivation in the step (2)). Thus, the above ratio fails to fall within the above range.

The low molecular weight PTFE preferably contains at least one selected from the group consisting of a hydrogen-atom-containing molecular structure and a double-bond-containing molecular chain in the molecule.

Examples of the hydrogen-atom-containing molecular structure include structures represented by -CHF-, =CHF, $-CFH_2$, a $-CH_3$ group, and a $-CHF_2$ group.

Examples of the double-bond-containing molecular chain include structures such as -CF=CF-, $-CF=CF_2$, and $-CF=CF-CF_3$.

The low molecular weight PTFE also preferably contains a molecular structure represented by $-CF_2CF(CF_3)CF_2-$ or $-CF(CF_3)_2$, for example.

The irradiation in the step (1) performed in the presence of a substance capable of generating a free hydrogen atom forms a molecular structure containing a hydrogen atom or a molecular chain containing a double bond inside the resulting low molecular weight PTFE.

In the case of using an airtight container formed from a hydrogen-atom-containing material as the airtight container for the step (1), the irradiation causes the airtight container to generate radiolytically decomposed gas that contains hydrogen gas as a principal component. Use of the decomposed gas as a radical-scavenging gas in the step (2c) can form a hydrogen-atom-containing molecular structure or a double-bond-containing molecular chain inside the resulting low molecular weight PTFE.

The hydrogen-atom-containing material is preferably a hydrogen-atom-containing organic material, and examples thereof include hydrogen-atom-containing rubbery materials such as ethylene-propylene rubber, tetrafluoroethylene-propylene rubber, and polyester elastomer, and hydrogen-atom-containing thermoplastic organic materials such as polyesters, e.g., polyethylene terephthalate (PET), polyamide (PA), polyethylene (PE), polyamide-imide (PAI), thermoplastic polyimide (TPI), polyphenylene sulfide (PPS), polyether imide (PEI), cyclic polyolefins (COP), polyvinylidene

fluoride, and ethylene-tetrafluoroethylene copolymers.

Direct use of hydrogen gas as a radical-scavenging gas in the step (2c) can also form a hydrogen-atom-containing molecular structure or a double-bond-containing molecular chain inside the resulting low molecular weight PTFE.

The presence of the aforementioned structures in the molecule of the low molecular weight PTFE can be confirmed by $^{19}F$ MAS NMR under any of the following measurement conditions.

<Measurement conditions (1)>

Device: VNS600 available from Varian, Inc.
Resonance frequency: 564.491 MHz
Observation nucleus: $^{19}F$
Sample tube diameter: 1.2 mmφ
Rotational speed: 50 kHz
Measurement temperature: rt (23.3°C)
Measurement method: single pulse method
Number of scans: 512 or more
Relaxation delay: 5 s or longer
Pulse width: 1.15 μs

<Measurement conditions (2)>

Device: AVANCE III HD400 available from Bruker
Resonance frequency: 376.6412776 MHz
Observation nucleus: $^{19}F$
Sample tube diameter: 1.3 mmφ
Rotational speed: 60 kHz
Measurement temperature: 70°C
Measurement method: single pulse method
Number of scans: 10 thousands or more
Relaxation delay: 5 s or longer
Pulse width: 0.8 μs

The signal assigned to $-CHF_2$ is observed at around - 140 ppm, the signal assigned to =CHF is observed at around -150 ppm, and the signal assigned to -CHF- or $-CFH_2$ is observed at around a range from -210 ppm to -215 ppm. The signal assigned to -CF=CF- is observed at around -156 ppm. The signals assigned to $-CF=CF_2$ are observed at around -92 ppm and at around -190 ppm. The signals assigned to - $CF=CF-CF_3$ are observed at around -75 ppm and at around -128 ppm. The signals assigned to $-CF_2CF(CF_3)CF_2-$ are observed at around -71 ppm and at around -114 ppm. The signal assigned to $-CF(CF_3)_2$ is observed at around -58 ppm.

The presence of a hydrogen-atom-containing structure in the low molecular weight PTFE can be confirmed by $^{1}H$ NMR measurement under the following measurement conditions and subsequently by $^{13}C$ CP/MAS NMR measurement.

<Measurement conditions (3)>

Device: AVANCE III 600 wide-bore spectrometer available from Bruker
Resonance frequency: hydrogen 600.23 MHz, carbon 150.9 MHz
Observation nuclei: $^{1}H$ and $^{13}C$
Sample tube diameter: 2.5 mmφ or 4.0 mmφ
Rotational speed: 6 kHz
Measurement temperature: rt (24.1°C)
Decoupling method: CW/TPPM method

Time constant: 3.0 ms
Number of scans: 65,536 or more

The above measurement can detect the signal assigned to $-CH_3$ at around 17 ppm.
Electron spin resonance (ESR) measurement in a vacuum of the low molecular weight PTFE obtained through the steps (1) and (2) in a vacuum with no contact with oxygen can detect a triplet peak corresponding to the end radicals and a double quintet peak corresponding to the main-chain radicals (alkyl radicals).
The ratio Peak M/Peak A is preferably lower than 3.0, more preferably lower than 2.5, still more preferably lower than 2.0, wherein Peak M represents the central peak height of the triplet and Peak A represents the peak height of the double quintet.
The ratio Peak A/Peak M is preferably higher than 0.3, more preferably higher than 0.4, still more preferably higher than 0.45.
FIG. 1 shows an example of the above peaks.
The ESR measurement is performed in a vacuum under the following conditions.

Device: JES-X330 available from JEOL Ltd.
Measurement temperature: 23±1°C
Microwave frequency: 9.42 to 9.44 GHz
Microwave outputs: 0.1 mW and 0.04 mW
Center field: 337.0 mT
Sweep width: ±25 mT
Sweep time: 2 min
Time constant: 0.1 s
Field modulation width: 0.2 mT
Number of scans: 1
Modulation frequency: 100 kHz

The production method of the disclosure can provide low molecular weight PTFE containing a hydrogen atom in the molecule. When the high molecular weight PTFE is irradiated with ionizing radiation in a substantially oxygen-free state and in the presence of a substance capable of generating a free hydrogen atom, the free hydrogen atoms cap carbon radicals in the molecules generated by the irradiation. This generates low molecular weight PTFE molecules containing hydrogen atoms. The hydrogen atoms in the low molecular weight PTFE molecules are detected as functional groups derived from a hydrogen-attached form at an absorption frequency of around 3000 to 4000 $cm^{-1}$.
The production method of the disclosure can provide the following low molecular weight PTFEs, for example.
Low molecular weight PTFE (1):

low molecular weight polytetrafluoroethylene having a melt viscosity at 380°C of $1.0 \times 10^2$ to $7.0 \times 10^5$ Pa·s, exhibiting peaks that are obtainable by electron spin resonance measurement in a vacuum and that satisfy the following relational expression (1), and
having an amount of perfluorooctanoic acid and salts thereof of less than 25 ppb by mass and an amount of the perfluorooctanoic acid and salts thereof determined in accordance with the aforementioned heating and determining conditions A of less than 100 ppb by mass,
the relational expression (I) being:

$$3.0 > \text{Peak M/Peak A} > 0.3,$$

wherein Peak M represents the peak height of the center of triplet that corresponds to end radicals in the low molecular weight polytetrafluoroethylene; and Peak A represents the peak height of double quintet that corresponds to main-chain radicals in the low molecular weight polytetrafluoroethylene.

The low molecular weight PTFE (1) exhibits peaks that are obtainable by ESR measurement in a vacuum and that satisfy the above relational expression (1). Satisfying the relational expression (1) indicates that alkyl-form peroxy radicals on the main chain and peroxy radicals scavenged on molecular-chain ends are hardly present.
ESR measurement conditions in a vacuum are as described above.
For the low molecular weight PTFE (1), the ratio Peak M/Peak A is more preferably lower than 2.5, still more preferably lower than 2.0.
Also, the ratio Peak A/Peak M is more preferably higher than 0.4, still more preferably higher than 0.45.

The low molecular weight PTFE (1) can be produced by performing all steps while the product is never exposed to oxygen.

Low molecular weight PTFE (2):

low molecular weight polytetrafluoroethylene having a melt viscosity at 380°C of $1.0 \times 10^2$ to $7.0 \times 10^5$ Pa·s, exhibiting peaks that are obtainable by electron spin resonance (ESR) measurement in the air and that satisfy the following relational expressions (1) and (2), and

having an amount of perfluorooctanoic acid and salts thereof of less than 25 ppb by mass and an amount of the perfluorooctanoic acid and salts thereof determined in accordance with the aforementioned heating and determining conditions A of less than 100 ppb by mass,

the relational expression (1) being:

$$\text{Peak M2/Peak A1} \geq 1.0,$$

wherein Peak M2 represents an absolute value of a negative peak intensity that corresponds to a peroxy radical scavenged on a molecular-chain end of the low molecular weight polytetrafluoroethylene; and Peak A1 represents an absolute value of a negative peak intensity that corresponds to an alkyl peroxy radical scavenged on a main chain of the low molecular weight polytetrafluoroethylene,

the relational expression (2) being:

$$\text{Peak M2/Peak M3} < 1.0,$$

wherein Peak M2 represents the absolute value of the negative peak intensity that corresponds to a peroxy radical scavenged on a molecular-chain end of the low molecular weight polytetrafluoroethylene; and Peak M3 represents an absolute value of a positive peak intensity that corresponds to a peroxy radical scavenged on a molecular-chain end of the low molecular weight polytetrafluoroethylene.

The low molecular weight PTFE (2) exhibits peaks that are obtainable by ESR measurement in the air and that satisfy the above relational expressions (1) and (2). This means that the alkyl peroxy radicals on the main chain are present in a proportion of 90.91% or higher relative to the peroxy radicals scavenged on molecular-chain ends.

The ESR measurement is performed in the air under the following conditions.

Device: JES-RE2X available from JEOL Ltd.
Measurement temperature: 24±2°C
Microwave frequency: 9.42 to 9.44 GHz
Microwave outputs: 0.1 mW and 0.04 mW
Center field: 333.0 mT
Sweep width: ±15 mT or ±25 mT
Sweep time: 2 min
Time constant: 0.1 s
Field modulation width: 0.2 mT
Number of scans: 1
Modulation frequency: 100 kHz

The ESR measurement (in the air) mainly observes a negative peak M2 corresponding to peroxy radicals scavenged on molecular-chain ends of the low molecular weight PTFE, a positive peak M3 corresponding to peroxy radicals scavenged on molecular-chain ends of the low molecular weight PTFE, and a negative peak A1 corresponding to alkyl peroxy radicals scavenged on the main chain of the low molecular weight PTFE.

The peak M2 may be a positive peak observed at a field intensity of 332.0 to 333.0 mT.

The peak M3 may be a negative peak observed at a field intensity of 333.2 to 334.2 mT.

The peak A1 may be a negative peak observed at a field intensity of 334.5 to 335.5 mT.

FIG. 2 shows examples of these peaks. A combination of the peaks M2 and M3 is expressed as the peak M1.

The low molecular weight PTFE obtained by irradiation in the presence of oxygen has a low peak A1.

In the relational expression (1), Peak M2 represents the absolute value of the intensity of the above Peak M2 and Peak A1 represents the absolute value of the intensity of the above peak A1.

In the relational expression (1), Peak M2/Peak A1 is 1.0 or higher, preferably 1.2 or higher. Peak M2/Peak A1

may also be 6.0 or lower, preferably 5.5 or lower.

In the relational expression (2), Peak M2 represents the absolute value of the intensity of the above peak M2 and Peak M3 represents the absolute value of the intensity of the above peak M3.

In the relational expression (2), Peak M2/Peak M3 is lower than 1.0, preferably 0.9 or lower. Peak M2/Peak M3 may also be 0.1 or higher, preferably 0.2 or higher.

The low molecular weight PTFE (2) is also preferably a TFE homopolymer.

Low molecular weight PTFE (3):

low molecular weight polytetrafluoroethylene having a melt viscosity at 380°C of $1.0 \times 10^2$ to $7.0 \times 10^5$ Pa·s, including:

at least one hydrogen-atom-containing molecular structure selected from the group consisting of =CHF, -CHF-, $-CH_2F$, $-CHF_2$, and $-CH_3$;
$CF_3$- at a molecular-chain end; and
at least one double-bond-containing molecular structure selected from the group consisting of - CF=CF-, $-CF=CF_2$, and $-CF=CF-CF_3$,

having an amount of perfluorooctanoic acid and salts thereof of less than 25 ppb by mass and an amount of the perfluorooctanoic acid and salts thereof determined in accordance with the aforementioned heating and determining conditions A of less than 100 ppb by mass.

The low molecular weight PTFE (3) contains at least one hydrogen-atom-containing molecular structure selected from the group consisting of -CHF-, =CHF, $-CH_2F$, $-CHF_2$, and $-CH_3$, $CF_3$- at a molecular-chain end, and at least one double-bond-containing molecular structure selected from the group consisting of -CF=CF-, $-CF=CF_2$, and $-CF=CF-CF_3$. Thereby, the low molecular weight PTFE (3) has excellent miscibility with a different type of an organic substance containing a hydrogen atom.

The low molecular weight PTFE (3) preferably contains at least one hydrogen-atom-containing molecular structure selected from the group consisting of -CHF-, =CHF, $-CH_2F$, and $-CHF_2$, $CF_3$- at a molecular-chain end, and a molecular structure represented by $-CF=CF-CF_3$, more preferably contains a molecular structure represented by -CHF-, =CHF, $-CH_2F$, and $-CHF_2$, $CF_3$- at a molecular-chain end, and a molecular structure represented by $-CF=CF-CF_3$.

The presence of the aforementioned structures in the molecule of the low molecular weight PTFE can be confirmed by $^{19}F$ MAS NMR. The measurement conditions and the positions of the signals assigned to the respective structures are as described above.

Low molecular weight PTFE (4):

low molecular weight polytetrafluoroethylene having a melt viscosity at 380°C of $1.0 \times 10^2$ to $7.0 \times 10^5$ Pa·s, including:

at least one molecular structure selected from the group consisting of $-CF_2CF(CF_3)CF_2$- and $-CF(CF_3)_2$;
$CF_3$- at a molecular-chain end; and
at least one double-bond-containing molecular

structure selected from the group consisting of - CF=CF-, $-CF=CF_2$, and $-CF=CF-CF_3$,
having an amount of perfluorooctanoic acid and salts thereof of less than 25 ppb by mass and an amount of the perfluorooctanoic acid and salts thereof determined in accordance with the aforementioned heating and determining conditions A of less than 100 ppb by mass.

The low molecular weight PTFE (4) contains at least one molecular structure selected from the group consisting of $-CF_2CF(CF_3)CF_2$- and $-CF(CF_3)_2$, $CF_3$- at a molecular-chain end, and at least one double-bond-containing molecular structure selected from the group consisting of -CF=CF-, - $CF=CF_2$, and $-CF=CF-CF_3$.

The low molecular weight PTFE (4) preferably contains a molecular structure represented by $CF_2CF(CF_3)CF_2$- and - $CF(CF_3)_2$, $CF_3$- at a molecular-chain end, and a molecular structure represented by -CF=CF-, $-CF=CF_2$ and $-CF=CF-CF_3$.

The low molecular weight PTFE (4) also preferably contains a molecular structure represented by - $CF_2CF(CF_3)CF_2$-, $CF_3$- at a molecular-chain end, and a molecular structure represented by $-CF=CF-CF_3$.

The presence of the aforementioned structures in the molecule of the low molecular weight PTFE can be confirmed by $^{19}F$ MAS NMR. The measurement conditions and the positions of the signals assigned to the respective structures are as described above.

Low molecular weight PTFE (5):

low molecular weight polytetrafluoroethylene having a melt viscosity at 380°C of $1.0 \times 10^2$ to $7.0 \times 10^5$ Pa·s,
having a standard value determined by the following formula (3) of 1.1 to 10.0, and
having an amount of perfluorooctanoic acid and salts thereof of less than 25 ppb by mass,
the formula (3) being:
Standard value = (absorbance of functional group derived from hydrogen-attached form of the low molecular weight PTFE)/(absorbance of functional group derived from hydrogen-attached form of low molecular weight PTFE obtained by irradiation in the absence of substance capable of generating free hydrogen atom).

The absorbance corresponding to the functional groups derived from a hydrogen-attached form can be determined by the following method.

(Measurement method)

The method is in conformity with the method of analyzing end groups described in JP H04-20507 A.
Low molecular weight PTFE powder is pre-formed with a hand press, so that a film having a thickness of 0.1 to 1.0 mm is prepared. The resulting film is subjected to infrared absorption spectrum analysis. Infrared absorption spectrum analysis is also performed on PTFE with the functional groups in the molecule completely fluorinated and removed, which is produced by contacting the PTFE with fluorine gas. Based on the difference spectrum therebetween, the height of the absorbance corresponding to the functional groups derived from the hydrogen-attached form in the PTFE molecule can be calculated.
The resulting difference spectrum is expanded within a range of 3000 $cm^{-1}$ to 4000 $cm^{-1}$ and a base line is drawn within a range of 3300 $cm^{-1}$ to 3970 $cm^{-1}$. The height of the peak top at 3556 $cm^{-1}$ is measured, whereby the absolute value of the absorbance corresponding to the functional groups derived from the hydrogen-attached form in the PTFE molecule can be determined.
The standard value is 1.1 to 10.0, preferably 1.1 to 8.0, more preferably 1.1 to 6.0.
A standard value within the aforementioned range indicates that the low molecular weight PTFE is obtained by irradiation in the presence of a substance capable of generating a free hydrogen atom.
Low molecular weight PTFE obtained by irradiation in the absence of the substance capable of generating a free hydrogen atom in the formula (3) is preferably one produced under the same conditions as for the low molecular weight PTFE (5), except that the irradiation is performed in the absence of the substance capable of generating a free hydrogen atom.
If ionizing radiation is applied with no substance capable of generating a free hydrogen atom being present, the absorbance corresponding to the functional groups derived from a hydrogen-attached form in the PTFE molecule will be theoretically 0.000. In actual cases, however, the absorbance is commonly 0.001 to 0.005 due to a significantly small amount of free hydrogen atoms generated from, for example, a container used in irradiation with ionizing radiation.
A preferred melt viscosity, amount of perfluorooctanoic acid and salts thereof, amount of C4-C14 perfluorocarboxylic acids and salts thereof, and amount of C9-C14 perfluorocarboxylic acids and salts thereof for each of the low molecular weight PTFEs (1) to (5) are the same as those described above for the low molecular weight PTFE obtainable by the production method of the disclosure.
The low molecular weight PTFEs (1) to (5) not only contain a significantly small amount of perfluorocarboxylic acids, including perfluorooctanoic acid, and salts thereof, but also are less likely to generate perfluorocarboxylic acids, including perfluorooctanoic acid, and salts thereof even by heating in the presence of oxygen when they are applied to their use, for example during processing. The low molecular weight PTFEs (1) to (5) have excellent physical properties no inferior to those of conventionally known low molecular weight PTFE, can be used in the same manner as for conventionally known low molecular weight PTFE, and can be applied to the same uses.
The number of carboxyl groups at ends of the molecular chain in the low molecular weight PTFE is preferably 5 or less per $10^6$ carbon atoms in the main chain. The number of carboxyl groups is more preferably 4 or less, still more preferably 3 or less, per $10^6$ carbon atoms in the main chain. The lower limit thereof may be, but is not limited to, a value lower than the detection limit. The carboxyl groups are generated at ends of the molecular chain of the low molecular weight PTFE by, for example, irradiation of the high molecular weight PTFE in the presence of oxygen.
The number of carboxyl groups is a value determined by the following method. The detection limit of this measurement method is 0.5.

(Measurement method)

The following measurement is performed in conformity with the method of analyzing end groups described in

JP H04-20507 A.

Low molecular weight PTFE powder is pre-formed with a hand press, so that a film having a thickness of 0.1 to 1.0 mm is prepared. The resulting film is subjected to infrared absorption spectrum analysis. Infrared absorption spectrum analysis is also performed on PTFE with completely fluorinated ends, which is produced by contacting the PTFE with fluorine gas. Based on the difference spectrum therebetween, the number of end carboxyl groups is calculated by the following formula.

$$\text{Number of end carboxyl groups (per } 10^6 \text{ carbon atoms)} = (l \times K)/t$$

1: absorbance
K: correction coefficient
t: film thickness (mm)

The absorption frequency and correction coefficient of the carboxyl group are respectively set to about 3560 $cm^{-1}$ and 440.

The low molecular weight PTFE also has smaller amounts of functional groups other than the carboxyl group that may be generated by irradiation in the presence of oxygen or reactions of radicals generated by the irradiation with oxygen. Examples of the functional groups other than the carboxyl group include an acid fluoride group (-COF) at a molecular-chain end and a carbonyl group (-CO-) in the molecular chain.

The low molecular weight PTFE preferably has an absorbance corresponding to the acid fluoride groups at molecular-chain ends of 0.025 or lower, more preferably 0.020 or lower. The lower limit may be, but is not limited to, a value lower than the detection limit.

The absorbance corresponding to the carbonyl groups in the molecular chain is preferably 0.020 or lower, more preferably 0.010 or lower. The lower limit may be, but is not limited to, a value lower than the detection limit.

The absorbance is a value determined in conformity with the method of analyzing end groups described in JP H04-20507 A.

The absorption frequency of the acid fluoride group is around 1880 $cm^{-1}$ and the absorption frequency of the carbonyl group is around 1810 $cm^{-1}$.

The low molecular weight PTFE may contain, at ends of the molecular chain, unstable end groups derived from the chemical structure of a polymerization initiator or chain-transfer agent used in the polymerization reaction for the high molecular weight PTFE. Examples of the unstable end groups include, but are not limited to, $-CH_2OH$, -COOH, and $-COOCH_3$.

The low molecular weight PTFE may be one having undergone stabilization of the unstable end groups. The unstable end groups may be stabilized by any method, such as a method of exposing the unstable end groups to fluorine-containing gas to convert the ends into trifluoromethyl groups ($-CF_3$), for example.

The low molecular weight PTFE may also contain amidated ends. The end amidation may be performed by any method, such as a method of bringing fluorocarbonyl groups (-COF) obtained by exposure to fluorine-containing gas into contact with ammonia gas, as disclosed in JP H04-20507 A, for example.

The low molecular weight PTFE with stabilization or end amidation of the unstable end groups as described above can be well compatible with opposite materials and have improved dispersibility when used as an additive for opposite materials such as coating materials, greases, cosmetics, plating solutions, toners, and plastics.

The PTFE to be irradiated may be a homo-PTFE consisting only of a tetrafluoroethylene (TFE) unit or may be a modified PTFE containing a TFE unit and a modifying monomer unit based on a modifying monomer copolymerizable with TFE. In the production method of the disclosure, the composition of the polymer is not changed. Thus, the low molecular weight PTFE has the composition as it is of the PTFE to be irradiated.

The modified PTFE preferably contains the modifying monomer unit in an amount of 0.001 to 1% by mass, more preferably 0.01% by mass or more, while more preferably 0.5% by mass or less, still more preferably 0.1% by mass or less, of all monomer units. The term "modifying monomer unit" herein means a moiety that is part of the molecular structure of the modified PTFE and is derived from a modifying monomer. The term "all monomer units" herein means all moieties derived from any monomer in the molecular structure of the modified PTFE. The amount of the modifying monomer unit can be determined by a known method such as Fourier transform infrared spectroscopy (FT-IR) .

The modifying monomer may be any one copolymerizable with TFE, and examples thereof include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ether; perfluoroalkylethylenes; and ethylene. One modifying monomer may be used, or multiple modifying monomers may be used.

Examples of the perfluorovinyl ether include, but are not limited to, unsaturated perfluoro compounds represented by the following formula (1):

$$CF_2=CF\text{-}ORf \qquad (1)$$

(wherein Rf is a perfluoro organic group). The "perfluoro organic group" herein means an organic group in which all hydrogen atoms bonded to any carbon atom are replaced by fluorine atoms. The perfluoro organic group may contain ether oxygen.

Examples of the perfluorovinyl ether include perfluoro(alkyl vinyl ethers) (PAVEs) represented by the formula (1) in which Rf is a C1-C10 perfluoroalkyl group. The perfluoroalkyl group preferably contains 1 to 5 carbon atoms.

Examples of the perfluoroalkyl group in the PAVE include perfluoromethyl, perfluoroethyl, perfluoropropyl, perfluorobutyl, perfluoropentyl, and perfluorohexyl groups. Preferred is perfluoro(propyl vinyl ether) (PPVE) in which the perfluoroalkyl group is a perfluoropropyl group.

Examples of the perfluorovinyl ether include

those represented by the formula (1) in which Rf is a C4-C9 perfluoro(alkoxyalkyl) group;
those in which Rf is a group represented by the following formula:

[Chem. 1]

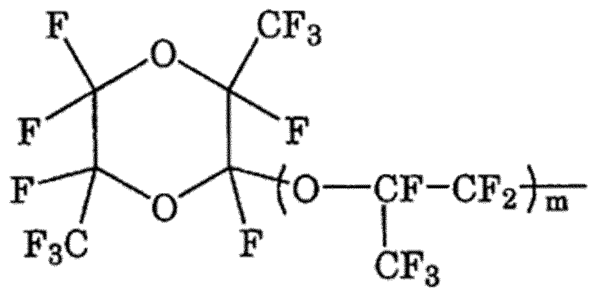

wherein m is 0 or an integer of 1 to 4; and
those in which Rf is a group represented by the following formula:

[Chem. 2]

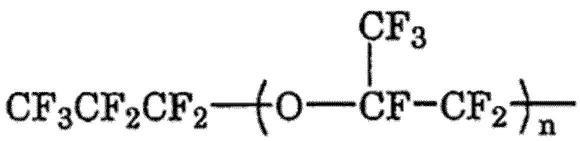

wherein n is an integer of 1 to 4.

Examples of the perfluoroalkylethylenes include, but are not limited to, (perfluorobutyl)ethylene (PFBE), (perfluorohexyl)ethylene, and (perfluorooctyl)ethylene.

The modifying monomer in the modified PTFE preferably includes at least one selected from the group consisting of HFP, CTFE, VDF, PPVE, PFBE, and ethylene, more preferably at least one selected from the group consisting of HFP and CTFE.

The low molecular weight PTFE can suitably be used as a molding material, an ink, a cosmetic, a coating material, a grease, a component for office automation devices, an additive for modifying toners, an organic photoconductor material for copiers, and an additive for plating solutions, for example. Examples of the molding material include engineering plastics such as polyoxybenzoyl polyester, polyimide, polyamide, polyamide-imide, polyacetal, polycarbonate, and polyphenylene sulfide. The low molecular weight PTFE is particularly suitable as a thickening agent for greases.

The low molecular weight PTFE can suitably be used as an additive for molding materials for improving the non-stickiness and sliding properties of rollers of copiers, for improving the texture of molded articles of engineering plastics, such as surface sheets of furniture, dashboards of automobiles, and covers of home appliances, and for improving the lubricity and abrasion resistance of machine elements generating mechanical friction, such as light-load

bearings, gears, cams, buttons of push-button telephones, movie projectors, camera components, and sliding materials, and as a processing aid for engineering plastics, for example.

The low molecular weight PTFE can be used as an additive for coating materials for the purpose of improving the lubricity of varnish and paint. The low molecular weight PTFE can be used as an additive for cosmetics for the purpose of improving the lubricity of cosmetics such as foundation.

The low molecular weight PTFE can also be suitably used for improving the oil- or water-repellency of wax and for improving the lubricity of greases and toners.

The low molecular weight PTFE can be used as an electrode binder of secondary batteries and fuel cells, a hardness adjuster for electrode binders, and a water-repellent for electrode surfaces.

The low molecular weight PTFE may be combined with a lubricant to provide grease. The grease is characterized by containing the low molecular weight PTFE and a lubricant. Thus, the low molecular weight PTFE is uniformly and stably dispersed in the lubricant and the grease exhibits excellent performance such as load resistance, electric insulation, and low moisture absorption.

The lubricant (base oil) may be either mineral oil or synthetic oil. Examples of the lubricant (base oil) include paraffinic or naphthenic mineral oils, and synthetic oils such as synthetic hydrocarbon oils, ester oils, fluorine oils, and silicone oils. In terms of heat resistance, fluorine oils are preferred. Examples of the fluorine oils include perfluoropolyether oil and polychlorotrifluoroethylene with a low polymerization degree. The polychlorotrifluoroethylene with a low polymerization degree may have a weight average molecular weight of 500 to 1200.

The grease may further contain a thickening agent. Examples of the thickening agent include metal soaps, composite metal soaps, bentonite, phthalocyanin, silica gel, urea compounds, urea-urethane compounds, urethane compounds, and imide compounds. Examples of the metal soaps include sodium soap, calcium soap, aluminum soap, and lithium soap. Examples of the urea compounds, urea-urethane compounds, and urethane compounds include diurea compounds, triurea compounds, tetraurea compounds, other polyurea compounds, urea-urethane compounds, diurethane compounds, and mixtures thereof.

The grease preferably contains the low molecular weight PTFE in an amount of 0.1 to 60% by mass, more preferably 0.5% by mass or more, still more preferably 5% by mass or more, while more preferably 50% by mass or less. A grease containing too large an amount of the low molecular weight PTFE may be too hard to exert sufficient lubricity. A grease containing too small an amount of the low molecular weight PTFE may fail to exert the sealability.

The grease may also contain any of additives such as solid lubricants, extreme pressure agents, antioxidants, oilness agents, anticorrosives, viscosity index improvers, and detergent dispersants.

The disclosure also relates to a composition containing:

low molecular weight polytetrafluoroethylene having a melt viscosity at 380°C of $1.0 \times 10^2$ to $7.0 \times 10^5$ Pa·s; and a substance capable of generating a free hydrogen atom,
wherein an amount of perfluorooctanoic acid and salts thereof is less than 25 ppb by mass.

The composition of the disclosure is a novel low molecular weight PTFE composition containing a small amount of perfluorooctanoic acid and salts thereof.

The monomer composition of the low molecular weight PTFE in the composition of the disclosure and a preferred melt viscosity are the same as those described above for the low molecular weight PTFE obtainable by the production method of the disclosure.

The low molecular weight PTFE in the composition of the disclosure may contain at least one selected from the group consisting of a hydrogen-atom-containing molecular structure and a double-bond-containing molecular chain in the molecule. The hydrogen-atom-containing molecular structure and the double-bond-containing molecular chain are as described above.

The low molecular weight PTFE in the composition of the disclosure may have the same ESR peaks (in a vacuum or in the air), molecular structures, and standard value as those of the aforementioned low molecular weight PTFEs (1) to (5). These peaks, molecular structures, and standard value are as described above.

Examples of the substance capable of generating a free hydrogen atom in the composition of the disclosure include the same ones as the substances capable of generating a free hydrogen atom to be used in the step (1) in the production method of the disclosure.

The substance capable of generating a free hydrogen atom in the composition of the disclosure may be at least partially decomposed or crosslinked, and may be at least partially decomposed or crosslinked by radiation.

The substance capable of generating a free hydrogen atom in the composition of the disclosure may be in any form.

The substance capable of generating a free hydrogen atom may be contained in the composition of the disclosure in an amount relative to the low molecular weight PTFE of preferably 0.0001 to 1000% by mass, more preferably 1% by mass or more, still more preferably 2% by mass or more, particularly preferably 10% by mass or more, while more

preferably 150% by mass or less, still more preferably 100% by mass or less, further preferably 50% by mass or less, particularly preferably 25% by mass or less.

In the case where the substance capable of generating a free hydrogen atom is a high molecular weight compound (molecular weight: 1000 or higher), the amount thereof In in the composition of the disclosure is preferably 0.1 to 1000% by mass, more preferably 1% by mass or more, still more preferably 5% by mass or more, particularly preferably 10% by mass or more, while more preferably 100% by mass or less, still more preferably 50% by mass or less, particularly preferably 25% by mass or less, relative to the low molecular weight PTFE.

In the case where the substance capable of generating a free hydrogen atom is a low molecular weight compound (molecular weight: lower than 1000), the amount thereof in the composition of the disclosure is preferably 0.0001 to 1000% by mass, more preferably 0.001% by mass or more, still more preferably 0.01% by mass or more, particularly preferably 0.1% by mass or more, while more preferably 100% by mass or less, still more preferably 50% by mass or less, particularly preferably 10% by mass or less, relative to the low molecular weight PTFE.

In the composition of the disclosure, the amount of perfluorooctanoic acid and salts thereof is less than 25 ppb by mass. The amount of perfluorooctanoic acid and salts thereof is preferably 20 ppb by mass or less, more preferably 15 ppb by mass or less, still more preferably 10 ppb by mass or less, further preferably 5 ppb by mass or less, particularly preferably less than 5 ppb by mass. The lower limit of the amount may be, but is not limited to, a value lower than the detection limit, or may be 0.001 ppb by mass or 1 ppb by mass.

The amount of perfluorooctanoic acid and salts thereof can be determined by liquid chromatography.

In the composition of the disclosure, the total amount of C4-C14 perfluorocarboxylic acids and salts thereof may be 50 ppb by mass or less, preferably less than 25 ppb by mass, more preferably 20 ppb by mass or less, still more preferably 15 ppb by mass or less, further preferably 10 ppb by mass or less, particularly preferably 5 ppb by mass or less, most preferably less than 5 ppb by mass. The lower limit thereof may be, but is not limited to, a value lower than the detection limit, and may be 0.001 ppb by mass or 1 ppb by mass.

For the composition of the disclosure that is produced through the aforementioned step (2), the combined step (A), the combined step (C), the step (X), or the step (Y2), the total amount of the C4-C14 perfluorocarboxylic acids and salts thereof is preferably within the above range after the step (2), the combined step (A), the combined step (C), the step (X), or the step (Y2), and is more preferably within the above range after additional heating (e.g., heating during processing).

The amount of the perfluorocarboxylic acids and salts thereof can be determined by liquid chromatography.

In the composition of the disclosure, the total amount of C9-C14 perfluorocarboxylic acids and salts thereof is also preferably within the above range.

In the composition of the disclosure, the amount of perfluorooctanoic acid and salts thereof determined in accordance with the aforementioned heating and determining conditions A may be less than 100 ppb by mass, may be less than 50 ppb by mass, or may be less than 25 ppb by mass, preferably 20 ppb by mass or less, more preferably 15 ppb by mass or less, still more preferably 10 ppb by mass or less, further preferably 5 ppb by mass or less, particularly preferably less than 5 ppb by mass. The lower limit thereof may be, but is not limited to, a value lower than the detection limit, and may be 0.001 ppb by mass or 1 ppb by mass.

The composition in which the amount of perfluorooctanoic acid and salts thereof determined by the heating and determining conditions A is within the above range is less likely to generate perfluorooctanoic acid and salts thereof even by heating in the presence of oxygen when the composition is applied to a variety of uses, for example during processing.

In the composition of the disclosure, the total amount of C9-C14 perfluorocarboxylic acids and salts thereof determined in accordance with the aforementioned heating and determining conditions B may be less than 100 ppb by mass or may be less than 50 ppb by mass, preferably less than 25 ppb by mass, more preferably 20 ppb by mass or less, still more preferably 15 ppb by mass or less, further preferably 10 ppb by mass or less, particularly preferably 5 ppb by mass or less, most preferably less than 5 ppb by mass. The lower limit thereof may be, but is not limited to, a value lower than the detection limit, and may be 0.001 ppb by mass or 1 ppb by mass.

The composition in which the amount of the perfluorocarboxylic acids and salts thereof determined by the heating and determining conditions B is within the above range is less likely to generate the perfluorocarboxylic acids and salts thereof even by heating in the presence of oxygen when the composition is applied to a variety of uses, for example during processing.

The composition of the disclosure can be produced by the aforementioned production method of the disclosure, for example.

The composition of the disclosure may be applied to the same uses as those of the low molecular weight PTFE obtainable by the aforementioned production method of the disclosure. In particular, the composition can be suitably applied to an additive for a molding material. In a preferred case where the molding material is the same type of substance as the substance capable of generating a free hydrogen atom, the composition of the disclosure can be added as it is.

If necessary, the substance capable of generating a free hydrogen atom may be removed from the composition

of the disclosure before application to its use.

The low molecular weight PTFE contained in the composition of the disclosure has excellent physical properties no inferior to those of conventionally known low molecular weight PTFE, can be used in the same manner as for conventionally known low molecular weight PTFE, and can be applied to the same uses.

EXAMPLES

The disclosure is more specifically described below with reference to examples. Still, the disclosure is not intended to be limited to the examples.

The parameters in the examples were determined by the following methods.

Melt viscosity

The melt viscosity was determined by heating a 2-g sample at 380°C for five minutes in advance and then keeping the sample at this temperature under a load of 0.7 MPa using a flow tester (available from Shimadzu Corp.) and a 2φ-8L die in conformity with ASTM D1238.

Amount of perfluorooctanoic acid and salts thereof (PFOA)

The amount of perfluorooctanoic acid and salts thereof was measured using a liquid chromatography-mass spectrometer (LC-MS ACQUITY UPLC/TQD, available from Waters). First, 1 g of measurement powder was mixed with 5 mL of acetonitrile and this mixture was sonicated for 60 minutes, so that perfluorooctanoic acid was extracted. The liquid phase obtained was analyzed by multiple reaction monitoring (MRM). Acetonitrile (A) and an aqueous ammonium acetate solution (20 mmol/L) (B) were delivered as mobile phases at a concentration gradient (A/B = 40/60 for 2 min and 80/20 for 1 min). A separation column (ACQUITY UPLC BEH C18 1.7 μm) was used at a column temperature of 40°C and an injection volume of 5 μL. Electrospray ionization (ESI) in a negative mode was used for ionization. The cone voltage was set to 25 V. The ratio of the molecular weight of precursor ions to the molecular weight of product ions was measured to be 413/369. The amount of perfluorooctanoic acid and salts thereof was calculated by the external standard method. The detection limit of this measurement is 5 ppb by mass.

Amount of PFOA after re-heating in the air

A 50-cc stainless steel cylindrical airtight container was charged with 2 to 20 g of a sample in the air, and then capped and heated at 150°C for 18 hours.

Using 1 g of the sample heated, the amount of PFOA was determined by the same method as described above.

Amount of C4-C14 perfluorocarboxylic acids and salts thereof (PFC)

The amount of C4-C14 perfluorocarboxylic acids and salts thereof was measured using a liquid chromatography-mass spectrometer (LC-MS ACQUITY UPLC/TQD, available from Waters). Using 1 g of a measurement sample, perfluorooctanoic acid and salts thereof were extracted as described above, and a liquid phase obtained was analyzed by MRM. The measurement conditions were based on the measurement conditions for perfluorooctanoic acid, but the concentration gradient was changed (A/B = 10/90 for 1.5 min and 90/10 for 3.5 min). The ratio of the molecular weight of precursor ions to the molecular weight of product ions was measured to be 213/169 for perfluorobtanoic acid (C4), 263/219 for perfluoropentanoic acid (C5), 313/269 for perfluorohexanoic acid (C6), 363/319 for perfluoroheptanoic acid (C7), 413/369 for perfluorooctanoic acid (C8), 463/419 for perfluorononanoic acid (C9), 513/469 for perfluorodecanoic acid (C10), 563/519 for perfluoroundecanoic acid (C11), 613/569 for perfluorododecanoic acid (C12), 663/619 for perfluorotridecanoic acid (C13), and 713/669 for perfluorotetradecanoic acid (C14).

The total amount of C4-C14 perfluorocarboxylic acids and salts thereof was calculated from the amount (X) of perfluorooctanoic acid obtained in the above measurement by the following formula. The detection limit of this measurement is 5 ppb by mass.

$$(A_{C4} + A_{C5} + A_{C6} + A_{C7} + A_{C8} + A_{C9} + A_{C10} + A_{C11} + A_{C12} + A_{C13} + A_{C14})/A_{C8} \times X$$

$A_{C4}$: peak area of perfluorobutanoic acid
$A_{C5}$: peak area of perfluoropentanoic acid

$A_{C6}$: peak area of perfluorohexanoic acid
$A_{C7}$: peak area of perfluoroheptanoic acid
$A_{C8}$: peak area of perfluorooctanoic acid
$A_{C9}$: peak area of perfluorononanoic acid
$A_{C10}$: peak area of perfluorodecanoic acid
$A_{C11}$: peak area of perfluoroundecanoic acid
$A_{C12}$: peak area of perfluorododecanoic acid
$A_{C13}$: peak area of perfluorotridecanoic acid
$A_{C14}$: peak area of perfluorotetradecanoic acid
X: amount of perfluorooctanoic acid calculated from the MRM measurement result by the external standard method

The amount of C9-C14 perfluorocarboxylic acids and salts thereof were also measured as described above.

Amount of PFC after re-heating in the air

A 50-cc stainless steel cylindrical airtight container was charged with 2 to 20 g of a sample in the air, and then capped and heated at 150°C for 18 hours.
Using 1 g of the sample heated, the amount of PFC was determined by the same method as described above.

Standard value of absorbance corresponding to functional group derived from hydrogen-attached form

For a measurement powder and a powder obtained in the same manner as for the measurement powder except that the irradiation was performed in the absence of the substance capable of generating a free hydrogen atom, the absorbances were determined by the following measurement method and the standard value was calculated by the following formula.
Standard value = (absorbance of functional group derived from hydrogen-attached form of measurement powder)/(absorbance of functional group derived from hydrogen-attached form of powder obtained by irradiation in the absence of substance capable of generating free hydrogen atom)

(Measurement method)

The absorbance corresponding to the functional groups derived from a hydrogen-attached form was determined in conformity with the method of analyzing end groups described in JP H04-20507 A.
Low molecular weight PTFE powder was pre-formed with a hand press, so that a film having a thickness of 0.1 to 1.0 mm was prepared. The resulting film was subjected to infrared absorption spectrum analysis. Infrared absorption spectrum analysis was also performed on PTFE with the functional groups in the molecule completely fluorinated and removed, which was produced by contacting the PTFE with fluorine gas. Based on the difference spectrum therebetween, the height of the absorbance corresponding to the functional groups derived from the hydrogen-attached form in the PTFE molecule was calculated.
The resulting difference spectrum was expanded within a range of 3000 $cm^{-1}$ to 4000 $cm^{-1}$ and a base line was drawn within a range of 3300 $cm^{-1}$ to 3970 $cm^{-1}$. The height of the peak top at 3556 $cm^{-1}$ was measured, whereby the absolute value of the absorbance corresponding to the functional groups derived from the hydrogen-attached form in the PTFE molecule was determined.

Oxygen concentration in airtight container

The oxygen concentration was determined by analyzing a gaseous layer inside the airtight container by gas chromatography. Further, the color tone of oxygen indicator enclosed in the airtight container was observed to change from purple to pink, which demonstrated that the oxygen concentration was less than 2.0 vol% (the absence of oxygen). An oxygen concentration meter was also used to confirm that the oxygen concentration was less than 2.0 vol%.
The same procedure was performed to confirm that the oxygen concentration was less than 0.1 vol%.

Example 1

A 20-g portion of a high molecular weight PTFE fine powder (standard specific gravity measured in conformity with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 20-g portion of polyethylene pellets (Harmorex LLDPE available from Japan Polyethylene Corp.) was weighed similarly

using a weight balance and put into the barrier nylon bag. The barrier nylon bag was partitioned around the central portion to prevent contact between the high molecular weight PTFE and the polyethylene pellets, while the gas alone was allowed to circulate. A piece of deoxidant (A-500HS available from As One Corp.) was also put into each of the section of the high molecular weight PTFE and the section of the polyethylene pellets. The pressure inside the bag was reduced (20 torr) using a vacuum sealer (V-300-10W available from Fujiimpulse Co., Ltd.) and the bag was sealed by heat sealing. The absence of oxygen inside the bag was confirmed using an oxygen indicator placed in the bag in advance, and then the barrier nylon bag was irradiated with 400 kGy of $\gamma$-rays. The irradiation conditions include an average dose rate at the center of the sample of 6.25 kGy/h and a room temperature of 25°C in the irradiation equipment.

Without opening, the bag was left to stand at a room temperature of 20°C to 28°C for 15 days (naturally deactivating process). Then, the bag remaining closed was heated at 80°C for 18 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 1.

Example 2

In the same manner as in Example 1, the bag was irradiated with $\gamma$-rays. The bag was then opened and remained open for one day in the air. The PTFE alone was put into a 50-mL stainless steel cylindrical autoclave, followed by a piece of fresh deoxidant (A-500HS available from As One Corp.), and the bag was sealed. Introduction of nitrogen gas into the autoclave and evacuation using an oil rotary pump were repeated three times and the pressure inside the autoclave was reduced (2.7 torr). The workpiece was heated at 80°C for 18 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 1.

Example 3

A low molecular weight PTFE powder was obtained as in Example 2, except that no deoxidant was put into the autoclave.

The physical properties of the resulting low molecular weight PTFE powder were determined. The results are shown in Table 1.

Comparative Example 1

A low molecular weight PTFE powder was obtained as in Example 1, except that no polyethylene pellets were put into the barrier nylon bag.

The physical properties of the resulting low molecular weight PTFE powder were determined. The results are shown in Table 1.

Comparative Example 2

A low molecular weight PTFE powder was obtained as in Example 2, except that no polyethylene pellets were put into the barrier nylon bag.

The physical properties of the resulting low molecular weight PTFE powder were determined. The results are shown in Table 1.

Comparative Example 3

A low molecular weight PTFE powder was obtained as in Example 3, except that no polyethylene pellets were put into the barrier nylon bag.

The physical properties of the resulting low molecular weight PTFE powder were determined. The results are shown in Table 1.

[Table 1]

| | High molecular weight PTFE | PE pellets | | Container | γ-Ray irradiation | | | Radical deactivation Naturally deactivating process | | | Air release | | Radical deactivation Accelerated deactivating process | | | | Amount of PFOA | | Melt viscosity |
|---|---|---|---|---|---|---|---|---|---|---|---|---|---|---|---|---|---|---|---|
| | | Amount added | Percentage added | | Deoxidant | Oxygen concentration | Absorbed dose | Oxygen concentration | Temperature | Duration | Temperature | Duration | Oxygen concentration | Temperature | Duration | Deoxidant | After acceleratedly deactivating process | After re-heating in the air | |
| | (g) | (g) | (mass%) | | (pcs) | (vol%) | (kGy) | (vol%) | (°C) | (days) | (°C) | (days) | (vol%) | (°C) | (h) | (pcs) | (mass ppb) | (mass ppb) | ($\times 10^3$ Pa·s) |
| Example 1 | 20 | 20 | 100 | Barrier nylon | 2 | < 0.1 | 400 | < 0.1 | 20 to 28 | 15 | No air release | | < 0.1 | 80 | 18 | 2 | < 5 | < 5 | 50 |
| Example 2 | 20 | 20 | 100 | Barrier nylon | 2 | < 0.1 | 400 | < 0.1 | 20 to 28 | 15 | 20 to 28 | 1 | < 0.1 | 80 | 18 | 1 | < 5 | < 5 | 70 |
| Example 3 | 20 | 20 | 100 | Barrier nylon | 2 | < 0.1 | 400 | < 0.1 | 20 to 28 | 15 | 20 to 28 | 1 | < 0.1 | 80 | 18 | 0 | < 5 | < 5 | 76 |
| Comparative Example 1 | 20 | 0 | 0 | Barrier nylon | 2 | < 0.1 | 400 | < 0.1 | 20 to 28 | 15 | No air release | | < 0.1 | 80 | 18 | 2 | < 5 | 10 | 58 |
| Comparative Example 2 | 20 | 0 | 0 | Barrier nylon | 2 | < 0.1 | 400 | < 0.1 | 20 to 28 | 15 | 20 to 28 | 1 | < 0.1 | 80 | 18 | 1 | < 5 | 13 | 59 |
| Comparative Example 3 | 20 | 0 | 0 | Barrier nylon | 2 | < 0.1 | 400 | < 0.1 | 20 to 28 | 15 | 20 to 28 | 1 | < 0.1 | 80 | 18 | 0 | < 5 | 15 | 74 |

Example 4

A 30-g portion of a high molecular weight PTFE fine powder (standard specific gravity measured in conformity

with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 15-g portion of polyethylene pellets (Harmorex LLDPE available from Japan Polyethylene Corp.) was weighed similarly using a weight balance and put into the barrier nylon bag. The high molecular weight PTFE and the polyethylene pellets were allowed to mix in the barrier nylon bag. A bag of deoxidant (A-500HS available from As One Corp.) was also put thereinto. The pressure inside the bag was reduced (20 torr) using a vacuum sealer (V-300-10W available from Fujiimpulse Co., Ltd.) and the bag was sealed by heat sealing. The absence of oxygen inside the bag was confirmed using an oxygen indicator placed in the bag in advance, and then the barrier nylon bag was irradiated with 400 kGy of $\gamma$-rays. The irradiation conditions include an average dose rate at the center of the sample of 6.25 kGy/h and a room temperature of 25°C in the irradiation equipment.

Without opening, the bag was left to stand at a room temperature of 20°C to 28°C for 23 days (naturally deactivating process). Then, the bag remaining closed was heated at 80°C for 18 hours, 36 hours, 72 hours, or 168 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 2.

Comparative Example 4

A low molecular weight PTFE powder was obtained as in Example 4, except that no polyethylene pellets were put into the barrier nylon bag.

The physical properties of the resulting low molecular weight PTFE powder were determined. The results are shown in Table 2.

[Table 2]

| | Irradiation | | | | Radical deactivation | | Air release | Radical deactivation | | Amount of PFOA | | Melt viscosity | |
|---|---|---|---|---|---|---|---|---|---|---|---|---|---|
| | High molecular weight PTFE | PE pellets | Radiation | | Naturally deactivating process | | | Acceleratedly deactivating process | | After acceleratedly deactivating process | After reheating in the air | | Standard value of abs. of difference spectrum at 3556 $cm^{-1}$ |
| | Amount added (g) | Percentage added (mass%) | Type | Absorbed dose (kGy) | Temperature (°C) | Duration (days) | Duration (days) | Temperature (°C) | Duration (h) | (mass ppb) | (mass ppb) | ($\times 10^3$ Pa·s) | (-) |
| Example 4 | 30 | 50 | γ-Rays | 400 | 20 to 28 | 23 | None | 80 | 18 | <5 | 5 | 49 | 3.01 |
| | 30 | 50 | γ-Rays | 400 | 20 to 28 | 23 | None | 80 | 36 | <5 | 8 | As above | As above |
| | 30 | 50 | γ-Rays | 400 | 20 to 28 | 23 | None | 80 | 72 | <5 | 5 | As above | As above |
| | 30 | 50 | γ-Rays | 400 | 20 to 28 | 23 | None | 80 | 168 | <5 | 8 | As above | As above |
| Comparative Example 4 | 30 | 0 | γ-Rays | 400 | 20 to 28 | 2 | None | 80 | 18 | <5 | 21 | 46 | 1.00 |
| | 30 | 0 | γ-Rays | 400 | 20 to 28 | 2 | None | 80 | 36 | <5 | 22 | As above | As above |
| | 30 | 0 | γ-Rays | 400 | 20 to 28 | 2 | None | 80 | 72 | <5 | 11 | As above | As above |
| | 30 | 0 | γ-Rays | 400 | 20 to 28 | 2 | None | 80 | 168 | <5 | 14 | As above | As above |

Example 5-1

A 30-g portion of a high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 0.3-g, 1.5-g, 3.0-g, 7.5-g, or 15-g portion of polyethylene pellets (Harmorex LLDPE available from Japan Polyethylene Corp.) was weighed similarly using a weight balance and put into the barrier nylon bag. The high molecular weight PTFE and the polyethylene pellets were allowed to mix in the barrier nylon bag. A bag of deoxidant (A-500HS available from As One Corp.) was also put thereinto. The pressure inside the bag was reduced (20 torr) using a vacuum sealer (V-300-10W available from Fujiimpulse Co., Ltd.) and the bag was sealed by heat sealing. The absence of oxygen inside the bag was confirmed using an oxygen indicator placed in the bag in advance, and then the barrier nylon bag was irradiated with 400 kGy of $\gamma$-rays. The irradiation conditions include an average dose rate at the center of the sample of 6.25 kGy/h and a room temperature of 25°C in the irradiation equipment. Without opening, the bag was left to stand at a room temperature of 20°C to 28°C for 23 days (naturally deactivating process). Then, the bag remaining closed was heated at 80°C for 18 hours using a forced convection oven (DRX620DA available from Advantec Co., Ltd.) (acceleratedly deactivating process), whereby a low molecular weight PTFE powder was obtained.
The physical properties of the resulting low molecular weight PTFE powder were determined. The results are shown in Table 3.

Example 5-2

A low molecular weight PTFE powder was obtained as in Example 5-1, except that a high molecular weight PTFE fine powder (2) (standard specific gravity measured in conformity with ASTM D4895: 2.175, modified polymer 1, concentrations of PFC and PFOA: lower than the detection limit) was used. The physical properties of the resulting low molecular weight PTFE powder were determined. The results are shown in Table 3.

Example 5-3

A low molecular weight PTFE powder was obtained as in Example 5-1, except that a high molecular weight PTFE fine powder (3) (standard specific gravity measured in conformity with ASTM D4895: 2.168, modified polymer 2, concentrations of PFC and PFOA: lower than the detection limit) was used. The physical properties of the resulting low molecular weight PTFE powder were determined. The results are shown in Table 3.

Example 5-4

A low molecular weight PTFE powder was obtained as in Example 5-1, except that a high molecular weight PTFE molding powder (4) (standard specific gravity measured in conformity with ASTM D4895: 2.160, homopolymer, concentrations of PFC and PFOA: lower than the detection limit) was used. The physical properties of the resulting low molecular weight PTFE powder were determined. The results are shown in Table 3.

Comparative Example 5-1

The same operations were performed as in Example 5-1, except that no polyethylene pellets (Harmorex LLDPE available from Japan Polyethylene Corp.) were added to a 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 3.

Comparative Example 5-2

The same operations were performed as in Example 5-2, except that no polyethylene pellets (Harmorex LLDPE available from Japan Polyethylene Corp.) were added to a 30-g portion of the high molecular weight PTFE fine powder (2) (standard specific gravity measured in conformity with ASTM D4895: 2.175, modified polymer 1, concentrations of PFC and PFOA: lower than the detection limit). The physical properties of the resulting low molecular weight PTFE powder were determined. The results are shown in Table 3.

Comparative Example 5-3

The same operations were performed as in Example 5-3, except that no polyethylene pellets (Harmorex LLDPE available from Japan Polyethylene Corp.) were added to a 30-g portion of the high molecular weight PTFE fine powder (3) (standard specific gravity measured in conformity with ASTM D4895: 2.168, modified polymer 2, concentrations of PFC and PFOA: lower than the detection limit). The physical properties of the resulting low molecular weight PTFE powder were determined. The results are shown in Table 3.

Comparative Example 5-4

The same operations were performed as in Example 5-4, except that no polyethylene pellets (Harmorex LLDPE available from Japan Polyethylene Corp.) were added to a 30-g portion of the high molecular weight PTFE molding powder (4) (standard specific gravity measured in conformity with ASTM D4895: 2.160, homopolymer, concentrations of PFC and PFOA: lower than the detection limit). The physical properties of the resulting low molecular weight PTFE powder were determined. The results are shown in Table 3.

[Table 3]

| | Irradiation | | | | Radical deactivation | | Air release | Radical deactivation | | Amount of PFOA | | Melt viscosity | Standard value of abs. of difference spectrum at 3556 $cm^{-1}$ |
|---|---|---|---|---|---|---|---|---|---|---|---|---|---|
| | High molecular weight PTFE | PE pellets | Radiation | | Naturally deactivating process | | | Acceleratedly deactivating process | | After acceleratedly deactivating process | After reheating in the air | | |
| | Amount added (g) | Percentage added (mass%) | Type | Absorbed dose (kGy) | Temperature (°C) | Duration (days) | Duration (days) | Temperature (°C) | Duration (h) | (mass ppb) | (mass ppb) | ($\times 10^3$ Pa·s) | (-) |
| Example 5-1 | 30 | 1 | γ-Rays | 400 | 20 to 28 | 23 | None | 80 | 18 | <5 | 11 | 45 | 1.1 |
| | 30 | 5 | γ-Rays | 400 | 20 to 28 | 23 | None | 80 | 18 | <5 | 9 | 42 | 1.1 |
| | 30 | 10 | γ-Rays | 400 | 20 to 28 | 23 | None | 80 | 18 | <5 | 6 | 58 | 2.2 |
| | 30 | 25 | γ-Rays | 400 | 20 to 28 | 23 | None | 80 | 18 | <5 | 7 | 41 | 2.6 |
| | 30 | 50 | γ-Rays | 400 | 20 to 28 | 23 | None | 80 | 18 | <5 | 5 | 49 | 3.0 |
| Example 5-2 | 30 | 5 | γ-Rays | 400 | 20 to 28 | 23 | None | 80 | 18 | <5 | 8 | 38 | 1.2 |
| | 30 | 10 | γ-Rays | 400 | 20 to 28 | 23 | None | 80 | 18 | <5 | 9 | 35 | 1.3 |
| | 30 | 25 | γ-Rays | 400 | 20 to 28 | 23 | None | 80 | 18 | <5 | 8 | 41 | 1.4 |
| | 30 | 50 | γ-Rays | 400 | 20 to 28 | 23 | None | 80 | 18 | <5 | 7 | 43 | 1.5 |
| Example 5-3 | 30 | 5 | γ-Rays | 400 | 20 to 28 | 23 | None | 80 | 18 | <5 | 7 | 12 | 1.3 |
| | 30 | 10 | γ-Rays | 400 | 20 to 28 | 23 | None | 80 | 18 | <5 | 5 | 23 | 2.6 |
| | 30 | 25 | γ-Rays | 400 | 20 to 28 | 23 | None | 80 | 18 | <5 | 9 | 19 | 2.8 |

(continued)

| | Irradiation | | | | Radical deactivation | | Air release | Radical deactivation | | Amount of PFOA | | Melt viscosity | |
|---|---|---|---|---|---|---|---|---|---|---|---|---|---|
| | High molecular weight PTFE | PE pellets | Radiation | | Naturally deactivating process | | | Acceleratedly deactivating process | | After acceleratedly deactivating process | After reheating in the air | | Standard value of abs. of difference spectrum at 3556 $cm^{-1}$ |
| | Amount added | Percentage added | Type | Absorbed dose | Temperature | Duration | Duration | Temperature | Duration | | | | |
| | (g) | (mass%) | | (kGy) | (°C) | (days) | (days) | (°C) | (h) | (mass ppb) | (mass ppb) | ($\times 10^3$ Pa·s) | (-) |
| | 30 | 50 | γ-Rays | 400 | 20 to 28 | 23 | None | 80 | 18 | <5 | 4 | 16 | 2.7 |
| Example 5-4 | 30 | 5 | γ-Rays | 400 | 20 to 28 | 23 | None | 80 | 18 | <5 | 11 | 63 | 1.2 |
| | 30 | 10 | γ-Rays | 400 | 20 to 28 | 23 | None | 80 | 18 | <5 | 5 | 51 | 2.2 |
| | 30 | 25 | γ-Rays | 400 | 20 to 28 | 23 | None | 80 | 18 | <5 | 7 | 59 | 2.8 |
| | 30 | 50 | γ-Rays | 400 | 20 to 28 | 23 | None | 80 | 18 | <5 | 8 | 57 | 3.2 |
| Comparative Example 5-1 | 30 | 0 | γ-Rays | 400 | 20 to 28 | 23 | None | 80 | 18 | <5 | 17 | 46 | 1.0 |
| Comparative Example 5-2 | 30 | 0 | γ-Rays | 400 | 20 to 28 | 23 | None | 80 | 18 | <5 | 12 | 18 | 1.0 |
| Comparative Example 5-3 | 30 | 0 | γ-Rays | 400 | 20 to 28 | 23 | None | 80 | 18 | <5 | 17 | 13 | 1.0 |
| Comparative Example 5-4 | 30 | 0 | γ-Rays | 400 | 20 to 28 | 23 | None | 80 | 18 | <5 | 14 | 52 | 1.0 |

Example 6-1

A 30-L aluminum bag (with polyethylene inner bag) was placed in an 18-L drum. A 0.2-kg portion of polyethylene pellets (Harmorex LLDPE available from Japan Polyethylene Corp.) weighed using a weight balance and 15 bags of deoxidant (A-500HS available from As One Corp.) were put on the bottom of the bag. A 2-kg portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit) was weighed using a weight balance and put into the aluminum bag. Another 0.2-kg portion of the polyethylene pellets and 10 bags of the deoxidant were placed thereon, and another 2-kg portion of the PTFE was further placed thereon. This procedure was repeated and thereby 8 kg of PTFE, 0.8 kg of polyethylene, and 50 bags of deoxidant in total were put into the bag. The inside of the bag was then evacuated using an oil rotary pump. The pressure inside the bag was reduced (2E-2 torr) and the bag was sealed by heat sealing. Each surface of the 18-L drum was irradiated with 179 kGy of $\gamma$-rays, with the total of 358 kGy. The irradiation conditions include an average dose rate at the center of the sample of 6.25 kGy/h and a room temperature of 25°C in the irradiation equipment. Without opening, the bag was left to stand at a room temperature of 20°C to 28°C for 18 days (naturally deactivating process). Then, the bag remaining closed was heated at 80°C for 96 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 4.

[Table 4]

| | Sampling site | Irradiation | | | | Radical deactivation | | Air release | Radical deactivation | | Amount of PFOA | | Melt viscosity | Standard value of abs. of difference spectrum at 3556 $cm^{-1}$ |
|---|---|---|---|---|---|---|---|---|---|---|---|---|---|---|
| | | High molecular weight PTFE | PE pellets | Radiation | | Naturally deactivating process | | | Acceleratedly deactivating process | | acceleratedly deactivating process | After reheating in the air | | |
| | | Amount added | Percentage added | Type | Absorbed dose | Temperature | Duration | Duration | Temperature | Duration | | | | |
| | | (kg) | (mass%) | | (kGy) | (°C) | (days) | (days) | (°C) | (h) | (mass ppb) | (mass ppb) | ($\times 10^3$ Pa·s) | (-) |
| Example 6-1 | Mddle front | 8 | 10 | γ-Rays | 358 | 20 to 28 | 18 | None | 80 | 96 | < 5 | < 5 | 74 | 3.0 |
| | Mddle center | 8 | 10 | γ-Rays | 358 | 20 to 28 | 18 | None | 80 | 96 | < 5 | < 5 | 73 | 2.0 |
| | Mddle back | 8 | 10 | γ-Rays | 358 | 20 to 28 | 18 | None | 80 | 96 | < 5 | < 5 | 72 | 2.5 |

Example 6-2

A 30-L aluminum bag (with polyethylene inner bag) was placed in an 18-L drum. A 0.5-kg portion of polyethylene pellets (Harmorex LLDPE available from Japan Polyethylene Corp.) weighed using a weight balance and 10 bags of deoxidant (A-500HS available from As One Corp.) were put on the bottom of the bag. A 1-kg portion of the high molecular weight PTFE fine powder (2) (standard specific gravity measured in conformity with ASTM D4895: 2.175, modified polymer 1, concentrations of PFC and PFOA: lower than the detection limit) was weighed using a weight balance and put into the aluminum bag. Another 0.5-kg portion of the polyethylene pellets and 10 bags of the deoxidant were placed thereon, and another 1-kg portion of the PTFE was further placed thereon. This procedure was repeated and thereby 6 kg of PTFE, 3 kg of polyethylene, and 50 bags of deoxidant in total were put into the bag. The inside of the bag was then evacuated using an oil rotary pump. The pressure inside the bag was reduced (2E-2 torr) and the bag was sealed by heat sealing. Each surface of the 18-L drum was irradiated with 200 kGy of $\gamma$-rays, with the total of 400 kGy. The irradiation conditions include an average dose rate at the center of the sample of 6.25 kGy/h and a room temperature of 25°C in the irradiation equipment. Without opening, the bag was left to stand at a room temperature of 20°C to 28°C for 2 days (naturally deactivating process). Then, the bag remaining closed was heated at 80°C for 36 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 5.

[Table 5]

| | Sampling site | Irradiation | | | | Radical deactivation | | Air release | Radical deactivation | | Amount of PFOA | | Melt viscosity | |
|---|---|---|---|---|---|---|---|---|---|---|---|---|---|---|
| | | High molecular weight PTFE | PE pellets | Radiation | | Naturally deactivating process | | | Acceleratedly deactivating process | | After acceleratedly deactivating process | After reheating in the air | | Standard value of abs. of difference spectrum at 3556 $cm^{-1}$ |
| | | Amount added | Percentage added | Type | Absorbed dose | Temperature | Duration | Duration | Temperature | Duration | | | | |
| | | (kg) | (mass%) | | (kGy) | (°C) | (days) | (days) | (°C) | (h) | (mass ppb) | (mass ppb) | ($\times 10^3$ Pa·s) | (-) |
| Example 6-2 | Mddle center | 6 | 50 | $\gamma$-Rays | 400 | 20 to 28 | 2 | None | 80 | 36 | <5 | 13 | 76 | 2.5 |

Example 7

A 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 15-g, 30-g, 45-g, or 60-g portion of polyethylene pellets (Harmorex LLDPE available from Japan Polyethylene Corp.) was weighed similarly using a weight balance and put into the barrier nylon bag. The high molecular weight PTFE and the polyethylene pellets were allowed to mix in the barrier nylon bag. A bag of deoxidant (A-500HS available from As One Corp.) was also put thereinto. The pressure inside the bag was reduced (20 torr) using a vacuum sealer (V-300-10W available from Fujiimpulse Co., Ltd.) and the bag was sealed by heat sealing. An oxygen indicator, which was placed in the bag in advance, was pink. The PTFE in the barrier nylon bag was uniformly thinly dispersed such that the thickness was not greater than the penetration depth of electrons, and then irradiated with 400 kGy of electron beams at 2 MV and 2 mA using a 2 MV electron accelerator (rated: 2 MV, 60 kW) available from Nissin Electric Co., Ltd. The irradiation was moving irradiation and the absorbed dose relative to the moving rate was 5 kGy per pass. The irradiation was started at room temperature and the temperature at completion of the irradiation was 50°C. Without opening, the bag was left to stand at a room temperature of 20°C to 28°C for 12 days (naturally deactivating process). Then, the bag remaining closed was heated at 80°C for 18 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 6.

Comparative Example 7

A low molecular weight PTFE powder was obtained as in Example 7, except that no polyethylene pellets (Harmorex LLDPE available from Japan Polyethylene Corp.) were added to a 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 6.

[Table 6]

| | Irradiation | | | | Radical deactivation | | Air release | Radical deactivation | | Amount of PFOA | | Melt viscosity | Standard value of abs. of difference spectrum at 3556 $cm^{-1}$ |
|---|---|---|---|---|---|---|---|---|---|---|---|---|---|
| | High molecular weight PTFE | PE pellets | Radiation | | Naturally deactivating process | | | Acceleratedly deactivating process | | After acceleratedly deactivating process | After reheating in the air | | |
| | Amount added | Percentage added | Type | Absorbed dose | Temperature | Duration | Duration | Temperature | Duration | | | | |
| | (g) | (mass%) | | (kGy) | (°C) | (days) | (days) | (°C) | (h) | (mass ppb) | (mass ppb) | ($\times 10^3$ Pa·s) | (-) |
| Example 7 | 30 | 50 | EB | 400 | 20 to 28 | 12 | None | 80 | 18 | <5 | 13 | 49 | 2.9 |
| | 30 | 100 | EB | 400 | 20 to 28 | 12 | None | 80 | 18 | <5 | 9 | 47 | 3.1 |
| | 30 | 150 | EB | 400 | 20 to 28 | 12 | None | 80 | 18 | <5 | 9 | 41 | 3.1 |
| | 30 | 200 | EB | 400 | 20 to 28 | 12 | None | 80 | 18 | <5 | 10 | 69 | 3.1 |
| Comparative Example 7 | 30 | 0 | EB | 400 | 20 to 28 | 12 | None | 80 | 18 | <5 | 25 | 23 | 1.0 |

Example 8

Aluminum trays having a length × width × height of 100 mm × 100 mm × 10 mm were each fed with a bag of deoxidant (A-500HS available from As One Corp.). Then, 2-g, 4-g, 8-g, 12-g, and 20-g portions of polyethylene pellets (Harmorex LLDPE available from Japan Polyethylene Corp.) were weighed using a weight balance and put into the respective trays. The high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit) was put thereon to the upper level of each tray. The whole weight was weighed using a weight balance and the amount of the high molecular weight PTFE fed was calculated, whereby the percentage of polyethylene added was determined. The workpiece was put into a barrier nylon bag. The pressure inside the bag was reduced (20 torr) using a vacuum sealer (V-300-10W available from Fujiimpulse Co., Ltd.) and the bag was sealed by heat sealing. An oxygen indicator, which was placed in the bag in advance, was pink. Using a 2 MV electron accelerator (rated: 2 MV, 60 kW) available from Nissin Electric Co., Ltd., irradiation with 400 kGy of electron beams was performed at 2 MV and 2 mA. The irradiation was moving irradiation and the absorbed dose relative to the moving rate was 5 kGy per pass. The irradiation was started at room temperature and the temperature at completion of the irradiation was 50°C. Without opening, the bag was left to stand at a room temperature of 20°C to 28°C for 5 days (naturally deactivating process). Then, the bag remaining closed was heated at 80°C for 24 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 7.

Comparative Example 8

A low molecular weight PTFE powder was obtained as in Example 8, except that no polyethylene pellets (Harmorex LLDPE available from Japan Polyethylene Corp.) were added to the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 7.

[Table 7]

| | Irradiation: High molecular weight PTFE Amount added | Irradiation: PE pellets Percentage added | Irradiation: Radiation Type | Irradiation: Radiation Absorbed dose | Radical deactivation Naturally deactivating process: Temperature | Radical deactivation Naturally deactivating process: Duration | Air release: Duration | Radical deactivation Acceleratedly deactivating process: Temperature | Radical deactivation Acceleratedly deactivating process: Duration |
|---|---|---|---|---|---|---|---|---|---|
| | (g) | (mass%) | | (kGy) | (°C) | (days) | (days) | (°C) | (h) |
| Example 8 | 29 | 7 | EB | 400 | 20 to 28 | 5 | None | 80 | 24 |
| | 30 | 13 | EB | 400 | 20 to 28 | 5 | None | 80 | 24 |
| | 25 | 32 | EB | 400 | 20 to 28 | 5 | None | 80 | 24 |
| | 27 | 45 | EB | 400 | 20 to 28 | 5 | None | 80 | 24 |
| | 20 | 101 | EB | 400 | 20 to 28 | 5 | None | 80 | 24 |
| Comparative Example 8 | 36 | 0 | EB | 400 | 20 to 28 | 5 | None | 80 | 24 |

| | Perfluorocarboxylic acids or salts thereof: After acceleratedly deactivating process | | | | | | | | | | | | | After re-heating in the air | | Melt viscosity | Standard value of abs. of difference spectrum at 3556 $cm^{-1}$ |
|---|---|---|---|---|---|---|---|---|---|---|---|---|---|---|---|---|---|
| | C4 | C5 | C6 | C7 | C8 | C9 | C10 | C11 | C12 | C13 | C14 | C9 to C14 total | C4 to C14 total | C8 | C9 to C14 total | | |
| | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | ($\times 10^3$ Pa·s) | (-) |
| Example 8 | < 5 | < 5 | < 5 | 8 | < 5 | < 5 | < 5 | < 5 | < 5 | < 5 | < 5 | < 5 | 8 | 9 | 8 | 23 | 1.4 |
| | < 5 | 5 | < 5 | 8 | < 5 | 5 | < 5 | < 5 | < 5 | < 5 | < 5 | 5 | 18 | 14 | 16 | 32 | 2.1 |
| | < 5 | 8 | < 5 | 11 | < 5 | < 5 | < 5 | < 5 | < 5 | < 5 | < 5 | < 5 | 19 | 22 | 20 | 43 | 2.0 |
| | < 5 | 10 | < 5 | 11 | < 5 | < 5 | < 5 | < 5 | < 5 | < 5 | < 5 | < 5 | 21 | 23 | 18 | 36 | 2.0 |
| | < 5 | 5 | < 5 | 10 | < 5 | < 5 | < 5 | < 5 | < 5 | < 5 | < 5 | < 5 | 15 | 17 | 21 | 58 | 2.0 |
| Comparative Example 8 | 5 | 6 | 8 | 11 | < 5 | < 5 | < 5 | < 5 | < 5 | < 5 | < 5 | < 5 | 30 | 41 | 24 | 15 | 1.0 |

Example 9

A 30-g portion of a high molecular weight PTFE fine powder (1) (standard specific gravity measured in conformity

with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 30-g portion of polyethylene pellets (Harmorex LLDPE available from Japan Polyethylene Corp.) was weighed similarly using a weight balance and put into the same barrier nylon bag. The high molecular weight PTFE and the polyethylene pellets were allowed to mix in the barrier nylon bag. A bag of deoxidant (A-500HS available from As One Corp.) was also put thereinto. The pressure inside the bag was reduced (20 torr) using a vacuum sealer (V-300-10W available from Fujiimpulse Co., Ltd.) and the bag was sealed by heat sealing. An oxygen indicator, which was placed in the bag in advance, was pink. The PTFE in the barrier nylon bag was uniformly thinly dispersed such that the thickness was not greater than the penetration depth of electrons, and then irradiated with 350 kGy, 400 kGy, or 450 kGy of electron beams at 2 MV and 2 mA using a 2 MV electron accelerator (rated: 2 MV, 60 kW) available from Nissin Electric Co., Ltd. The irradiation was moving irradiation and the absorbed dose relative to the moving rate was 5 kGy per pass. The irradiation was started at room temperature and the temperature at completion of the irradiation was 50°C. Without opening, the bag was left to stand at a room temperature of 20°C to 28°C for 12 days (naturally deactivating process). Then, the bag remaining closed was heated at 80°C for 18 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 8.

Comparative Example 9

A low molecular weight PTFE powder was obtained as in Example 9, except that no polyethylene pellets (Harmorex LLDPE available from Japan Polyethylene Corp.) were added to a 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 8.

[Table 8]

| | Irradiation | | | | Radical deactivation | Air release | Radical deactivation | |
|---|---|---|---|---|---|---|---|---|
| | High molecular weight PTFE | PE pellets | Radiation | | Naturally deactivating process | | Acceleratedly deactivating process | |
| | Amount added | Percentage added | Type | Absorbed dose | Duration | Duration | Temperature | Duration |
| | (g) | (mass%) | | (kGy) | (days) | (days) | (°C) | (h) |
| Example 9 | 30 | 100 | EB | 350 | 12 | None | 80 | 18 |
| | 30 | 100 | EB | 400 | 12 | None | 80 | 18 |
| | 30 | 100 | EB | 450 | 12 | None | 80 | 18 |
| Comparative Example 9 | 30 | 0 | EB | 350 | 12 | None | 80 | 18 |
| | 30 | 0 | EB | 400 | 12 | None | 80 | 18 |
| | 30 | 0 | EB | 450 | 12 | None | 80 | 18 |

| | Perfluorocarboxylic acids or salts thereof | | | | | | | | | | | | | | Melt viscosity | Standard value of abs. of difference spectrum at 3556 $cm^{-1}$ |
|---|---|---|---|---|---|---|---|---|---|---|---|---|---|---|---|---|
| | After acceleratedly deactivating process | | | | | | | | | | | | After re-heating in the air | | | |
| | C4 | C5 | C6 | C7 | C8 | C9 | C10 | C11 | C12 | C13 | C14 | C9 to C14 total | C4 to C14 total | C8 | C9 to C14 total | | |
| | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (mass ppb) | (×$10^3$ Pa•s) | (-) |
| Example 9 | < 5 | < 5 | < 5 | < 5 | < 5 | < 5 | < 5 | < 5 | < 5 | < 5 | < 5 | < 5 | < 5 | 14 | 13 | 74 | 2.7 |
| | < 5 | < 5 | < 5 | < 5 | < 5 | < 5 | < 5 | < 5 | < 5 | < 5 | < 5 | < 5 | < 5 | 9 | 10 | 47 | 3.1 |
| | < 5 | < 5 | < 5 | < 5 | < 5 | < 5 | < 5 | < 5 | < 5 | < 5 | < 5 | < 5 | < 5 | 16 | 17 | 26 | 2.9 |
| Comparative Example 9 | < 5 | < 5 | < 5 | < 5 | < 5 | < 5 | < 5 | < 5 | < 5 | < 5 | < 5 | < 5 | < 5 | 32 | 29 | 30 | 1.0 |
| | < 5 | < 5 | < 5 | < 5 | < 5 | 6 | < 5 | < 5 | < 5 | < 5 | < 5 | 6 | 6 | 25 | 25 | 23 | 1.0 |
| | < 5 | < 5 | < 5 | < 5 | < 5 | < 5 | < 5 | < 5 | < 5 | < 5 | < 5 | < 5 | < 5 | 41 | 33 | 17 | 1.0 |

Example 10-1

A 30-g portion of a high molecular weight PTFE fine powder (1) (standard specific gravity measured in conformity

with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 3-g portion of polyethylene pellets (Harmorex LLDPE available from Japan Polyethylene Corp.) was weighed similarly using a weight balance and put into the same barrier nylon bag. The high molecular weight PTFE and the polyethylene pellets were allowed to mix in the barrier nylon bag. A bag of deoxidant (A-500HS available from As One Corp.) was also put thereinto. The pressure inside the bag was reduced (20 torr) using a vacuum sealer (V-300-10W available from Fujiimpulse Co., Ltd.) and the bag was sealed by heat sealing. An oxygen indicator, which was placed in the bag in advance, was pink. The PTFE in the barrier nylon bag was uniformly thinly dispersed such that the thickness was not greater than the penetration depth of electrons, and then irradiated with 400 kGy of electron beams at 2 MV and 2 mA using a 2 MV electron accelerator (rated: 2 MV, 60 kW) available from Nissin Electric Co., Ltd. The irradiation was moving irradiation and the absorbed dose relative to the moving rate was 5 kGy per pass. The irradiation was started at room temperature and the temperature at completion of the irradiation was 50°C. Without opening, the bag was left to stand at a room temperature of 20°C to 28°C for 2 days (naturally deactivating process). Then, the bag remaining closed was heated at 80°C for 18 hours, 72 hours, or 168 hours using a forced convection oven (DRX620DA available from Advantec Co., Ltd.) (acceleratedly deactivating process), whereby a low molecular weight PTFE powder was obtained.

The physical properties of the resulting low molecular weight PTFE powder were determined. The results are shown in Table 9.

Example 10-2

A low molecular weight PTFE powder was obtained as in Example 10-1, except that a 15-g portion of polyethylene pellets (Harmorex LLDPE available from Japan Polyethylene Corp.) weighed similarly using a weight balance was put into the same barrier nylon bag together with a 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 9.

Comparative Example 10

A low molecular weight PTFE powder was obtained as in Example 10-1, except that no polyethylene pellets (Harmorex LLDPE available from Japan Polyethylene Corp.) were added to a 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 9.

[Table 9]

| | Irradiation | | | | Radical deactivation | | Air release | Radical deactivation | | Amount of PFOA | | Melt viscosity |
|---|---|---|---|---|---|---|---|---|---|---|---|---|
| | High molecular weight PTFE | PE pellets | Radiation | | Naturally deactivating process | | | Acceleratedly deactivating process | | After acceleratedly deactivating process | After reheating in the air | |
| | Amount added (g) | Percentage added (mass%) | Type | Absorbed dose (kGy) | Temperature (°C) | Duration (days) | Duration (days) | Temperature (°C) | Duration (h) | (mass ppb) | (mass ppb) | ($\times 10^3$ Pa·s) |
| Example 10-1 | 30 | 10 | EB | 400 | 20 to 28 | 2 | None | 80 | 18 | < 5 | 22 | 70 |
| | 30 | 10 | EB | 400 | 20 to 28 | 2 | None | 80 | 72 | < 5 | 11 | 66 |
| | 30 | 10 | EB | 400 | 20 to 28 | 2 | None | 80 | 168 | < 5 | 10 | 69 |
| Example 10-2 | 30 | 50 | EB | 400 | 20 to 28 | 2 | None | 80 | 18 | < 5 | 5 | 90 |
| | 30 | 50 | EB | 400 | 20 to 28 | 2 | None | 80 | 72 | < 5 | 7 | 87 |
| | 30 | 50 | EB | 400 | 20 to 28 | 2 | None | 80 | 168 | < 5 | < 5 | 85 |
| Comparative Example 10 | 30 | 0 | EB | 400 | 20 to 28 | 2 | None | 80 | 18 | < 5 | 25 | 52 |
| | 30 | 0 | EB | 400 | 20 to 28 | 2 | None | 80 | 72 | < 5 | 29 | 48 |
| | 30 | 0 | EB | 400 | 20 to 28 | 2 | None | 80 | 168 | < 5 | 33 | 52 |

Example 11-1

A 30-g portion of a high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit) was weighed using a weight balance and put into a barrier nylon bag. Next, a 1.5-g, 3-g, 7.5-g, or 15-g portion of polyethylene pellets (Harmorex LLDPE available from Japan Polyethylene Corp.) was weighed similarly using a weight balance and put into the same barrier nylon bag. The high molecular weight PTFE and the polyethylene pellets were allowed to mix in the barrier nylon bag. A bag of deoxidant (A-500HS available from As One Corp.) was also put thereinto. The pressure inside the bag was reduced (20 torr) using a vacuum sealer (V-300-10W available from Fujiimpulse Co., Ltd.) and the bag was sealed by heat sealing. An oxygen indicator, which was placed in the bag in advance, was pink. The PTFE in the barrier nylon bag was uniformly thinly dispersed such that the thickness was not greater than the penetration depth of electrons, and then irradiated with 400 kGy of electron beams at 2 MV and 2 mA using a 2 MV electron accelerator (rated: 2 MV, 60 kW) available from Nissin Electric Co., Ltd. The irradiation was moving irradiation and the absorbed dose relative to the moving rate was 5 kGy per pass. The irradiation was started at room temperature and the temperature at completion of the irradiation was 50°C. Without opening, the bag was left to stand at a room temperature of 20°C to 28°C for 2 days (naturally deactivating process). Then, the bag remaining closed was heated at 80°C for 18 hours using a forced convection oven (DRX620DA available from Advantec Co., Ltd.) (acceleratedly deactivating process), whereby a low molecular weight PTFE powder was obtained.
The physical properties of the resulting low molecular weight PTFE powder were determined. The results are shown in Table 10.

Example 11-2

A low molecular weight PTFE powder was obtained as in Example 11-1, except that the high molecular weight PTFE fine powder (2) (standard specific gravity measured in conformity with ASTM D4895: 2.175, modified polymer 1, concentrations of PFC and PFOA: lower than the detection limit) was used. The physical properties of the resulting low molecular weight PTFE powder were determined. The results are shown in Table 10.

Example 11-3

A low molecular weight PTFE powder was obtained as in Example 11-1, except that the high molecular weight PTFE fine powder (3) (standard specific gravity measured in conformity with ASTM D4895: 2.168, modified polymer 2, concentrations of PFC and PFOA: lower than the detection limit) was used. The physical properties of the resulting low molecular weight PTFE powder were determined. The results are shown in Table 10.

Example 11-4

A low molecular weight PTFE powder was obtained as in Example 11-1, except that a high molecular weight PTFE molding powder (standard specific gravity measured in conformity with ASTM D4895: 2.160, homopolymer, concentrations of PFC and PFOA: lower than the detection limit) was used. The physical properties of the resulting low molecular weight PTFE powder were determined. The results are shown in Table 10.

Comparative Example 11-1

The same operations were performed as in Example 11-1, except that no polyethylene pellets (Harmorex LLDPE available from Japan Polyethylene Corp.) were added to a 30-g portion of the high molecular weight PTFE fine powder (1) (standard specific gravity measured in conformity with ASTM D4895: 2.171, homopolymer, concentrations of C4-C14 perfluorocarboxylic acids and salts thereof (PFC) and PFOA: lower than the detection limit). The physical properties of the resulting low molecular weight PTFE powder were determined. The results are shown in Table 10.

Comparative Example 11-2

The same operations were performed as in Example 11-2, except that no polyethylene pellets (Harmorex LLDPE available from Japan Polyethylene Corp.) were added to a 30-g portion of the high molecular weight PTFE fine powder (2) (standard specific gravity measured in conformity with ASTM D4895: 2.175, modified polymer 1, concentrations of PFC and PFOA: lower than the detection limit). The physical properties of the resulting low molecular weight PTFE powder were determined. The results are shown in Table 10.

Comparative Example 11-3

The same operations were performed as in Example 11-3, except that no polyethylene pellets (Harmorex LLDPE available from Japan Polyethylene Corp.) were added to a 30-g portion of the high molecular weight PTFE fine powder (3) (standard specific gravity measured in conformity with ASTM D4895: 2.168, modified polymer 2, concentrations of PFC and PFOA: lower than the detection limit). The physical properties of the resulting low molecular weight PTFE powder were determined. The results are shown in Table 10.

Comparative Example 11-4

The same operations were performed as in Example 11-4, except that no polyethylene pellets (Harmorex LLDPE available from Japan Polyethylene Corp.) were added to a 30-g portion of the high molecular weight PTFE molding powder (standard specific gravity measured in conformity with ASTM D4895: 2.160, homopolymer, concentrations of PFC and PFOA: lower than the detection limit). The physical properties of the resulting low molecular weight PTFE powder were determined. The results are shown in Table 10.

[Table 10]

| | Irradiation | | | | Radical deactivation | | Air release | Radical deactivation | | Amount of PFOA | | Melt viscosity |
|---|---|---|---|---|---|---|---|---|---|---|---|---|
| | High molecular weight PTFE | PE pellets | Radiation | | Naturally deactivating process | | | Acceleratedly deactivating process | | After acceleratedly deactivating process | After reheating in the air | |
| | Amount added | Percentage added | Type | Absorbed dose | Temperature | Duration | Duration | Temperature | Duration | | | |
| | (g) | (mass%) | | (kGy) | (°C) | (days) | (days) | (°C) | (h) | (mass ppb) | (mass ppb) | ($\times 10^3$ Pa·s) |
| Example 11-1 | 30 | 5 | EB | 400 | 20 to 28 | 2 | None | 80 | 18 | <5 | 18 | 65 |
| | 30 | 10 | EB | 400 | 20 to 28 | 2 | None | 80 | 18 | <5 | 22 | 70 |
| | 30 | 25 | EB | 400 | 20 to 28 | 2 | None | 80 | 18 | <5 | 8 | 85 |
| | 30 | 50 | EB | 400 | 20 to 28 | 2 | None | 80 | 18 | <5 | 5 | 90 |
| Example 11-2 | 30 | 5 | EB | 400 | 20 to 28 | 2 | None | 80 | 18 | <5 | 20 | 44 |
| | 30 | 10 | EB | 400 | 20 to 28 | 2 | None | 80 | 18 | <5 | 17 | 51 |
| | 30 | 25 | EB | 400 | 20 to 28 | 2 | None | 80 | 18 | <5 | 13 | 60 |
| | 30 | 50 | EB | 400 | 20 to 28 | 2 | None | 80 | 18 | <5 | 7 | 73 |
| Example 11-3 | 30 | 5 | EB | 400 | 20 to 28 | 2 | None | 80 | 18 | <5 | 19 | 42 |
| | 30 | 10 | EB | 400 | 20 to 28 | 2 | None | 80 | 18 | <5 | 12 | 48 |
| | 30 | 25 | EB | 400 | 20 to 28 | 2 | None | 80 | 18 | <5 | 8 | 59 |
| | 30 | 50 | EB | 400 | 20 to 28 | 2 | None | 80 | 18 | <5 | 6 | 66 |
| Example 11-4 | 30 | 5 | EB | 400 | 20 to 28 | 2 | None | 80 | 18 | <5 | 18 | 33 |
| | 30 | 10 | EB | 400 | 20 to 28 | 2 | None | 80 | 18 | <5 | 11 | 48 |
| | 30 | 25 | EB | 400 | 20 to 28 | 2 | None | 80 | 18 | <5 | 7 | 55 |
| | 30 | 50 | EB | 400 | 20 to 28 | 2 | None | 80 | 18 | <5 | 8 | 61 |
| Comparative Example 11-1 | 30 | 0 | EB | 400 | 20 to 28 | 2 | None | 80 | 18 | <5 | 25 | 52 |
| Comparative Example 11-2 | 30 | 0 | EB | 400 | 20 to 28 | 2 | None | 80 | 18 | <5 | 23 | 36 |
| Comparative Example 11-3 | 30 | 0 | EB | 400 | 20 to 28 | 2 | None | 80 | 18 | <5 | 21 | 37 |
| Comparative Example 11-4 | 30 | 0 | EB | 400 | 20 to 28 | 2 | None | 80 | 18 | <5 | 20 | 20 |

## Claims

1. A method for producing low molecular weight polytetrafluoroethylene having a melt viscosity at 380°C of $1.0 \times 10^2$ to $7.0 \times 10^5$ Pa·s, the method comprising:

   (1) irradiating high molecular weight polytetrafluoroethylene with radiation in the presence of a substance capable of generating a free hydrogen atom and decomposing the high molecular weight polytetrafluoroethylene into a low molecular weight component; and
   (2) deactivating at least part of main-chain radicals and end radicals generated by the irradiation and providing the low molecular weight polytetrafluoroethylene.

2. A method for producing low molecular weight polytetrafluoroethylene having a melt viscosity at 380°C of $1.0 \times 10^2$ to $7.0 \times 10^5$ Pa·s, the method comprising:

   (1) irradiating high molecular weight polytetrafluoroethylene with radiation in the presence of a substance capable of generating a free hydrogen atom and decomposing the high molecular weight polytetrafluoroethylene into a low molecular weight component; and
   (2a) warming or heating the low molecular weight component obtained in the step (1) at a temperature not lower than a room temperature transition temperature (19°C corresponding to a $\beta_1$ dispersion temperature) of polytetrafluoroethylene and providing the low molecular weight polytetrafluoroethylene.

3. The production method according to claim 2, wherein the warming or heating in the step (2a) is performed at a temperature of 70°C or higher.

4. A method for producing low molecular weight polytetrafluoroethylene having a melt viscosity at 380°C of $1.0 \times 10^2$ to $7.0 \times 10^5$ Pa·s, the method comprising:

   (1) irradiating high molecular weight polytetrafluoroethylene with radiation in the presence of a substance capable of generating a free hydrogen atom and decomposing the high molecular weight polytetrafluoroethylene into a low molecular weight component; and
   (2b) maintaining the low molecular weight component obtained in the step (1) for five minutes or longer and providing the low molecular weight polytetrafluoroethylene.

5. The production method according to claim 4, wherein the maintaining in the step (2b) is performed for 10 hours or longer.

6. A method for producing low molecular weight polytetrafluoroethylene having a melt viscosity at 380°C of $1.0 \times 10^2$ to $7.0 \times 10^5$ Pa·s, the method comprising:

   (1) irradiating high molecular weight polytetrafluoroethylene with radiation in the presence of a substance capable of generating a free hydrogen atom and decomposing the high molecular weight polytetrafluoroethylene into a low molecular weight component; and
   (2) deactivating at least part of main-chain radicals and end radicals generated by the irradiation and providing the low molecular weight polytetrafluoroethylene,

   the steps (1) and (2) being performed simultaneously.

7. The production method according to any one of claims 1 to 6, wherein the substance capable of generating a free hydrogen atom includes at least one selected from the group consisting of a hydrocarbon organic compound, an amine, a silane organic compound, water, and hydrogen.

8. The production method according to any one of claims 1 to 7, wherein the substance capable of generating a free hydrogen atom includes at least one selected from the group consisting of an acyclic hydrocarbon compound, a cyclic hydrocarbon compound, a synthetic polymer, a biodegradable polymer, a carbohydrate, ammonia, and water.

9. The production method according to any one of claims 1 to 8, wherein the substance capable of generating a free hydrogen atom is present in an amount of 0.0001 to 1000% by

mass relative to the high molecular weight polytetrafluoroethylene.

**10.** The production method according to any one of claims 1 to 9, wherein the radiation in the step (1) has a dose of 10 to 1000 kGy.

**11.** The production method according to any one of claims 1 to 10, wherein the radiation in the step (1) has a dose of 100 to 750 kGy.

**12.** The production method according to any one of claims 1 to 11, wherein the step (1) is performed in a substantially oxygen-free state.

**13.** The production method according to any one of claims 1 to 12, wherein the step (2) is performed in a substantially oxygen-free state.

**14.** The production method according to any one of claims 1 to 13, wherein the substantially oxygen-free state is maintained during a period from start of the step (1) to completion of the step (2).

**15.** The production method according to any one of claims 1 to 14, wherein the high molecular weight polytetrafluoroethylene has a standard specific gravity of 2.130 to 2.230.

**16.** The production method according to any one of claims 1 to 15, wherein the high molecular weight polytetrafluoroethylene and the low molecular weight polytetrafluoroethylene are each in the form of powder.

**17.** The production method according to any one of claims 1 to 16, further comprising, before the step (1),

(3) heating the high molecular weight polytetrafluoroethylene up to a temperature that is not lower than a primary melting point thereof and providing a molded article,
the molded article having a specific gravity of 1.0 g/cm$^3$ or higher.

**18.** A method for producing low molecular weight polytetrafluoroethylene having a melt viscosity at 380°C of $1.0 \times 10^2$ to $7.0 \times 10^5$ Pa·s, the method comprising:
(X) irradiating high molecular weight polytetrafluoroethylene with radiation in the presence of a substance capable of generating a free hydrogen atom under conditions including a sample temperature during the irradiation of not lower than a room temperature transition temperature (19°C corresponding to a $\beta_1$ dispersion temperature) of polytetrafluoroethylene and not higher than 320°C and a dose rate of 0.1 kGy/s or higher and providing the low molecular weight polytetrafluoroethylene.

**19.** A method for producing low molecular weight polytetrafluoroethylene having a melt viscosity at 380°C of $1.0 \times 10^2$ to $7.0 \times 10^5$ Pa·s, the method comprising:

(Y1) irradiating polytetrafluoroethylene having a melt viscosity at 380°C of $1.0 \times 10^2$ to $7.0 \times 10^5$ Pa·s with radiation in the presence of a substance capable of generating a free hydrogen atom and decomposing the polytetrafluoroethylene into a low molecular weight component; and
(Y2) deactivating at least part of main-chain radicals and end radicals generated by the irradiation and providing the low molecular weight polytetrafluoroethylene.

**20.** A composition comprising:

low molecular weight polytetrafluoroethylene having a melt viscosity at 380°C of $1.0 \times 10^2$ to $7.0 \times 10^5$ Pa·s; and
a substance capable of generating a free hydrogen atom,
wherein an amount of perfluorooctanoic acid and salts thereof is less than 25 ppb by mass.

**21.** The composition according to claim 20,

wherein an amount of the perfluorooctanoic acid and salts thereof is less than 100 ppb by mass, the amount being determined in accordance with the following heating and determining conditions A,

(heating and determining conditions A)
a 50-cc stainless steel cylindrical airtight container is charged with 2 to 20 g of a sample in an air, and then capped and heated at 150°C for 18 hours;
the amount of the perfluorooctanoic acid and salts thereof is determined using a liquid chromatography-mass spectrometer (LC-MS ACQUITY UPLC/TQD, available from Waters) as follows:

1 g of the sample heated is mixed with 5 mL of acetonitrile and this mixture is sonicated for 60 minutes, so that perfluorooctanoic acid is extracted;
a liquid phase obtained is analyzed by multiple reaction monitoring (MRM);
acetonitrile (A) and an aqueous ammonium acetate solution (20 mmol/L) (B) are delivered as mobile phases at a concentration gradient (A/B = 40/60 for 2 min and 80/20 for 1 min);
a separation column (ACQUITY UPLC BEH C18 1.7 μm) is used at a column temperature of 40°C and an injection volume of 5 μL;
electrospray ionization (ESI) in a negative mode is used for ionization;
a cone voltage is set to 25 V;
a ratio of a molecular weight of precursor ions to a molecular weight of product ions is measured to be 413/369; and
the amount of the perfluorooctanoic acid and salts thereof is calculated by an external standard method.

**22.** The composition according to claim 21,
wherein the amount of the perfluorooctanoic acid and salts thereof is less than 50 ppb by mass, the amount being determined in accordance with the heating and determining conditions A.

**23.** The composition according to claim 21 or 22,
wherein the amount of the perfluorooctanoic acid and salts thereof is less than 25 ppb by mass, the amount being determined in accordance with the heating and determining conditions A.

**24.** The composition according to any one of claims 20 to 23,
wherein a total amount of C9-C14 perfluorocarboxylic acids and salts thereof is less than 25 ppb by mass.

**25.** The composition according to any one of claims 20 to 24,
wherein a total amount of C4-C14 perfluorocarboxylic acids and salts thereof is less than 25 ppb by mass.

**26.** A low molecular weight polytetrafluoroethylene having a melt viscosity at 380°C of $1.0 \times 10^2$ to $7.0 \times 10^5$ Pa·s,

exhibiting peaks that are obtainable by electron spin resonance measurement in a vacuum and that satisfy the following relational expression (I), and
having an amount of perfluorooctanoic acid and salts thereof of less than 25 ppb by mass and an amount of the perfluorooctanoic acid and salts thereof determined in accordance with the following heating and determining conditions A of less than 100 ppb by mass,
the relational expression (I) being:

3.0 > Peak M/Peak A > 0.3,
wherein Peak M represents a peak height of a center of triplet that corresponds to end radicals in the low molecular weight polytetrafluoroethylene; and Peak A represents a peak height of double quintet that corresponds to main-chain radicals in the low molecular weight polytetrafluoroethylene,
(heating and determining conditions A)

a 50-cc stainless steel cylindrical airtight container is charged with 2 to 20 g of a sample in an air, and then capped and heated at 150°C for 18 hours;
the amount of the perfluorooctanoic acid and salts thereof is determined using a liquid chromatography-mass spectrometer (LC-MS ACQUITY UPLC/TQD, available from Waters) as follows:

1 g of the sample heated is mixed with 5 mL of acetonitrile and this mixture is sonicated for 60 minutes, so that perfluorooctanoic acid is extracted;
a liquid phase obtained is analyzed by multiple reaction monitoring (MRM);
acetonitrile (A) and an aqueous ammonium acetate solution (20 mmol/L) (B) are delivered as mobile phases at a concentration gradient (A/B = 40/60 for 2 min and 80/20 for 1 min);

a separation column (ACQUITY UPLC BEH C18 1.7 μm) is used at a column temperature of 40°C and an injection volume of 5 μL;
electrospray ionization (ESI) in a negative mode is used for ionization;
a cone voltage is set to 25 V;
a ratio of a molecular weight of precursor ions to a molecular weight of product ions is measured to be 413/369; and
the amount of the perfluorooctanoic acid and salts thereof is calculated by an external standard method.

**27.** A low molecular weight polytetrafluoroethylene having a melt viscosity at 380°C of $1.0 \times 10^2$ to $7.0 \times 10^5$ Pa·s,

exhibiting peaks that are obtainable by electron spin resonance measurement in an air and that satisfy the following relational expressions (1) and (2), and
having an amount of perfluorooctanoic acid and salts thereof of less than 25 ppb by mass and an amount of the perfluorooctanoic acid and salts thereof determined in accordance with the following heating and determining conditions A of less than 100 ppb by mass,
the relational expression (1) being: Peak M2/Peak A1 ≥ 1.0,
wherein Peak M2 represents an absolute value of a negative peak intensity that corresponds to a peroxy radical scavenged on a molecular-chain end of the low molecular weight polytetrafluoroethylene; and Peak A1 represents an absolute value of a negative peak intensity that corresponds to an alkyl peroxy radical scavenged on a main chain of the low molecular weight polytetrafluoroethylene,
the relational expression (2) being: Peak M2/Peak M3 < 1.0,
wherein Peak M2 represents the absolute value of the negative peak intensity that corresponds to a peroxy radical scavenged on a molecular-chain end of the low molecular weight polytetrafluoroethylene; and Peak M3 represents an absolute value of a positive peak intensity that corresponds to a peroxy radical scavenged on a molecular-chain end of the low molecular weight polytetrafluoroethylene,
(heating and determining conditions A)
a 50-cc stainless steel cylindrical airtight container is charged with 2 to 20 g of a sample in an air, and then capped and heated at 150°C for 18 hours;
the amount of the perfluorooctanoic acid and salts thereof is determined using a liquid chromatography-mass spectrometer (LC-MS ACQUITY UPLC/TQD, available from Waters) as follows:

1 g of the sample heated is mixed with 5 mL of acetonitrile and this mixture is sonicated for 60 minutes, so that perfluorooctanoic acid is extracted;
a liquid phase obtained is analyzed by multiple reaction monitoring (MRM);
acetonitrile (A) and an aqueous ammonium acetate solution (20 mmol/L) (B) are delivered as mobile phases at a concentration gradient (A/B = 40/60 for 2 min and 80/20 for 1 min);
a separation column (ACQUITY UPLC BEH C18 1.7 μm) is used at a column temperature of 40°C and an injection volume of 5 μL;
electrospray ionization (ESI) in a negative mode is used for ionization;
a cone voltage is set to 25 V;
a ratio of a molecular weight of precursor ions to a molecular weight of product ions is measured to be 413/369; and
the amount of the perfluorooctanoic acid and salts thereof is calculated by an external standard method.

**28.** A low molecular weight polytetrafluoroethylene

having a melt viscosity at 380°C of $1.0 \times 10^2$ to $7.0 \times 10^5$ Pa·s,
having a standard value determined by the following formula (3) of 1.1 to 10.0, and
having an amount of perfluorooctanoic acid and salts thereof of less than 25 ppb by mass,
the formula (3) being:
Standard value = (absorbance of functional group derived from hydrogen-attached form of the low molecular weight PTFE)/(absorbance of functional group derived from hydrogen-attached form of low molecular weight PTFE obtained by irradiation in the absence of substance capable of generating free hydrogen atom).

**29.** The low molecular weight polytetrafluoroethylene according to any one of claims 26 to 28,
wherein a total amount of C9-C14 perfluorocarboxylic acids and salts thereof is less than 25 ppb by mass.

**30.** The low molecular weight polytetrafluoroethylene according to any one of claims 26 to 29,

wherein a total amount of C4-C14 perfluorocarboxylic acids and salts thereof is less than 25 ppb by mass.

FIG.1

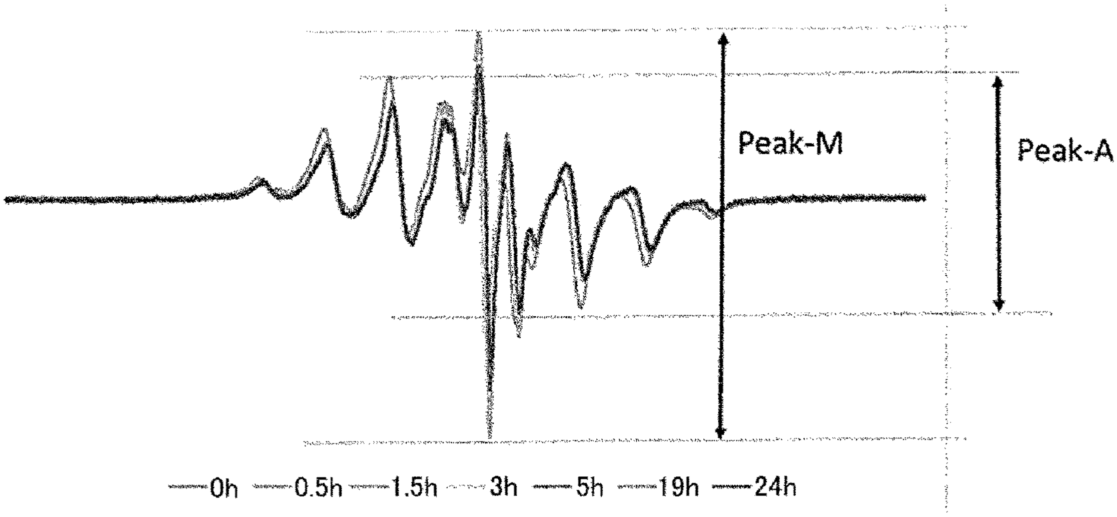
Peak-M
Peak-A
0h 0.5h 1.5h 3h 5h 19h 24h

FIG.2

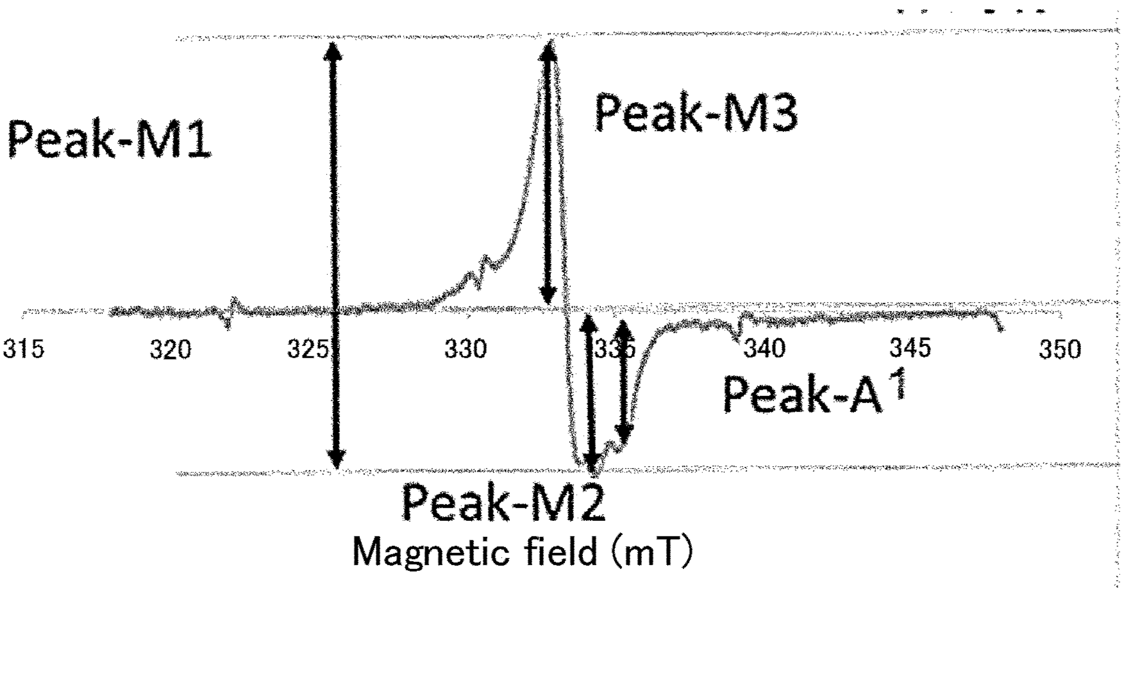
Peak-M1
Peak-M3
315 320 325 330 335 340 345 350
Peak-A1
Peak-M2
Magnetic field (mT)

**INTERNATIONAL SEARCH REPORT**

International application No. PCT/JP2021/001317

A. CLASSIFICATION OF SUBJECT MATTER
C08F 8/50(2006.01)i; C08F 114/26(2006.01)i
FI: C08F8/50; C08F114/26
According to International Patent Classification (IPC) or to both national classification and IPC

B. FIELDS SEARCHED
Minimum documentation searched (classification system followed by classification symbols)
C08F6/00-246/00; C08J3/28; C08J7/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2018/026017 A1 (DAIKIN INDUSTRIES, LTD.) 08 February 2018 (2018-02-08) claims 1-9, paragraphs [0009], [0038], [0049]-[0051], examples | 1-4, 6-30<br>5 |
| X<br>A | JP 2006-063140 A (ASAHI GLASS CO., LTD.) 09 March 2006 (2006-03-09) claim 1, paragraphs [0013]-[0014], examples | 1-2, 4-16, 18-30<br>3, 17 |
| X<br>A | JP 2008-223036 A (LAUREL PRODUCTS, LLC) 25 September 2008 (2008-09-25) claims 1, 7-8, paragraph [0021], example 6, table 5 | 1-2, 4, 6-16, 18-30<br>3, 5, 17 |
| X<br>A | JP 2001-513579 A (SHAMROCK TECHNOLOGIES, INC.) 04 September 2001 (2001-09-04) claims 18, 20, paragraphs [0009], [0014], [0017], examples | 1-4, 6-11, 15-16, 18-30<br>5, 12-14, 17 |
| A | JP 2002-327068 A (JAPAN ATOMIC ENERGY RESEARCH INSTITUTE) 15 November 2002 (2002-11-15) claim 1, examples | 1-30 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 March 2021 (22.03.2021) | 30 March 2021 (30.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/001317

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/026012 A1 (DAIKIN INDUSTRIES, LTD.) 08 February 2018 (2018-02-08) claims 1-11, examples | 1-30 |
| P, A | WO 2020/013336 A1 (OSAKA UNIVERSITY) 16 January 2020 (2020-01-16) claims 1-45, examples | 1-30 |

Form PCT/ISA/210 (continuation of second sheet) (January 2015)

**INTERNATIONAL SEARCH REPORT**
Information on patent family members

International application No.
PCT/JP2021/001317

| Patent Documents referred in the Report | Publication Date | Patent Family | Publication Date |
|---|---|---|---|
| WO 2018/026017 A1 | 08 Feb. 2018 | US 2019/0023818 A1 claims 1-9, paragraphs [0012], [0047], [0060]-[0062], examples<br>US 2020/0123283 A1<br>EP 3388472 A1<br>CN 108473688 A. | |
| JP 2006-063140 A | 09 Mar. 2006 | (Family: none) | |
| JP 2008-223036 A | 25 Sep. 2008 | US 2003/0199639 A1 claims 1, 7, 9, paragraph [0022], example 6, table 5<br>WO 2003/091318 A1<br>EP 2256152 A1<br>CN 1646610 A | |
| JP 2001-513579 A | 04 Sep. 2001 | US 5891573 A claims 18, 20, column 2, lines 41-55, column 3, lines 28-46, column 3, line 56 to column 4, line 4, examples<br>WO 1999/007549 A1<br>EP 1001880 A1 | |
| JP 2002-327068 A | 15 Nov. 2002 | (Family: none) | |
| WO 2018/026012 A1 | 08 Feb. 2018 | US 2019/0023856 A1 claims 1-11, examples<br>EP 3385309 A1<br>EP 3643745 A1<br>CN 108473689 A | |
| WO 0220/013336 A1 | 16 Jan. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10147617 A
- WO 2018026012 A
- WO 2018026017 A
- JP H0420507 A


### Non-patent literature cited in the description


- **K. TAKASHIKA et al.** *Radiat. Phys. Chem.,* 1999, vol. 55, 399-408
- **T. SEGUCHI et al.** *Radiat. Phys. Chem.,* 2013, vol. 85, 124-129
- *Radiat. Phys. Chem.,* 1997, vol. 50, 601-606
- *Radiat. Phys. Chem.,* 1997, vol. 50, 611-615